(19) Europäisches Patentamt

European Patent Office

Office européen des brevets

(11) EP 1 253 207 A1

(12) EUROPEAN PATENT APPLICATION
published in accordance with Art. 158(3) EPC

(43) Date of publication:
30.10.2002 Bulletin 2002/44

(51) Int Cl.⁷: C21B 11/00, C22B 1/16, C22B 5/10

(21) Application number: 00956840.3

(22) Date of filing: 31.08.2000

(86) International application number:
PCT/JP00/05916

(87) International publication number:
WO 01/018256 (15.03.2001 Gazette 2001/11)

(84) Designated Contracting States:
AT BE CH CY DE DK ES FI FR GB GR IE IT LI LU
MC NL PT SE

(30) Priority: 06.09.1999 JP 25216299
23.02.2000 JP 2000046617
29.02.2000 JP 2000054112
26.04.2000 JP 2000125192
26.04.2000 JP 2000126701
26.04.2000 JP 2000126713
26.04.2000 JP 2000126714
26.04.2000 JP 2000166807
26.04.2000 JP 2000166808
27.04.2000 JP 2000128520
14.07.2000 JP 2000214241

(71) Applicant: NKK CORPORATION
Tokyo 100-0005 (JP)

(72) Inventors:
• IWASAKI, Katsuhiro, KK Corporation
  Chiyoda-ku, Tokyo 100-0005 (JP)
• ISOZAKI, Shinichi, NKK Corporation
  Chiyoda-ku, Tokyo 100-0005 (JP)
• SEKIGUCHI, Takeshi, NKK Corporation
  Chiyoda-ku, Tokyo 100-0005 (JP)
• TAGUCHI, Norihiko, NKK Corporation
  Chiyoda-ku, Tokyo 100-0005 (JP)

(74) Representative: HOFFMANN - EITLE
Patent- und Rechtsanwälte
Arabellastrasse 4
81925 München (DE)

(54) METHOD AND FACILITIES FOR METAL SMELTING

(57) The invention provides a method for manufacturing molten metal at low cost and high productivity by melt-reducing a metal oxide and/or a metal hydroxide such as iron ore. To do this, at least the metal oxide and/or the metal hydroxide such as iron ore is preliminarily mixed, preliminarily mixed and granulated, or preliminarily mixed and molded with a carbonaceous material to prepare a mixture of raw materials. The mixture of raw materials is preliminarily reduced in a prereduction furnace of rotary hearth type, rotary kiln type, or the like to average metallization degree of the metal oxide and/or the metal hydroxide from 5 to 55%, which is then charged to a melting furnace for metal smelting, where the mixture of the raw materials is melted and finally reduced using the carbonaceous material as the reducing agent and using the combustion heat of the carbonaceous material and of carbon monoxide generated in the furnace as the major heat source. Through the process, molten metal such as molten iron is manufactured assuring favorable energy balance and high productivity.

FIG. 1

PELLET SURFACE   AVERAGE   PELLET CENTER

AVERAGE METALLIZATION DEGREE OF SEMI-REDUCED IRON (%)

RETENSION TIME INDEX IN FURNACE

## Description

## TECHNICAL FIELD

The present invention relates to a method for metal smelting, in which a metal oxide and/or a metal hydroxide such as iron ore is preliminarily reduced to a state that a part thereof is metallized, and the metal oxide and/or the metal hydroxide is melted and finally reduced in a melting furnace such as a metal-bath type melt-reduction furnace for metal smelting to obtain molten metal, and relates to an apparatus thereof.

## BACKGROUND ART

There is a known technology for manufacturing semi-reduced ion using a heating furnace of rotary hearth type by reduction-smelting a metal oxide and a metal hydroxide such as iron ore (hereinafter the description of the technology of related art uses the example of "iron ore"). Relating to the technology, there are disclosures of: for example, "COMET A New Coal Based Process for the Production of DRI, Ironmaking MPT International Feb., (1997)" dealing with the method of reduction-smelting in a mixed state of powder and particle carbonaceous material with iron ore; and, for example, "The FASTMET DIRECT REDUCTION PROCESS, Ironmaking Conference Proceeding, (1993)" and "Charging molten ion into the EAF, New Steel Nov., p72, (1997)" dealing with the method for reduction-smelting iron ore in pellet shape containing a carbonaceous material.

These disclosed processes reduce iron ore using solid carbon and carbon compounds as the reducing agent, ($Fe_2O_3$ + 3C = 2Fe + 3CO). The energy necessary for the reduction (endothermic reaction) is supplied by combusting carbon monoxide (CO) generated during the reduction stage or by combusting a separately-supplied fuel (natural gas, oil fuel, coal, plastics, and the like) with air or the like. The reduction furnace emits a gas at temperatures of from 1,200 to 1,500°C in almost completely combusted state. Compared with other direct-reduction iron making processes that use hydrocarbon compounds such as natural gas and hydrogen-laid gas as the reducing agent, the above-described processes have a significant advantage of using coal that is inexpensive and has superior transferability. Owing to the advantage, there have been promoted the construction and construction plan of the furnaces for these processes.

On the other hand, the above-described processes have drawbacks that a part (around 20 to 30%) of sulfur (S) included in coal and the like remains in the reduced iron and that the energy efficiency is low. For the residual sulfur, removal thereof in the steel making stage (in molten steel state) is significantly uneconomical, and the'.desulfurization after bringing the reduced iron to molten iron state is a simple and common method. Therefore, the reduced iron manufacturing process and the molten iron manufacturing process are necessary to be combined together.

There is a known melt-reduction process of iron ore using that kind of technology. That is, molten iron is manufactured by charging the iron ore with a carbonaceous material to a prereduction furnace of rotary hearth type (rotary hearth type furnace, hereinafter referred to as "RHF") to carry out pre-reduction smelting converting the iron ore to reduced iron (for example, a reduced iron having 90% or higher metallization degree) using the carbonaceous material, which reduced iron is then subjected to melt-reduction smelting (or finish smelting = melting and finally reducing) using an electric iron making furnace (submersed arc furnace, hereinafter referred to as "SAF"), thus manufacturing the molten iron, (hereinafter the process is called the "Reference art 1").

On the other hand, there are known melt-reduction technologies for iron ore using a metal-bath type melt-reduction furnace. For example, DIOS method, HISmelt method, and Romelt method are known as these common names, ("Recent Movements of New Iron Sources", September 29, 1996, Process Forum of the Iron and Steel Institute of Japan). For that kind of technologies, Japanese Patent Laid-Open No. 11-217614 discloses the technology for manufacturing molten iron by charging iron ore with a carbonaceous material to RHF to conduct pre-reduction smelting to semi-reduced iron, and the semi-reduced iron is then subjected to melt-reduction smelting (or finish smelting = melting and finally reducing) using a metal-bath type melt-reduction furnace (hereinafter referred to as "SRF"), thus manufacturing molten iron, (hereinafter the process is called the "Reference art 2").

Both of these Reference art 1 and Reference art 2 intend to give the final smelting after applying the reduction smelting to the iron ore until converting the iron ore to semi-reduced iron having a high metallization degree as far as possible. For example, the Reference art 1 discloses that the average metallization degree of the semi-reduced iron manufactured by the pre-reduction smelting in RHF is 90% or more. The Reference art 2 discloses that the average metallization degree of the semi-reduced iron manufactured by the pre-reduction smelting in RHF is 60% or more.

To manufacture semi-reduced iron having high metallization degree in the pre-reduction smelting as in the Reference arts, however, a significant problem described below occurs.

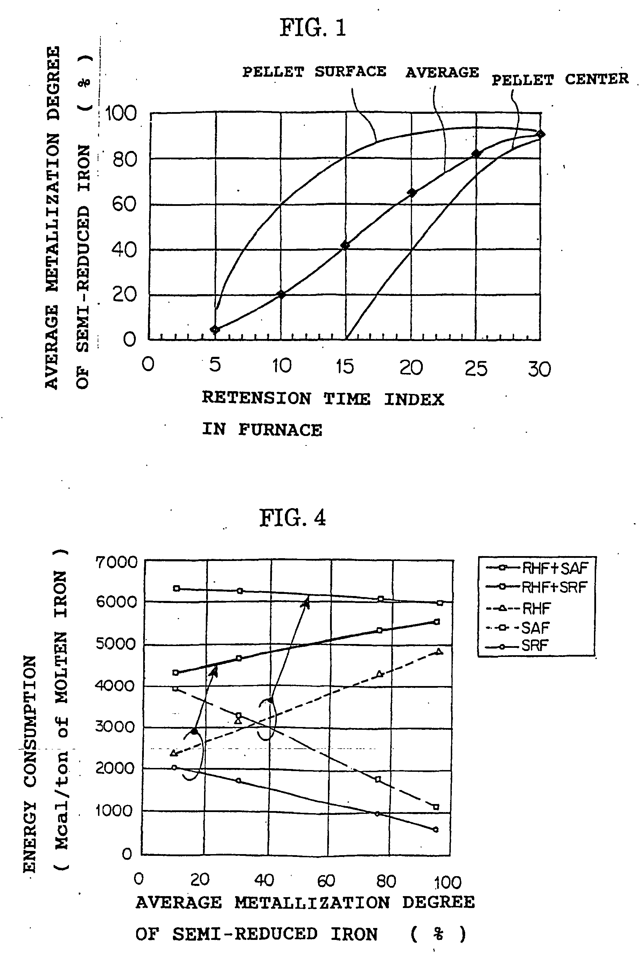

FIG. 1 shows the relation between the retention time of a mixture of raw materials in the furnace and the average metallization degree of iron ore (semi-reduced iron) for the case that the mixture of raw materials (iron ore, carbonaceous material, auxiliary raw material, and the like) is granulated to pellets having about 10 mm of pellet size, which mixture is then preliminarily reduced in RHF. As seen in the figure, when the preliminary reduction proceeds to bring the average metallization degree of the iron ore to around 90%, the reduction reaction shows not much progress. Thus, to increase the average metallization degree of the manufactured semi-reduced iron to a high level of 90% or more, the reduction is required to proceed to about 90% of average metallization degree at center of each pellet.

Regarding the reduction reaction rate in a pellet, the amount of carbonaceous material does not become a rate-controlling variable because sufficient amount of carbonaceous material exists as the reducing agent in the pellet. Since the reduction reaction within a pellet proceeds if necessary heat is supplied, the heat transfer rate becomes the rate-controlling variable. The heat source for the reduction reaction is supplied by combusting a flammable gas (volatile components generated from the carbonaceous material, CO gas generated from reduction of ore by the carbonaceous material, and the like) and by combusting a fuel gas separately charged to RHF, in the RHF.

During the reduction and firing stage of pellets in RHF, the intrafurnace atmosphere becomes high temperature around 1,400°C resulted from the above-described combustion. With the direct radiation heat transfer from the high temperature atmosphere to the surface of raw materials (pellets) layer stacked on the hearth, the pellets in the uppermost layer are firstly heated, then the pellets in lower layers are successively heated mainly by the heat conduction from the pellets-in the uppermost layer. Naturally, therefore, the pellets in the uppermost layer are reduced in the earliest period, and the pellets in the lowermost layer are reduced last. As a result, the pellets in the lowermost layer are discharged at a low metallization degree unless sufficient retention time of the pellets in the furnace is assured. In addition, if there is dispersion in the thickness direction of the raw material layer, the pellets in lower layers further decrease in their metallization degree at a thicker portion.

As for the adequate pellet size, the following is generally understood. The heat transmission within a raw material layer gives a low heat transfer coefficient because the heat conduction between pellets, which are in nearly point-contact state, governs the heat transmission. Accordingly, from the viewpoint of securing heat transfer in the thickness direction of the raw material layer, the number of pellet layers stacked in the raw material layer is preferably to be small as far as possible. With the same thickness of raw material layer, large pellet size results in small number of layers. Therefore, the pellet size is preferably to be large from the standpoint of decreasing in the number of pellet layers.

On the other hand, in view of the heat transmission within individual pellets, the heat conducts from outer zone to inner zone of a pellet so that the reduction at the center part of the pellet delays, which raises a problem that a particularly large pellet results in poor metallization degree at center thereof. To this point, smaller pellet size is preferable because the heat transfer time to the center of pellet is shortened. Consequently, considering the above-described phenomena, the adequate size of pellet has to become within an extremely limited range.

The above-described discussion derives the following. That is, to assure a high metallization degree in RHF, as in the Reference arts, the operating conditions including the pellet size, the number of pellet layers, the thickness of raw material layer, and the pre-reduction time have limitations as given below.

(1) To uniformize the metallization degree of individual pellets, the quality and the mixing ratio of the pellet raw materials shall be uniformized.
(2) With the same reason, the pellet size shall be uniformized, and a sufficient amount of binder shall be applied to prevent the pellets from breaking.
(3) The pellets shall be charged onto the hearth of RHF uniformly and at a minimum layer thickness.
(4) The retention time in RHF shall be sufficient.

By these limitations, the pellet manufacturing cost and the investment cost increase, and problems of decreased productivity and poor thermal efficiency also occur.

Furthermore, for attaining high metallization degree of pellets, the pellets directly above the hearth of RHF become high temperature, and adjacent pellets tend to sinter (secondary sintering) to each other. Therefore, on discharging the pellets from hearth after completed the preliminary reduction, the pellets are scraped out from the hearth using a discharge unit of water-cooled screw type, or the like. That type of discharge method of raw materials, however, induces significant wear of refractory on hearth and of screw, which raises a problem on maintenance in terms of cost and time.

Also in the case that a mixture of raw material such as ore and carbonaceous material is preliminarily reduced in RHF in a state of power and particles without pelletizing them, similar limitations as above-given (1) through (4) arise. When the mixture of raw materials is subjected to the preliminary reduction smelting in RHF in a state of powder and particles without pelletizing them, the heat transmission from the intrafurnace atmosphere to the raw material layer becomes significantly low compared with the case of pelletized mixture of raw materials, which also raises a problem of further degraded productivity.

## DISCLOSURE OF THE INVENTION

Focusing on the manufacturing molten metal through the iron ore melt-reduction at low cost and high productivity, the inventors of the present invention reviewed the above-described conventional molten iron manufacturing process, or the molten iron manufacturing process to obtain molten iron by manufacturing semi-reduced iron through the preliminary reduction smelting of iron ore, which semi-reduced iron is then subjected to melt-reduction smelting (or finish smelting = final reduction and melting), and derived the following findings.

Regarding the process that manufactures molten iron by manufacturing semi-reduced iron through the preliminary reduction smelting of iron ore using RHF, then by applying melt-reduction smelting to the semi-reduced iron using SAF, an investigation was given to the relation between the metallization degree of semi-reduced iron obtained by the preliminary reduction smelting and the production efficiency of total process (particularly the unit requirement of energy consumption and the energy balance). The investigation derived a conclusion that, similar to the conventional expectation, higher metallization degree of semi-reduced iron obtained by RHF is more advantageous.

On the other hand, for the process that manufactures molten iron by manufacturing semi-reduced iron through the preliminary reduction smelting of iron ore using RHF, then by applying melt-reduction smelting to the semi-reduced iron using SRF, an investigation was given to the relation between the metallization degree of semi-reduced iron obtained by the preliminary reduction smelting and the production efficiency of total process. Inverse to the conventional recognition, the investigation revealed the following. When the metallization degree of the semi-reduced iron obtained from RHF is brought to a high level as in the case of Reference arts, the production efficiency of total process, or the unit requirement of energy consumption and the energy balance, is degraded. To the contrary, by suppressing the metallization degree of semi-reduced iron obtained from RHF to a specified low level, the production efficiency of total process is effectively improved while attaining high productivity.' In the manufacturing process that conducts melt-reduction smelting in SRF, it was found that, since the lower metallization degree of semi-reduced iron is extremely advantageous in the unit requirement of energy consumption and the energy balance, the problems in Reference arts occurred on preliminary reduction smelting of a mixture of raw materials (pelletized or not-pelletized mixture of raw materials) in RHF are completely solved, the high productivity is-assured, and the manufacturing cost and the investment cost in the preliminary reduction smelting are decreased. The present invention was completed on the basis of the above-described findings.

Therefore, a main object of the present invention is to provide a method for metal smelting that can manufacture molten metal at low cost and high productivity by melt-reducing a metal oxide and/or a metal hydroxide such as iron ore.

According to the present invention, the object is attained by the metal smelting method described below.

[1] A method for metal smelting containing the steps of:

(A1) preliminarily reducing a mixture of one or more of mixture of raw materials selected from the group consisting of following-given (a) through (c) in a prereduction furnace to attain average metallization degree of from 5 to 55% for metal oxide and/or metal hydroxide;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B1) melting and finally reducing the mixture of raw materials, which is preliminarily reduced in the step (A1), by charging thereof to a melting furnace using the carbonaceous material as a reducing agent, and using combustion heat of the carbonaceous material and combustion heat of carbon monoxide generated in the melting furnace as main heat source.

[2] A method for metal smelting containing the steps of:

(A2) preliminarily reducing a mixture of one or more of mixture of raw materials selected from the group consisting of following-given (a) through (c) in a prereduction furnace to attain average metallization degree of more than 5% for metal oxide and/or metal hydroxide;

(a) a mixture of raw materials prepared by mixing at least a carbonaceous material and a metal oxide and/

or a metal hydroxide,

(b) a mixture of raw materials prepared by mixing and granulating at least a carbonaceous material and a metal oxide and/or a metal hydroxide, and

(c) a mixture of raw materials prepared by mixing and molding at least a carbonaceous material and a metal oxide and/or a metal hydroxide; and

(B2) melting and finally reducing the mixture of raw materials, which is preliminarily reduced in the step (A2), and a metal oxide and/or a metal hydroxide of (i) and/or (ii) given. below by charging theretogether to a melting furnace for metal smelting to a degree that the average metallization degree of the total metal oxide and/or the metal hydroxide is in a range of from 5 to 55%, using the carbonaceous material as a reducing agent in the melting furnace, and using combustion heat of the carbonaceous material and combustion heat of carbon monoxide generated in the melting furnace as main heat source;

(i) a metal oxide and/or a metal hydroxide, which have lower percentage of pre-reduction than that of the mixture of raw materials preliminarily reduced in the step (A2), and

(ii) a metal oxide and/or a metal hydroxide, which are not preliminarily reduced.

[3] The method for metal smelting of above-described [1] or [2], wherein the mixture of raw materials at a high temperature discharged from the prereduction furnace after preliminarily reduced is introduced to a non-open type vessel or a pneumatic conveying unit that is operated by a non-oxidizing gas as a pneumatic conveying gas, and is transferred to the melting furnace using the non-open type vessel or the pneumatic conveying unit while keeping the mixture to 600°C or higher temperature, then is charged to the melting furnace.

[4] The method for metal smelting of above-described [2] or [3], wherein the mixture of raw materials, which is preliminarily reduced in the step (A2), and the metal oxide and/or the metal hydroxide of (i) and/or (ii) are mixed together to adjust the average metallization degree of the total metal oxide and/or the metal hydroxide to a range of from 5 to 55%, then the mixture is charged to the melting furnace for metal smelting.

[5] The method for metal smelting of above-described [4], wherein the mixture of raw materials at a high temperature discharged from the prereduction furnace after preliminarily reduced is introduced to a non-open type vessel or a pneumatic conveying unit that is-operated by a non-oxidizing gas as a pneumatic conveying gas, along with the metal oxide and/or the metal hydroxide of (i) and/or (ii), and the introduced mixture is transferred to the melting furnace for charging thereto.

[6] The method for metal melting of one of above-described [1] through [5], wherein the percentage of post combustion of a gas generated in the melting furnace is 20% or more.

[7] The method for metal smelting of one of above-described [1] through [6], wherein an additional carbonaceous material, other than the carbonaceous material contained in the mixture of raw materials, is charged to the melting furnace.

[8] The method for metal melting of above-described [7], wherein the high temperature mixture of raw materials, which is preliminarily reduced in the step (A1) or the step (A2), (the mixture of raw materials, which is preliminarily reduced in the step (A2), includes a mixture that contains the metal oxide and/or the metal hydroxide of (i) and/or (ii)), is charged to the melting furnace at the same time that the carbonaceous material is charged thereto; and at least a part of each of the charged mixture of raw materials and the carbonaceous material falls down in the furnace to reach to a bath surface.

[9] The method for metal smelting of one of above-described [1] through [8], wherein the melting furnace is a metal-bath type smelting reduction furnace.

[10] The method for metal smelting of one of above-described [1] through [9], wherein the mixture of raw materials is reduced in a reduction zone of the prereduction furnace, and an oxide layer is formed on a surface layer of particles of the mixture of raw materials.

[11] The method for metal smelting of above-described [10], wherein the degree of oxidization of intrafurnace atmosphere of a part of or total region of the reduction zone of the prereduction furnace is 30% or more.

[12] The method for metal smelting of one of above-described [1] through [11], wherein a gas generated in the melting furnace is charged to the prereduction furnace as a combustion gas.

[13] The method for metal smelting of one of above-described [1] through [11], wherein a gas, which is generated in the melting furnace and which becomes to lower than 300°C after discharged from the melting furnace, and/or an oxygen-containing gas being charged to the prereduction furnace are preheated by the sensible heat of a flue gas discharged from the prereduction furnace and/or sensible heat of a flue gas obtained by combusting a part of a gas generated in the melting furnace, then are charged to the prereduction furnace.

[14] The method for metal smelting of one of above-described [1] through [11], wherein a gas (s), which is generated in the melting furnace and which becomes to lower than 300°C after discharged from the melting furnace, and/or an oxygen-containing support gas (o) being charged to the prereduction furnace are preheated by the steps of (i) and (ii) given below, then are charged to the prereduction furnace:

> (i) the step of preheating the gas (s) and/or the oxygen-containing support gas (o) by the sensible heat of a flue gas coming from the prereduction furnace to raise the temperature thereof to below 500°C, and
> (ii) the step of preheating the generated gas (s) and/or the oxygen-containing support gas (o), which are preheated in the step (i) by the sensible heat of a flue gas prepared by combusting a part of the generated gas (s) and/or other fuel to further increase the temperature thereof.

[15] The method for metal smelting of one of above-described [1] through [14], wherein at least a part of an auxiliary raw material being charged to the melting furnace is charged to the prereduction furnace along with the mixture of raw materials.

[16] The method for metal smelting of above-described [15], wherein at least a part of the auxiliary raw material being charged to the prereduction furnace is a non-burnt auxiliary raw material, and the auxiliary raw material is fired in the prereduction furnace.

[17] The method for metal smelting of one of above-described [1] through [16], wherein the mixture of raw materials being charged to the prereduction furnace contains dust recovered from a gas generated in the melting furnace.

[18] The method for metal smelting of one of above-described [1] through [17], wherein the carbonaceous material is classified to individual particle ranges, and the carbonaceous material of fine particle ranges is used as a carbonaceous material to be added to the mixture of raw materials being charged to the prereduction furnace, while the carbonaceous material of coarse particle ranges is used as a carbonaceous material to be charged to the melting furnace.

[19] The method for metal smelting of one of above-described [1] through [18], wherein at least a part of the mixture of raw materials being charged to the prereduction furnace or of individual raw materials before preparing the mixture of the raw materials is preliminarily dried using the sensible heat and/or the latent heat of a flue gas discharged from the prereduction furnace and/or of a gas generated in the melting furnace.

[20] The method for metal smelting of one of above-described [1] through [19], wherein the prereduction furnace is a rotary hearth type prereduction furnace, and the preliminary reduction of the mixture of raw materials is conducted while forming a layer of powder and particle layer, which is not discharged from a raw material discharge opening, on a hearth of the rotary type furnace.

[21] The method for metal smelting of one of above-described [1] through [20], wherein the prereduction furnace is a rotary hearth type prereduction furnace, and one or more of material selected from the group consisting of a mixture of raw materials, a metal oxide and/or a metal hydroxide, an auxiliary raw material being charged to the melting furnace, and a carbonaceous material, as a coolant onto a layer of raw materials immediately before being discharged from a raw material discharge opening, and treated raw materials are discharged from the furnace in a state that the coolant is mixed thereto using a raw material discharge unit located at the raw material discharge opening.

[22] The method for metal smelting of above-described [21], wherein the weight ratio of an amount of Fe (A) in the coolant being charged onto the layer of raw materials to an amount of Fe (B) as an ingredient of the raw material layer, (A)/(B), is in a range of from 1/10 to 1/1.

[23] The method for metal smelting of one of above-described [1] through [22], wherein a non-fired auxiliary raw material is fired under the contact with a high temperature flue gas discharged from the prereduction furnace, then is charged to the melting furnace.

[24] The method for metal smelting of above-described [23], wherein air is preheated by a high temperature flue gas which was used for firing the non-fired auxiliary raw material, and the preheated air is supplied to the prereduction furnace.

[25] The method for metal smelting of one of above-described [1] through [24], wherein the percentage of post combustion of a gas generated in the melting furnace is 20% or more, and the gas generated in the melting furnace is charged to the prereduction furnace as a combustion gas.

[26] The-method for metal smelting of one of above-described [1] through [24], wherein a carbonaceous material is charged to the melting furnace adding to the carbonaceous material in the mixture of raw materials, the percentage of post combustion of a gas generated in the melting furnace is 20% or more, and the gas generated in the melting furnace is charged to the prereduction furnace as a combustion gas.

[27] The method for metal smelting of one of above-described [1] through [24], wherein at least a part of the mixture of raw materials being charged to the prereduction furnace or at least a part of individual raw materials before preparing the mixture of raw materials is preheated by the sensible heat and/or the latent heat of a flue gas coming from the prereduction furnace and/or a gas generated in the melting furnace, the percentage of post combustion of the gas generated in the melting furnace is 20% or more, and the gas generated in the melting furnace is charged to the prereduction furnace as a combustion gas.

[28] The method for metal smelting of one of above-described [1] through [24], wherein at least a part of the mixture of raw materials being charged to the prereduction furnace or at least a part of individual raw materials before preparing the mixture of-raw materials is preheated by the sensible heat and/or the latent heat of a flue gas coming from the prereduction furnace and/or a gas generated in the melting furnace, a carbonaceous material is charged to the melting furnace adding to the carbonaceous material in the mixture of raw materials, the percentage of post combustion of the gas generated in the melting furnace is 20% or more, and the gas generated in the melting furnace is charged to the prereduction furnace as a combustion gas.

[29] The method for metal smelting of one of above-described [1] through [24], wherein at least a part of the mixture of raw materials being charged to the prereduction furnace or at least a par of individual raw materials before preparing the mixture of raw materials is preheated by the sensible heat and/or the latent heat of a flue gas coming from the prereduction furnace and/or a gas generated in the melting furnace, a carbonaceous material is charged to the melting furnace adding to the carbonaceous material in the mixture of raw materials, the percentage of post combustion of the gas generated in the melting furnace is 20% or more, the gas generated in the melting furnace is charged to the prereduction furnace as a combustion gas, the mixture of raw materials at a high temperature discharged from the prereduction furnace after preliminarily reduced is introduced to a closed type vessel or a pneumatic conveying unit that is operated by a non-oxidizing gas as a pneumatic conveying gas, and is transferred to the melting furnace using the closed type vessel or the pneumatic conveying unit while keeping the mixture to 600°C or higher temperature, then is charged to the melting furnace.

According to the methods for metal smelting of the present invention, described in above [1] through [29], molten metal is manufactured at low cost and high productivity by melt-reduction of a metal oxide and/or a metal hydroxide such as iron ore under favorable energy effect and energy balance.

Another object of the present invention is to provide a method for metal smelting, which includes particularly advantageous preliminary reduction treatment and other raw material treatment method, and to provide an apparatus that is suitable for conducting the method for metal smelting.

According to the present invention, the object is achieved by the following-described method for metal smelting and apparatus therefor.

[30] A method for metal smelting containing the steps of:

(A) preliminarily reducing a mixture of one or more of mixture of raw materials selected from the group consisting of following-given (a) through (c) in a prereduction furnace of rotary hearth type until a part of the metal oxide and/or the metal hydroxide is metallized;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source; wherein the step (A) adopts a rotary hearth type prereduction furnace having two or more of raw material charge opening in peripheral direction thereof, and the mixture of raw materials is charged through individual raw material charge openings successively onto the rotary hearth so as a layer of raw materials of the mixture of raw materials charged from an upstream side raw material charge opening to be directly heated by the intrafurnace atmosphere until the mixture of raw materials is charged from a downstream side raw material charge opening, thus conducting the preliminary reduction of the mixture of raw materials.

[31] The method for metal smelting of above-described [30], wherein the step (A) is carried out by preliminarily reducing the mixture of raw materials using a prereduction furnace having two or more of raw material charge opening in peripheral direction thereof at almost equal pitch.

[32] An apparatus for metal smelting containing: a rotary hearth type prereduction furnace having two or more of raw material charge opening in peripheral direction thereof to conduct preliminary reduction by charging one or more of mixture of raw materials selected from the group consisting of (a) through. (c).

(a) a mixture of raw materials prepared by mixing at least a carbonaceous materials and a metal oxide and/ or a metal hydroxide,

(b) a mixture of raw materials prepared by mixing and granulating at least a carbonaceous material and a metal oxide and/or a metal hydroxide, and

(c) a mixture of raw material prepared by mixing and molding at least a carbonaceous material and a metal oxide and/or a metal hydroxide; and

a melting furnace for metal smelting to melt and finally reduce the mixture of raw materials, which mixture is preliminarily reduced in the prereduction furnace, using the carbonaceous material as a reducing agent and using combustion heat of the carbonaceous material and combustion heat of carbon monoxide generated in the furnace as a main heat source.

[33] The apparatus for metal smelting of above-described [32] further contains a firing furnace to fire an auxiliary raw material, being charged to the melting furnace, by contacting thereof with an introduced high temperature flue gas discharged from the prereduction furnace.

[34] The apparatus for metal smelting of above-described [32] or [33], wherein two or more of raw material charge opening are located in peripheral direction of the prereduction furnace at almost equal pitch.

[35] A method for melt smelting containing the steps of:

(A) preliminarily reducing a mixture of one or more of mixture of raw materials selected from the group consisting of following-given (a) through (c) in a prereduction furnace of rotary hearth type until a part of the metal oxide and/or the metal hydroxide is metallized;

(a) a mixture of raw materials prepared by mixing at least a carbonaceous material and a metal oxide and/ or a metal hydroxide,

(b) a mixture of raw materials prepared by mixing and granulating at least a carbonaceous material and a metal oxide and/or a metal hydroxide, and

(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source; wherein the step (A) conducts preliminary reduction of the mixture of raw materials while forming a layer that contains not large amount of metal oxide and/or metal hydroxide at the lowermost layer part of the raw material layer on the rotary hearth of the prereduction furnace.

[36] The method of metal smelting of above-described [35], wherein the lowermost layer part of the raw material layer consists of an auxiliary raw material or consists mainly of a layer of auxiliary material being charged to the melting furnace.

[37] A method for metal smelting containing the steps of:

(A) preliminarily reducing a mixture of one or more of mixture of raw materials selected from the group consisting of following-given (a) through (c) in a prereduction furnace of rotary hearth type until a part of the metal oxide and/or the metal hydroxide is metallized;

(a) a mixture of raw materials prepared by mixing at least a carbonaceous material and a metal oxide and/ or a metal hydroxide,

(b) a mixture of raw materials prepared by mixing and granulating at least a carbonaceous material and a metal oxide and/or a metal hydroxide, and

(c) a mixture of raw materials prepared by mixing and molding at least a carbonaceous material and a metaloxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide. generated in the melting furnace as main heat source; wherein, in the step (A), a charge consisting mainly of a powder and particle raw material (one or more of raw material selected from the group consisting of a mixture of raw materials, a metal oxide and/or a metal hydroxide, and a carbonaceous material) and/or a charge consisting mainly of powder and particles of an auxiliary raw material being charged to the melting furnace, or a charge . consisting mainly of powder and particles of the powder and particle raw material and/or the powder and particles of the auxiliary raw material, is charged onto the rotary hearth of the prereduction furnace, then granulates and/or molded forms of the mixture of raw materials are supplied to the upper layer of the charge at downstream side along the route of rotary hearth movement.

[38] The method for metal smelting of above-described [37], wherein, in the step (A), the particle size of the charge of powder and particles being charged onto the rotary hearth is in a range of from 0.05 to 10 mm.

[39] The method for metal smelting of above-described [37] or [38], wherein, in the step (A), the powder and particle charge being charged onto the rotary hearth is coal or a charge consisting mainly of coal.

[40] The method for metal smelting of above-described [37] or [38]. wherein, in the step (A), the powder and particle charge being charged onto the rotary hearth is a non-fired auxiliary raw material or a charge consisting mainly of a non-fired auxiliary raw material.

[41] The method for metal smelting of one of above-described [37] through [40], wherein, in the step (A), granulates and/or molded forms of a mixture of raw materials which are charged to the upper layer of the charge on the rotary hearth are granulates and/or molded forms which are not treated by preliminary drying.

[42] A method for metal smelting containing the steps of:

> (A) preliminarily reducing a mixture of one or more of mixture of raw materials selected from the group consisting of following-given (a) through (c) in a prereduction furnace until a part of the metal oxide and/or the metal hydroxide is metallized;
>
>> (a) a mixture of raw materials prepared by mixing at least a carbonaceous material and a metal oxide and/or a metal hydroxide,
>> (b) a mixture of raw materials prepared by mixing and granulating at least a carbonaceous material and a metal oxide and/or a metal hydroxide, and
>> (c) a mixture of raw materials prepared by mixing and molding at least a carbonaceous material and a metal oxide and/or a metal hydroxide;
>
> (B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source; and
> (C) firing a non-fired auxiliary raw material being charged to the melting furnace by contacting thereof with a high temperature flue gas discharged from the prereduction furnace.

[43] The method for metal smelting of above-described [42], wherein air is preheated by the high temperature flue gas that was used for firing the auxiliary raw material, and the preheated air is supplied to the prereduction furnace.

[44] An apparatus for metal smelting containing: a prereduction furnace to conduct preliminary reduction by charging one or more of mixture of raw materials selected from the group consisting of (a) through (c),

> (a) a mixture of raw materials prepared by mixing at least a carbonaceous material and a metal oxide and/or a metal hydroxide,
> (b) a mixture of raw materials prepared by mixing and granulating at least a carbonaceous material and a metal oxide and/or a metal hydroxide, and
> (c) a mixture of raw materials prepared by mixing and molding at least a carbonaceous material and a metal oxide and/or a metal hydroxide; a firing furnace for firing a non-fired auxiliary raw material being charged to a melting furnace for metal smelting by contacting thereof with a high temperature flue gas discharged from the prereduction furnace; and
> a melting furnace for metal smelting to melt and finally reduce the mixture of raw materials, which is preliminarily reduced in the prereduction furnace, using a carbonaceous material as a reducing agent and using combustion heat of the carbonaceous material and combustion heat of carbon monoxide generated in the furnace as main heat source.

[45] A method for metal smelting containing the steps of: preliminarily reducing one or more of the mixture of mixture of raw materials selected from the group consisting of (a) through (c) in a prereduction furnace of rotary hearth type, horizontally moving hearth type, multi-hearth type, or rotary kiln type until a part of a metal oxide and/or a metal hydroxide is metallized,

(a) a mixture of raw materials prepared by mixing at least a carbonaceous material and a metal oxide and/or a metal . hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and
     (B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source; wherein the metal oxide and/or the metal hydroxide in the mixture of raw materials are an ore prepared by applying primary crushing to an ore consisting mainly of a sinter-feed ore.

[46] The method for metal smelting of above-described [45], wherein the primarily crushed ore has particle sizes of from 0.1 to 1 mm.

[47] A method for metal smelting containing the steps of:

(A) preliminarily reducing a mixture of one or more of mixture of raw materials selected from the group consisting of following-given (a) through (c) in a prereduction furnace of rotary hearth type or horizontally moving hearth type until a part of the metal oxide and/or the metal hydroxide is metallized;

(a) a mixture of raw materials prepared by mixing at least a carbonaceous material and a metal oxide and/ or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source; wherein the heating of the mixture of raw materials in the step (A) is . conducted by contacting flame of a heating burner with at least a part of the top surface of the layer of mixture of raw materials.

[48] An apparatus for metal smelting containing: a prereduction furnace of rotary hearth type or horizontally moving hearth type conducting preliminary reduction of a mixture of one or more of mixture of raw materials selected from the group consisting of following-given (a) through (c),

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and
     a melting furnace for metal smelting to melt and finally reduce the mixture of raw materials, which is preliminarily reduced in the prereduction furnace, using the carbonaceous material as a reducing agent and using combustion heat of the carbonaceous material and combustion heat of carbon monoxide generated in the furnace as main heat source; wherein a heating burner for heating the mixture of raw materials charged on the hearth of the prereduction furnace is located in a mode of (i), (ii), or (iii) given below so as a flame of the burner to contact with at least a part of the top surface of layer of the mixture of raw materials,

(i) a burner tuyere which is located at lower part of sidewall of the furnace body.
(ii) a burner tuyere which is located on sidewall of the furnace body, and being tilted by 45° downward from horizontal plane toward the hearth, or
(iii) a burner tuyere which is located on ceiling facing down.

[49] A method for metal smelting containing the steps of:

(A) preliminarily reducing a mixture of one or more of mixture of raw materials selected from the group consisting of following-given (a) through (c) in a prereduction furnace of rotary hearth type or horizontally moving hearth type until a part of the metal oxide and/or the metal hydroxide is metallized;

(a) a mixture of raw materials prepared by mixing at least a carbonaceous material and a metal oxide and/ or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source; wherein, in the step (A), the mixture of raw materials charged onto the hearth of the prereduction furnace is rotated and/or transferred against the hearth during the stage of heating and reducing thereof.

[50] An apparatus for metal smelting containing: a prereduction furnace of rotary hearth type or horizontally moving hearth type conducting preliminary reduction of a mixture of one or more of mixture of raw materials selected from the group consisting of following-given (a) through (c),

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and
a melting furnace for metal smelting to melt and finally reduce the mixture of raw materials, which is preliminarily reduced in the prereduction furnace, using the carbonaceous material as a reducing agent and using combustion heat of the carbonaceous material and combustion heat of carbon monoxide generated in the furnace as main heat source; wherein the prereduction furnace is provided with a'means to rotate and/or transfer the mixture of raw materials on the hearth against the hearth during the stage of heating and reducing thereof.

[51] The apparatus for metal smelting of above-described [50], wherein the means to rotate and/or transfer the mixture of raw materials against the hearth of the prereduction furnace is a screw unit that can vary the rotational speed of screw shaft.

[52] A method for metal smelting containing the steps of:

(A) preliminarily reducing a mixture of one or more of mixture of raw materials selected from the group consisting of following-given (a) through (c) in a prereduction furnace of rotary hearth type, horizontally moving hearth type, multi-hearth type, or rotary kiln type until a part of the metal oxide and/or the metal hydroxide is metallized;

(a) a mixture of raw materials prepared by mixing at least a carbonaceous material and a metal oxide and/ or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing'agent, and using combustion heat of the carbonaceous material and combustion heat of carbon monoxide generated in the melting furnace as main heat source; wherein, at least a part of high temperature gas generated in the melting furnace in the step (B) is injected into a heating burner of the prereduction furnace as a fuel gas using an injector action that uses a combustion air and/or a gas generated in the melting furnace after removing dust therefrom and after pressurized thereto.

[53] A method for metal smelting containing the steps of:

(A) preliminarily reducing a mixture of one or more of mixture of raw materials selected from the group consisting of following-given (a) through (c) in a prereduction furnace of rotary hearth type, horizontally moving hearth type, multi-hearth type, or rotary kiln type until a part of the metal oxide and/or the metal hydroxide is metallized;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source; wherein, at least a part of the gas generated in the melting furnace in the step (B) is cooled to 800°C or lower temperature, and is introduced to a high temperature dust removal unit to remove dust therefrom, then is supplied to a heating burner of the prereduction furnace as a fuel gas in a high temperature state.

[54] A method for metal smelting containing the steps of:

(A) preliminarily reducing a mixture of one or more of mixture of raw materials selected from the group consisting of following-given (a) through (c) in a prereduction furnace of rotary hearth type or horizontally moving hearth type until a part of the metal oxide and/or the metal hydroxide is metallized;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source; wherein, the prereduction furnace in the step (A) is provided with a tubular flame burner as a heating means, and a gas generated in the step (B) in the melting furnace is supplied to the tubular flame burner as a fuel gas.

[55] The method for metal smelting of above-described [54], wherein the gas generated in the melting furnace is supplied to the tubular flame burner of the prereduction furnace after removing dust therefrom.
[56] The method for metal smelting of above-described [54] or [55], wherein the gas generated in the melting furnace is stored in a gas holder, and is supplied from the gas holder to the tubular flame burner of the prereduction furnace.
[57] A method for metal smelting containing the steps of:

(A) preliminarily reducing a mixture of one or more of mixture of raw materials selected from the group consisting of following-given (a) through (c) in a prereduction furnace of rotary hearth type, horizontally moving hearth type, multi-hearth type, or rotary kiln type until a part of the metal oxide and/or the metal hydroxide is metallized;

(a) a mixture of raw materials prepared by mixing at least a carbonaceous material and a metal oxide and/or a metal hydroxide,

(b) a mixture of raw materials prepared by mixing and granulating at least a carbonaceous material and a metal oxide. and/or metal hydroxide, and

(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as a main heat source; wherein the mixture of raw materials charged to the prereduction furnace in the step (A) is heated and reduced after dried by preheating thereof with a preheating gas.

[58] The method for metal smelting of above-described [57], wherein the prereduction furnace is divided into a preheating and drying zone and a heating and reducing zone beginning from the raw material charge section side, and the mixture of raw materials is preheated and dried in the preheating and drying zone, then is heated and reduced in the heating and reducing zone.

[59] The method for metal smelting of above-described [57] or [58], wherein the preheating gas is a gas generated in the melting furnace, a gas discharged from the heating and reducing zone of the prereduction furnace, or a oxygen-containing support gas which was preheated:by the sensible heat of one or more of these gases.

[60] The method for metal smelting of one of above-described [57] through [59], wherein the temperature of the preheating gas is in a range of from 100 to 400°C.

[61] A method for metal smelting containing the steps of:

(A) preliminarily reducing a mixture of one or more of mixture of raw materials selected from the group consisting of following-given (a) through (c) in a prereduction furnace of rotary hearth type or horizontally moving hearth type until a part of the metal oxide and/or the metal hydroxide is metallized;

(a) a mixture of raw materials prepared by mixing at least a carbonaceous material and a metal oxide and/or a metal hydroxide,

(b) a mixture of raw materials prepared by mixing and granulating at least a carbonaceous material and a metal oxide and/or a metal hydroxide, and

(c) a mixture of raw materials prepared by mixing and molding at least a carbonaceous material and a metal oxide and/or a metal hydroxide; and

(B) melting'and finally reducing the mixture of raw materials, which is preliminarily reduced in the step (A), by charging thereof to a melting furnace using the carbonaceous material as a reducing agent, and using combustion heat of the 'carbonaceous material and combustion heat of carbon monoxide generated in the melting furnace as a main heat source; wherein, on charging a raw material comprising a mixture of raw materials and/or a carbonaceous material to a bath of the melting furnace in the step (B), the raw material is charged to a bath surface region where a descending flow appears in a slag bath'section.

[62] An apparatus for metal smelting containing: a prereduction furnace of rotary hearth type or horizontally moving hearth type conducting preliminary reduction of a mixture of one or more of mixture of raw materials selected from the group consisting of following-given (a) through (c),

(a) a mixture of raw materials prepared by mixing at least a carbonaceous material and a metal oxide and/or a metal hydroxide,

(b) a mixture of raw materials prepared by mixing and granulating at least a carbonaceous material and a metal oxide and/or a metal hydroxide, and

(c) a mixture of raw materials prepared by mixing and molding at least a carbonaceous material and a metal oxide and/or a metal hydroxide;

a melting furnace for metal smelting to melt and finally reduce the mixture of raw materials, which is preliminarily reduced in the prereduction furnace, using a carbonaceous material as a reducing agent and using combustion heat of the carbonaceous material and combustion heat of carbon monoxide generated in the furnace as main heat source; and a transfer unit to transfer a container, to which the raw material discharged from the prereduction furnace, to a raw material receiving hopper of the melting furnace; the melting furnace being equipped with one or more of raw material receiving hopper to which the raw material transferred from the prereduction furnace is introduced, and equipped with a hoist which hoists the container and runs on a track to transfer the container, the hoist coming and going only one direction on the track, the container hoisting position at the prereduction furnace side being located at directly beneath the track, the raw material receiving hopper at the melting furnace side being located at directly beneath the track, thus transferring the container between the prereduction furnace and the melting furnace using the hoist that moves along the track.

[63] The apparatus for metal smelting of above-described [62] containing one unit of melting furnace and two units of prereduction furnace, the container hoisting positions of the' two prereduction furnace side being located at opposite sides thereeach to the raw material receiving hopper at the melting furnace side or to the raw material receiving hopper group.

[64] The apparatus for metal smelting of above-described [62] or [63], wherein the container hoist positioned at the prereduction furnace side are a pair to each prereduction furnace.

[65] The apparatus for metal smelting of one of above-described [62] through [64] further containing a turntable that can'place plurality of containers thereon and by which the plurality of containers can be successively moved to the raw material discharge opening position of the prereduction furnace and to the container hoisting position by the rotation of the turntable.

[66] The apparatus for metal smelting of one of above-described [62] through [65], wherein the melting furnace is a metal-bath type melt-reduction furnace.

[67] The apparatus for'metal smelting of one of above-described [62] through [66] further containing a driving mechanism of the hoist for hoisting the container, the driving mechanism has:

sheaves ($Sa_1$) and ($Sa_2$) which are located at respective longitudinal ends of the track of the hoist;
a sheave ($Sb$) which is located on the hoist;
a container suspension means which is suspended from the hoist in ascending and descending mode;
a sheave ($Sc$) which is mounted to the container suspension means in ascending and descending mode;
a wire-winding drum ($Da$) for hoisting a container located below the track of the hoist;
a wire rope ($Wa$) for hoisting container, which wire rope is unwound from the wire-winding drum ($Da$) and is guided to each sheave, the front end thereof being fixed to an end of the track;
wherein the wire rope ($Wa$) guided from the sheave ($Sa_1$) or ($Sa_2$) is successively guided through the sheave ($Sb$) on the hoist, the sheave ($Sc$) on the container suspension means, and the sheave ($Sb$) on the hoist, then is guided to the sheave ($Sa2$) or ($Sa1$), thus the container suspension means is suspended by the wire rope ($Wa$), and the winding and unwinding action of wire rope ($Wa$) by the wire-winding drum ($Da$) makes possible to ascend and descend the container suspension means.

[68] The apparatus for metal smelting of above-described [67] further contains:

a wire-winding drum ($Db$) for counter weight use, mounted coaxially with the wire-winding drum ($Da$);
a wire rope ($Wb$) which is wound in reverse direction to the winding direction of wire rope ($Wa$) on the wire-winding drum ($Da$) and which is guided by a sheave located at upper position than the wire-winding drum ($Db$); and
a counter weight ($Co$) attached to the front end of the wire rope ($Wb$).

[69] The apparatus for metal smelting of above-described [68], wherein there are located each pair of the sheaves ($Sa_1$) and ($Sa_2$) positioned at respective longitudinal ends of the track of the hoist, the sheave ($Sc$) mounted to the container suspension means, the wire-winding drum ($Da$) for hoisting container, the wire-winding drum ($Db$) for counter weight use, the wire rope ($Wa$) for hoisting container, the wire rope ($Wb$) being wound by the wire-winding drum ($Db$), and the counter weight ($Co$) attached to the front end of the wire rope ($Wb$).

## BRIEF DESCRIPTION OF THE DRAWINGS

FIG. 1 is a graph showing the relation between the retention time of mixture of raw materials containing iron ore and carbonaceous material in RHF and the metallization degree of manufactured semi-reduced iron.

FIG. 2 shows a perspective view of a conventional type RHF.

FIG. 3 illustrates the arrangement of raw material charge opening and raw material discharge opening of RHF of FIG. 2.

FIG. 4 is a graph showing the relation between the metallization degree of semi-reduced iron manufactured by RHF and the unit requirement of energy consumption, for each of RHF-SAF process, FRH-SRF process, RHF, SRF, and SAF.

FIG. 5 is a graph showing the relation between the metallization degree of semi-reduced iron manufactured in RHF and the molten iron manufacturing cost for each of RHF-SAF process and RHF-SRF process.

FIG. 6 shows an example of energy balance in the RHF-SRF process for the case of 30% of metallization degree of semi-reduced iron manufactured in RHF.

FIG. 7 shows an example of energy balance in the RHF-SRF process for the case of 90% of metallization degree of semi-reduced iron manufactured in RHF.

FIG. 8 shows an example of energy balance in the RHF-SAF process for the case of 30% of metallization degree of semi-reduced iron manufactured in RHF.

FIG. 9 is a graph showing the relation between the average reduction degree of raw material and average metallization degree of semi-reduced iron in RHF, the production rate of RHF, the molten iron production rate of SRF, and the molten iron production rate of SAF.

FIG. 10 is a graph showing the relation between the average metallization degree of semi-reduced iron manufactured in RHF, the amount of gas (converted to energy) generated in SRF, the amount of gas (converted to energy) necessary in RHF and in the succeeding stages of steel making plant.

FIG. 11 is a graph showing the relation between the degree of oxidization of the atmosphere assuming the generation gas in SRF and the average metallization degree of pellets after completed the preliminary reduction by exposing to the atmosphere for a certain period.

FIG. 12 illustrates a method for charging the mixture of raw materials and carbonaceous material into SRF while both are in mixed state.

FIG. 13 illustrates an example of preferred charging mode of mixture of raw materials and/or carbonaceous material into the melting furnace in the metal smelting method according to the present invention. FIG. 13(a) is a schematic drawing showing longitudinal cross section of the melting furnace. FIG. 13(b) is a schematic drawing of cross section along A-A' line of FIG. 13(a).

FIG. 14 illustrates another example of preferred charging mode of mixture of raw materials and/or carbonaceous material into the melting furnace in the metal smelting method according to the present invention. FIG. 14(a) is a schematic drawing showing longitudinal cross section of the melting furnace. FIG. 14(b) is a schematic drawing of cross section along B-B' line of FIG. 14(a).

FIG. 15 illustrates further example of preferred charging mode of mixture of raw materials and/or carbonaceous material into the melting furnace in the metal smelting method according to the present invention. FIG. 15(a) is a schematic drawing showing longitudinal cross section of the melting furnace. FIG. 15(b) is a schematic drawing of cross section along C-C' line of FIG. 15(a).

FIG. 16 is a graph showing the relation between the degree of oxidization of gas of atmosphere in the reduction zone of RHF and the final average metallization degree of pellets manufactured aiming at the average metallization degree of 90%.

FIG. 17 shows a flowchart illustrating a mode of RHF-SRF process of the metal smelting method according to the present invention.

FIG. 18 shows a flowchart illustrating another mode of FIG. 17 for charging a gas generated in SRF and an oxygen-containing support gas to RHF after preheated.

FIG. 19 illustrates a mode of prereduction furnace of horizontally moving hearth type used in the metal smelting method according to the present invention, (schematic cross sectional view).

FIG. 20 illustrates a mode of prereduction furnace of rotary kiln type used in the metal smelting method according to the present invention, (schematic cross sectional view).

FIG. 21 illustrates a mode of prereduction furnace of multi-hearth type used in the metal smelting method according to the present invention, (schematic cross sectional view).

FIG. 22 shows a perspective view of a mode of RHF applying to the metal smelting apparatus according to the present invention.

FIG. 23 illustrates the arrangement of raw material charge opening and raw material discharge opening of RHF of FIG. 22.

FIG. 24 illustrates another mode of RHF applied to the metal smelting apparatus according to the present invention, giving the arrangement of raw material charge opening and raw material discharge opening.

FIG. 25 illustrates a mode of preferred operational method of RHF applicable to the present invention, giving a plan view of cross section of furnace wall at the raw material discharge section.

FIG. 26 shows a cross section along XXVI-XXVI line in FIG. 25.

FIG. 27 illustrates another mode of preferred operational method of RHF applicable to the present invention, giving a cross section of raw material layer.

FIG. 28 illustrates further mode of preferred operational method of RHF applicable to the present invention, giving a cross section of raw material layer.

FIG. 29 illustrates still another mode of preferred operational method of RHF applicable to the present invention, giving arrangement of the raw material charge opening and the raw material discharge opening.

FIG. 30 illustrates the state of raw material charge through the raw material charge opening, in the mode of FIG. 29.

FIG. 31 illustrates still further mode of preferred operational method of RHF applicable to the present invention, giving arrangement of the raw material charge opening and the raw material discharge opening.

FIG. 32 illustrates the state of charging a coolant through a raw material charge opening for coolant, in the mode of FIG. 31.

FIG. 33 illustrates a mode of metal smelting method according to the present invention, conducted by firing a non-fired auxiliary raw material being charged to the melting furnace by contacting with high temperature flue gas discharged from the prereduction furnace.

FIG. 34 is a graph showing the relation between the particle size of sinter-feed ore used in the method for metal smelting (I) according to the present invention after primary crushing, the crushing cost therefor, and the reducibility.

FIG. 35 illustrates a mode of the method for metal smelting (II) according to the present invention.

FIG. 36 illustrates another mode of the method for metal smelting (II) according to the present invention.

FIG. 37 illustrates further mode of the method for metal smelting (II) according to the present invention.

FIG. 38 illustrates still another mode of the method for metal smelting (II) according to the present invention.

FIG. 39 illustrates still further mode of the method for metal smelting (II) according to the present invention.

FIG. 40 illustrates a mode of the method for metal smelting (III) according to the present invention.

FIG. 41 shows a plan view illustrating another mode of the method for metal smelting (III) according to the present invention.

FIG. 42 illustrates a twisted plate used in the mode of FIG. 41.

FIG. 43 shows a plan view illustrating further mode of the method for metal smelting (III) according to the present invention.

FIG. 44 shows a plan view illustrating still another mode of the method for metal smelting (III) according to the present invention.

FIG. 45 illustrates a use state of screw unit (raw material transfer and discharge unit) in the mode of FIG. 44.

FIG. 46 illustrates a mode of the method for metal smelting (IV) according to the present invention.

FIG. 47 illustrates an example of structure of ejector used in the mode of FIG. 46.

FIG. 48 illustrates another mode of the method for metal smelting (IV) according to the present invention.

FIG. 49 shows a perspective view illustrating an example of structure of tubular flame burner used as a heating means of RHF in the method for metal smelting (V) according to the present invention.

FIG. 50 shows a cross sectional view of the tubular flame burner of FIG. 49.

FIG. 51 shows a plan view of RHF used in a mode of the method for metal smelting (V) according to the present invention.

FiG. 52 shows an example of mounted state of tubular flame burner in RHF of FIG. 51.

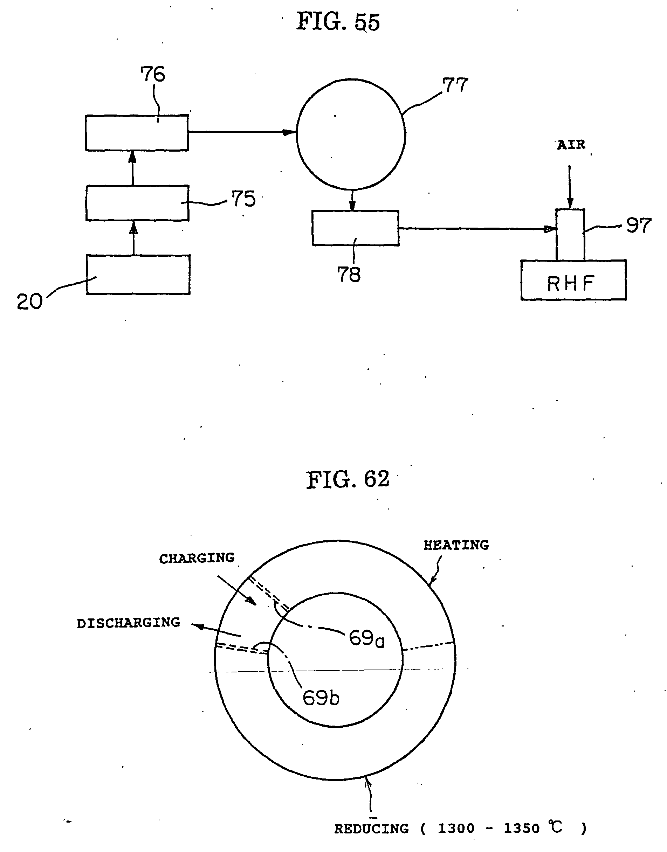

FIG. 53 shows another example of mounted state of tubular flame burner in RHF of FIG. 51.

FIG. 54 shows further example of mounted state of tubular flame burner in RHF of FIG. 51.

FIG. 55 illustrates an example of unit arrangement with gas holder used for the method for metal smelting (V) according to the present invention.

FIG. 56 illustrates a mode of the method for metal smelting (VI) according to the present invention.

FIG. 57 shows a cross sectional view of gas seal plate located in RHF of FIG. 56.

FIG. 58 illustrates another mode of the method for metal smelting (VI) according to the present invention.

FIG. 59 shows a longitudinal cross sectional view of RHF of FIG. 58 in the hearth width direction.

FIG. 60 shows a longitudinal cross sectional view of RHF in the hearth width direction in further mode of the method for metal smelting (VI) according to the present invention.

FIG. 61 shows a longitudinal cross sectional view of RHF in the hearth width direction in still another mode of the method for metal smelting (VI) according to the present invention.

FIG. 62 illustrates general operating method of RHF.

FIG. 63 shows a part sectional plan view giving a mode of metal smelting apparatus according to the present invention.

FIG. 64 shows a plan view of the metal smelting apparatus of the mode of FIG. 63.

FIG. 65 illustrates detail drive mechanism for hoisting container in the metal smelting apparatus of the mode of FIG. 63.

FIG. 66 illustrates an example of container transfer sequence using a hoist in the metal smelting apparatus of the mode of FIG. 63.

FIG. 67 illustrates the sequence of FIG. 66.

FIG. 68 illustrates the sequence of FIG. 67.

**DETAILED DESCRIPTION OF THE INVENTION**

In the following, the detail and various modes of the metal smelting method and the metal smelting apparatus according to the present invention are described with an example of manufacturing molten metal using iron ore (ore fines) as the metal oxide and/or the metal hydroxide which are the target of the metal smelting, and applying preliminary reduction and melt reduction to the iron ore.

In the present invention and the description given hereinafter, the metallization degree (MD [%]) of the metal oxide and/or the metal hydroxide, (hereinafter referred to as the "iron ore"), is defined by:

$$\text{Metallization degree (\%)} = \{[\text{Amount of metal which is}$$

$$\text{metallized in the metal oxide and/or the metal hydroxide}$$

$$(kg)]/[\text{Amount of total metal in the metal oxide and/or the metal}$$

$$\text{hydroxide (kg)}]\} \times 100$$

As described before, on manufacturing molten iron from iron ore by melt-reduction, for the case of manufacturing process having a step of conducting preliminary reduction smelting in RHF and a step of conducting finish smelting in SAF, (hereinafter the manufacturing process is referred to as the "RHF-SAF process"), increased metallization degree of semi-reduced iron (which is the "iron ore that is partially metallized by the preliminary reduction", and so forth) obtained in RHF is more advantageous in view of unit requirement of energy consumption and of energy balance. To the contrary, for the case of manufacturing process having a step of conducting preliminary reduction smelting in RHF and a step of conducting finish smelting in SRF, (hereinafter the manufacturing process is referred to as the "RHF-SRF process"), bringing the metallization degree of semi-reduced iron obtained in RHF to a specific low level, is significantly advantageous in view of unit requirement of energy consumption and of energy balance. The latter fact is opposite to the conventional recognition; and has been found by the.. inventors of the present invention for the first time.

Thus, the first mode of the method for metal smelting according to the present invention is the method for manufacturing molten iron by the step (A1) in which at least one of the mixture of raw materials selected from the group consisting of (a) through (c) is preliminarily reduced so as the mixture to obtain a specified low level average metallization degree (5 to 55%) in a prereduction furnace such as RHF, and by the step (B1) in which the mixture of raw materials which is preliminarily reduced in the step (A1) is subjected to melt-reduction smelting (or finish smelting = final reduction and melting) in a melting furnace for metal smelting such as SRF for. melt reduction:

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide.

The method for metal smelting of the first mode according to the present invention is described in the following using an example of the case that applies RHF as the prereduction furnace and SRF as the melting furnace for metal smelting, or the RHF-SRF process.

First, general description on RHF which is used in the method for metal smelting according to the present invention is given.

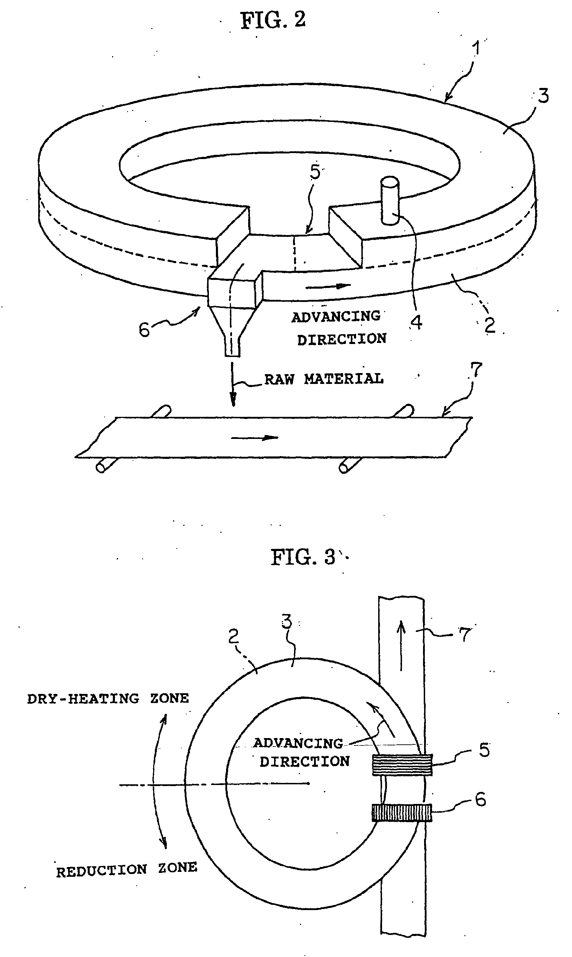

FIG. 2 and FIG. 3 show an example of RHF (conventional type RHF). FIG. 2 is a perspective view, and FIG. 3 illustrates the positions of raw material charge opening and raw material discharge opening on a plane.

A furnace body 1 of RHF contains a ring-shape rotary hearth 2 and a furnace wall 3 that covers the whole rotary hearth to maintain the atmosphere in the furnace. The rotary hearth 2 rotates in the arrow direction. At upper part of the furnace wall 3, combustion burners (not shown) for heating inside the furnace are arranged over the whole periphery thereof at a specified pitch. An intrafurnace gas discharge opening 4 is located on the furnace wall 3.

A raw material charge opening 5 is located at a position on the furnace body 1, and a raw material discharge opening 6 is located at a position close to the raw material charge opening 5, (or a position close to the raw material charge opening and opposite to the hearth rotating direction). The inside area of the furnace from the raw material charge opening 5 to the raw material discharge opening 6 consists of a drying and heating zone and a succeeding reduction zone.

The raw material discharge mechanism (raw material discharge unit) at the raw material discharge opening 6 may be any type. For example, the discharge mechanism is structured by a screw unit crossing the rotary hearth 2, and the screw unit discharges or scrapes out the raw materials from the raw material layer, and also transfers the raw materials to the raw material discharge opening 6 side.

A belt conveyer 7 is located beneath the raw material discharge opening 6 to transfer to discharge the raw materials that completed the preliminary reduction. Instead of the belt conveyer 7, a non-open type transfer vessel (container) may be moved to beneath the raw material discharge opening 6 to receive the discharged raw materials, then to transfer them to SRF. The system minimizes the temperature decrease and the re-oxidization of raw materials between the time of completion of preliminary reduction and the time of charge to SRF.

In that type of RHF, a mixture of raw materials, for example, of iron ore and carbonaceous material, (hereinafter the description is given for the case that the mixture of raw materials is in pellet shape), is charged onto the rotary hearth 2 from above the raw material charge opening 5 using a raw material charge unit (not shown). During the rotation of the rotary hearth 2 in the arrow direction (counterclockwise), the pellets are heated in the furnace which contains high temperature atmosphere of 1,200 to 1,500°C, heated by heating burners (combustion burners) or the like. The pellets are heated in the drying and heating zone, then are further heated in the reduction zone, thus the iron ore that structures the pellets is reduced by the carbonaceous material existing in the pellets to a partially metallized state, then the pellets are discharged to outside of the furnace through the raw material discharge opening 6.

The SRF used in the method for metal smelting according to the present invention may be various types. An example of the SRF is a known SRF that is provided with a furnace body (commonly a furnace body of closed type) holding an iron bath therein, a charge means that charges the preliminarily reduced raw materials and an auxiliary raw material to the furnace, (for example, a chute and a hopper for charging), a lance for blowing oxygen and oxygen-containing gas into the slag bath and the iron bath in the furnace, and a gas-blowing means (for example, a bottom-blowing nozzle) to inject an agitation gas.

To that type of SRF, the raw materials (iron ore and carbonaceous material) and the auxiliary material are charged into the furnace through a charge means, and oxygen and the agitation gas are injected into the furnace through a lance and a gas-blowing means. Then, the carbon in the charged carbonaceous material and the carbon in the molten iron react with the oxygen blown through the lance to generate CO gas. The generated CO gas reacts with the oxygen gas injected through the lance to become $CO_2$ gas. The combustion heat of the carbonaceous material and of the CO melts the iron ore in the molten iron, and also the carbon in the carbonaceous material conducts the final reduction, thus manufacturing the molten iron.

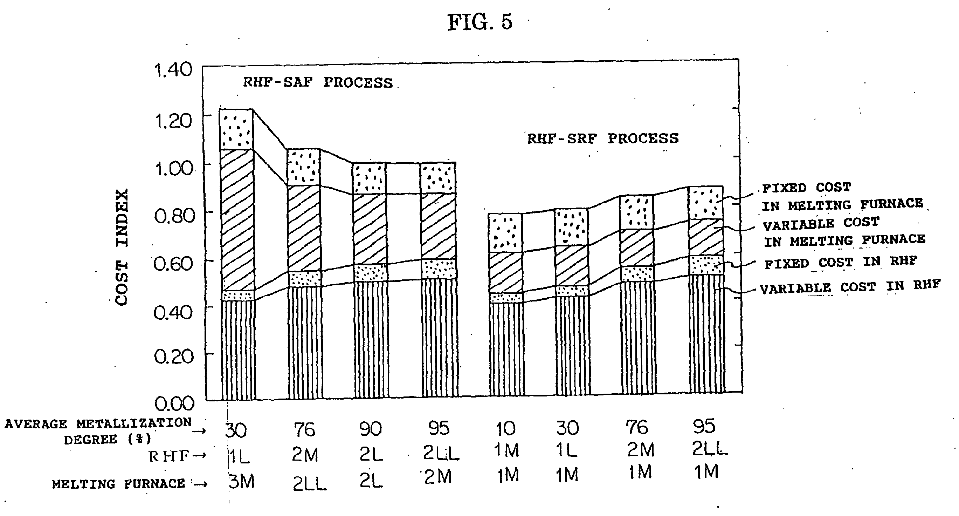

FIG. 4 shows the relation between the average metallization degree of semi-reduced iron manufactured in RHF and the unit requirement of energy necessary for manufacturing molten iron from iron ore, for each of the RHF-SRF process and the RHF-SAF process. As for the calculation of utilities necessary in each process of FIG. 4, all the utilities including electric power are calculated as electric power, and all the electric power is converted to fossil fuel assuming 36% of power generation efficiency.

FIG. 4 indicates that, for the RHF-SAF process which is the conventional technology, higher average metallization degree of semi-reduced iron manufactured in RHF gives less energy consumption in the total system. The cause of the phenomenon is that, in the RHF-SAF process, the energy necessary for final reduction and for melting in SAF is supplied from electric power, so the calculation on the basis of fossil fuel gives very poor energy efficiency, thus the energy efficiency is inferior to that of RHF. Actually, almost all of the operating and planning RFH-SAF process set the average metallization degree of semi-reduced iron in RHF to 80% or more.

On the other hand, in the RHF-SRF process that is a presumption of the present invention, to set the metallization degree of semi-reduced iron manufactured in RHF to lower level decreases the energy consumption in the total system. The cause of the phenomenon is that, in the RHF-SRF process, fossil fuel can be directly used as the energy necessary for final reduction and for melting in SRF so that the energy efficiency drastically increases to give superior energy efficiency to that of RHF. Accordingly, in view of the thermal efficiency, in the RHF-SRF process, it is the best design to keep the average metallization degree of semi-reduced iron manufactured in RHF to low level, and to let the manufactured semi-deduced iron subject to the finish smelting (final reduction and melting) in SRF.

Since the average metallization degree of semi-reduced iron manufactured in RHF can be maintained to a low level, many of the problems that occurred in the Reference arts, or manufacturing semi-reduced iron at high metallization degree in RHF, are solved. That is, as seen in FIG. 1, the retention time of the raw materials in the furnace can be shortened, thus the productivity of semi-reduced iron significantly improves compared with the Reference arts. Furthermore, since no problem occurs even if a part of the raw material layer and pellets in RHF remains unreduced or insufficiently reduced portions, the allowable range of the quality and mixing ratio of mixture of raw materials, the pellet size, the thickness of raw material layer, and the like is wide, and the control level of the mixture of raw materials and of pellets can be lowered. Therefore, the yield of good lumps of pellets and the like improves, and the consumption of binder decreases. In addition, since the metallization degree can be decreased, the thickness of pellet layers on the hearth can be increased, which leads to the decrease in thermal load.

If the mixture of raw materials is in a form of pellets or briquettes, the metallization proceeds mainly on their surface so that they have sufficient strength at elevated temperatures and sustain their shapes. Consequently, on charging them into a high temperature bath of SRF, the direct reduction reaction between the iron ore portion of not-metallized, inside the pellets and the briquettes, and the included carbonaceous material proceeds, thus the improved reaction efficiency and energy efficiency in SRF can be expected.

FIG. 5 shows the relation between the average metallization degree of semi-reduced iron manufactured in RHF and the cost for manufacturing molten iron for the RHF-SRF process and the RHF-SAF process. The cost for manufacturing molten iron is expressed by an index on the basis of the cost at 90% of the average metallization degree of semi-reduced iron in RHF as unity for the cost of manufacturing molten iron in the RHF-SAF process. The horizontal axis is the average metallization degree of semi-reduced iron manufactured in RHF, the scale and the number of units of the RHF and the melting furnace (SAF, SRF) necessary for operating at each metallization degree. Alphabetical 'letters in the horizontal axis expression indicate the scale (LL: very large, L: large, M: medium) of RHF and melting furnace, and numerals attached to respective alphabetical letters indicate the number of units.

According to FIG. 5, for the case of RHF-SAF process, higher level (preferably 90% or more) of the average metallization degree of semi-reduced iron manufactured in RHF gives lower cost for manufacturing molten iron, and, for the case of RHF-SRF process, lower level of the average metallization degree of semi-reduced iron manufactured in RHF gives lower cost for manufacturing molten iron.

The following is the result of investigation on the RHF-SRF process and the RHF-SAF process, focusing on the relation between the average metallization degree of semi-reduced iron manufactured in RHF, the energy balance, and the productivity of the molten iron manufacture process.

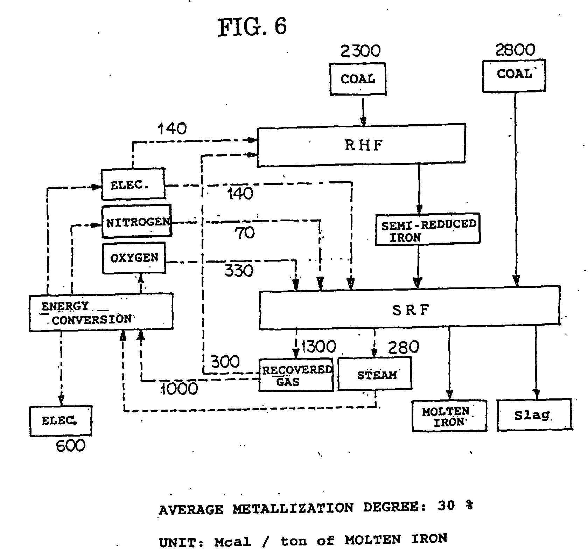

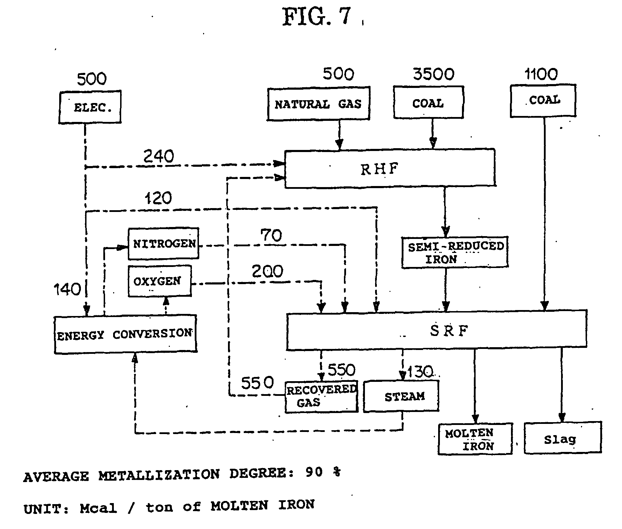

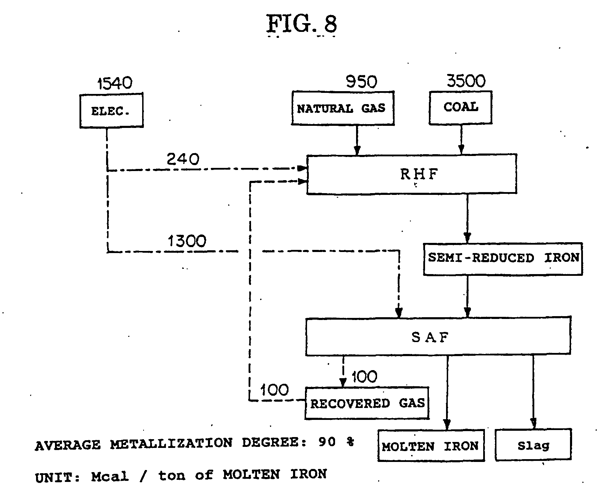

FIG. 6 shows an example of energy balance at an average metallization degree of semi-reduced iron, manufactured in RHF, of 30%, in the RHF-SRF process, (Case 1). FIG. 7 shows an example of energy balance at an average metallization degree of semi-reduced iron, manufactured in RHF, of 90%, in the RHF-SRF process, (Case 2). FIG. 8 shows an example of energy balance at an average metallization degree of semi-reduced iron, manufactured in RHF, of 90%, in the RHF-SAF process, (Case 3).

For each process, the net energy consumption necessary to manufacture 1 ton of molten iron, (or [Total energy supply] - [Total recovered energy]), is 4,5 Gcal for Case 1, 5.6 Gcal for Case 2, and 6.0 Gcal for Case 3. The energy efficiency of Case 1 for the case of low level (30%) of average metallization degree of semi-reduced iron manufactured in RHF for the RHF-SRF process is the best.

Regarding the fuel gas supplied to RHF, for the cases of 90% of average metallization degree of semi-reduced iron manufactured in RHF, or Case 2 and Case 3, only the amount of fuel gas (recovered gas) supplied from the melting furnace (SRF or SAF) to RHF is not sufficient, so an expensive natural gas has to be used. To the contrary, in the Case 1 which uses an average metallization degree of semi-reduced iron, manufactured in RHF, of 30%, the amount of fuel gas supplied from the melting furnace (SRF) is satisfactory.

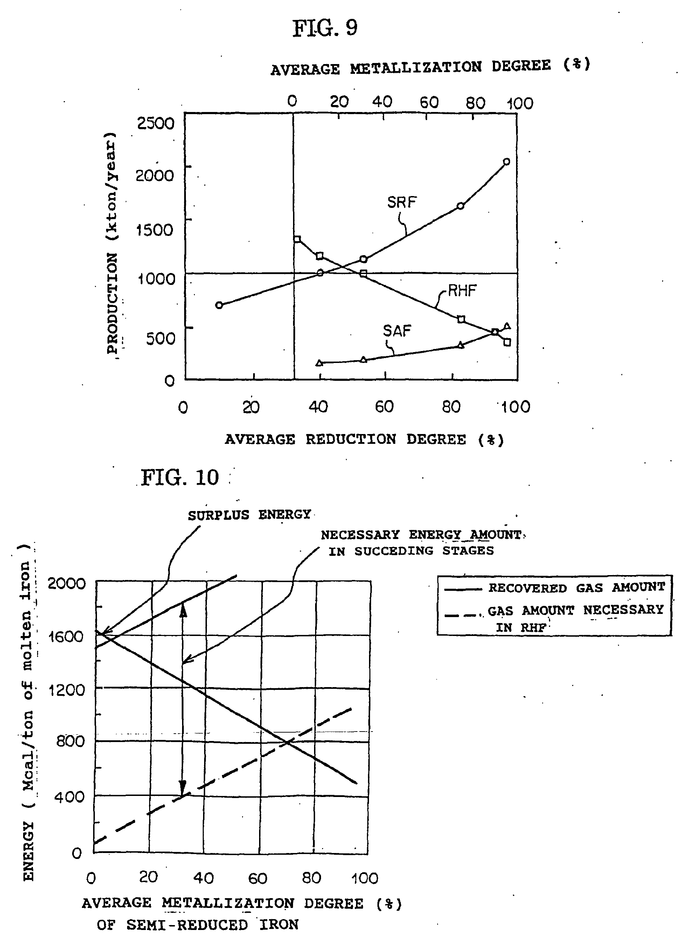

FIG. 9 shows the relation between the average reduction degree of raw materials and average metallization degree of semi-reduced iron in RHF, the production rate of RHF (converted to molten iron), the molten iron production rate of SRF, and the molten iron production rate of SAF. FIG. 9 is an example under the conditions of: iron ore (ore fines) of oxide base containing about 67 wt.% of total Fe (T.Fe); coal containing about 10 wt.% of volatile matter (VM), about 10 wt.% of ash, having about 7,400 . kcal/kg of calorific value as the carbonaceous material; natural gas as the fuel gas for RHF, if the recovered gas of molten furnace is in sufficient for the fuel gas; and pellets prepared by mixing and granulating the ore fines and powder and particle coal as the mixture of raw materials being charged to RHF. As for the apparatus for FIG. 9, the RHF is of the maximum scale existing at present, having about 50 m in diameter and 8 to 10 minutes of rotation cycle, and SRF and SAF are of the maximum scale existing at present, having about 2,000 t/d of production capacity for the SRF, and the SAF is a furnace having about 40,000 KVA of transformer capacity.

When a maximum efficient process combination to give one million tons of annual production capacity while minimizing the number of RHFs and melting furnaces (SRF or SAF) in the molten iron manufacturing process is considered, the result of FIG. 9 suggests the following. That is, according to the figure, decrease in the average metallization degree of semi-reduced iron manufactured in RHF increases the production rate of RHF. However, at a low level of average metallization degree of semi-reduced iron manufactured in RHF, (slightly higher than 20%), the production rate of RHF and SRF comes nearly equal to each other, and the amount of semi-reduced iron supplied from RHF to SRF becomes almost equal to the treating amount of semi-reduced iron in SRF. Therefore, in the case that the RHF-SAF process sets the average metallization degree of semi-reduced iron to a low level as described above, both RHF and SRF secure the necessary production rate only each one unit, and provide efficient material balance.

On the other hand, in the RHF-SAF process, when the average metallization degree of semi-reduced iron manufactured in RHF is low level, the production rate of SAF is extremely low compared with that of RHF, and plurality of SAFs are necessary to be provided to a single unit of RHF. In the RHF-SAF process, the amount of semi-reduced iron supplied from RHF to SAF becomes almost equal with the amount of treating semi-reduced iron in SAF when the average metallization degree of semi-reduced iron manufactured in RHF is 90% or more. In that case, the production rate becomes half or less compared with the case that the average metallization degree of semi-reduced iron in the RHF-SRF process is set to a low level as described above. Consequently, to assure the same level of production rate with the RHF-SRF process, RHF and SAF are necessary to be located more than one for both of them.

Therefore, only the case that the RHF-SRF process is adopted and that the average metallization degree of semi-reduced iron is set to a low level as described above, the molten iron manufacturing process that can manufacture molten iron at a rate necessary in ordinary mini-mills, (or a level of one million tons a year), while minimizing the number of RHFs and melting furnaces is realized.

The following is the description of the reasons to limit the average metallization degree of semi-reduced iron manufactured in RHF.

As described before, from the standpoint of production rate and of facilities of the molten iron manufacturing process, an optimum value of the average metallization degree of semi-reduced iron manufactured in RHF in the RHF-SRF process is suggested as slightly above 20%, (FIG. 9). Nevertheless, the average metallization degree of semi-reduced iron should be determined considering other variables such as the energy consumption and the energy balance in the molten iron manufacturing process.

FIG. 10 shows the relation between the average metallization degree of semi-reduced iron manufactured in RHF, the amount of gas (converted to energy) generated in SRF, the amount of gas (converted to energy) necessary in RHF and in the succeeding stages of steel making plant. The gas amount necessary in the processes after the steel making plant is calculated referring to typical examples of integrated iron making plants in Japan and in the U.S. According to FIG. 10, when the average metallization degree of semi-reduced iron manufactured in RHF is selected to around 70% or more, only the gas amount (energy) generated in SRF cannot satisfy the gas amount (energy) necessary in RHF, and expensive energy such as natural gas energy and oil energy have to be purchased. Accordingly, by decreasing the average metallization degree of semi-reduced iron manufactured in RHF to about 70% or less, the gas amount generated in SRF can satisfy the gas amount necessary in RHF.

If, however, the average metallization degree of semi-reduced iron exceeds 55%, the amount of CO gas generated in SRF by the reduction of unreduced iron oxide relatively decreases, which decreases the amount of CO gas which is effectively used for agitating the molten slag and metal bath in the furnace, thus the mixing and agitation of the bath is suppressed to decrease the heat utilization efficiency of post combustion in SRF. To avoid the phenomenon, the agitation is to be enhanced by increasing the gas injection and the powder injection to compensate the decreased amount of CO gas generation. The countermeasures is, however, not preferable because of the increase in the amount of injection gas. In addition, the decrease in the amount of charged unreduced iron oxide into SRF decreases the amount of indirect reduction (apparently contributes to the stability of post combustion at a high level) of unreduced iron oxide by the CO gas generated in the furnace. Accordingly, to maintain the high post combustion percentage and high heating efficiency, a condition that exceeds 55% of the average metallization degree of semi-reduced iron is unfavorable. Therefore, the average metallization degree of semi-reduced iron manufactured in RHF is necessary to be limited to 55% or less.

If the average metallization degree of semi-reduced iron manufactured in RHF is less than 5%, the gas generated in SRF cannot be completely treated within an integrated iron making plant, and a part thereof is emitted to atmosphere, which is unfavorable in view of effective use of energy and of economy. If the average metallization degree (or the reduction percentage) of semi-reduced iron is extremely decreased, the productivity of SRF decreases, though the productivity of RHF increases, thus the balance of productivity between both processes is lost. If the average metallization degree of semi-reduced iron is less than 5%, the amount of dust in RHF increases. To those points, if the effective use of volatile matter in carbonaceous material included in the raw materials and the zinc recovery at RHF are further taken into account, it has been found that the average metallization degree of semi-reduced iron is preferably 5% or more, and more preferably 10% or more.

With the above-discussed reasons, the present invention specifies the average metallization degree of semi-reduced iron manufactured in a prereduction furnace such as RHF to a range of from 5 to 55%.

According to the method for metal smelting of the present invention, one or more of the mixture of raw materials selected from the group of (a) through (c), described before, is charged to a prereduction furnace such as RHF to conduct the pre-reduction smelting. Accordingly, the mixture of raw materials may be any one of: powder shape of a mixture of at least a carbonaceous material and an iron ore, (a metal oxide and/or a metal hydroxide other than iron ore is described later); granulates of a powder shape mixture of raw materials at least a carbonaceous material and an iron ore into pellet shape; and formed briquettes of a mixture of raw materials of at least a carbonaceous material and an iron ore.

The carbonaceous material may be coal, coke, and powder of carbon-containing material such as oil coke, tar pitch, and plastics, and one or more of them may be applied together.

The carbonaceous material is preferably in a small particle size from the viewpoint of enhancing the reduction reaction. For this purpose, crushing may be applied to the carbonaceous material, at need. However, the crushing of carbonaceous 'material such as coal increases the energy cost, as the degree of crushing of carbonaceous material is preferably limited.

In this regard, it is preferred that the carbonaceous material (mainly coal) used in a molten iron manufacturing process is classified, and that the fine particle ranges are used for the above-described mixture of raw materials, while the coarse particle ranges are used as the carbonaceous material being charged to SRF. With the method, since the mixture or raw materials being preliminarily reduced can use the carbonaceous material of small particles which are favorable in the preliminary reduction, and since SRF can use coarse particles of carbonaceous material, the amount of very fine powder of carbonaceous material that is emitted as dust into the gas generated in SRF can be decreased. The unit for classifying the particles of carbonaceous material may be a vibrating screen unit, an air classification unit, a fluidized bed drier provided with drying and classifying functions, and a paddle drier.

Since the gas generated in SRF contains carbonaceous material as dust, the dust may be recovered from the generated gas to use as a part of the carbonaceous material.

Furthermore, at least a part of the auxiliary material, (in some cases, total amount of auxiliary raw material being charged to the melting furnace), may be charged to RHF. Examples of the auxiliary raw material are limestone, calcium oxide, and dolomite, used for adjusting basicity of slag in SRF. For the case that non-fired auxiliary material is charged, the temperature of atmosphere in RHF, (normally 1,200 to 1,500°C), can be used for firing the auxiliary material, so the exclusive-use firing furnace for the auxiliary material can be eliminated.

The auxiliary material may be charged to as a part of the mixture of raw materials containing carbonaceous material and iron ore, (or a mixture of raw materials prepared by mixing and granulating, or mixing and molding at least the carbonaceous material and the iron ore), or may be charged to RHF without mixing thereof with the mixture of raw materials containing carbonaceous material and iron ore.

The flue gas coming from a prereduction furnace such as RHF is at high temperatures (900 to 1,300°C) and contains relatively large amount of sulfur, (when coal is mixed to the raw material mixture as the carbonaceous material, about 30% of the sulfur content in coal migrates to the flue gas of RHF). When, however, an auxiliary raw material such as limestone and dolomite is charged to RHF to fire, the CaO and other substances in the raw material act as a desulfurization agent to the flue gas of RHF, thus providing a desulfurization effect to the flue gas of RHF.

As described before relating to the carbonaceous material, the dust existing in the gas generated in SRF may be recovered to mix thereof in the mixture of raw materials.

Since less free-water in the mixture of raw materials being charged to RHF further improves the productivity of RHF and decreases the unit requirement of energy, it is preferable to sufficiently dry the mixture of raw materials before charging to RHF.

Therefore, the mixture of raw materials (particularly pellets and briquettes) are preferably subjected to preliminary drying. For the preliminary drying, the use of sensible heat and latent heat of the flue gas coming from RHF and/or the gas generated in SRF further improves the energy efficiency of the total process.

After the mixture of raw materials is preliminarily reduced and smelted in RHF, and after the iron ore in the mixture of raw materials becomes semi-reduced iron having a specified level of average metallization degree, the mixture of the raw materials is charged to SRF, where the finish smelting is conducted for final reduction and melting.

After preliminarily reduced in RHF, the mixture of raw materials is preferably charged to SRF while preventing the temperature decrease and the re-oxidization as far as possible. To do this, it is preferred that the high temperature mixture of raw materials that was preliminarily reduced in RHF and was discharged therefrom is stored in a non-open type vessel, then the mixture of raw material is transferred to SRF while keeping the temperature thereof to 600°C or more, or that the high temperature mixture of raw materials that was discharged from RHF is stored in a pneumatic conveyer unit, then is pneumatically sent to SRF using a non-oxidizing gas (for example, one or more of the gas selected from the group consisting of $N_2$, Ar, $CO_2$, process gas such as SRF generated gas and RHF discharged gas; which gases do not substantially re-oxidize the mixture of raw materials that was preliminarily reduced within a temperature range of pneumatically conveying the pre-reduced mixture of raw materials, in a range of from about 600°C to about 1,000°C), and is charged to SRF. The above-described non-open type vessel may be any kind if only the vessel avoids the contact of the preliminarily reduced mixture of raw materials with air, and the re-oxidization of iron ore in the mixture of raw materials does not substantially occur. For that purpose, the closed type vessel is most favorable. Nevertheless, a vessel that has holes and gaps connected to outer air to some extent may be applicable.

In this manner, the preliminarily reduced mixture of raw materials is transferred to SRF while minimizing the temperature decrease and the re-oxidization using a non-open type vessel and a pneumatic conveying unit, and is charged into the SRF, thus successfully minimizing the energy loss caused by the temperature decrease and re-oxidization of the preliminarily reduced mixture of raw materials.

In SRF, the carbonaceous material is used as the reducing agent, and the combustion heat of the carbonaceous material and the combustion heat of carbon monoxide generated in the furnace are used as the heat source to conduct melting and final reduction, thus manufacturing the molten iron.

In this procedure, it is preferred that the generated gas is positively combusted as the post combustion in the furnace to improve the unit requirement of oxygen and of coal. To do this, the post combustion percentage of the gas generated in SRF, $((CO_2 + H_2O)/(CO + CO_2 + H_2 + H_2O))$, is preferably reached to 20% or more. The post combustion percentage in SRF can be controlled to an arbitrary level by controlling the oxygen amount that does not contact with the molten iron and the carbonaceous material. Consequently, for example, by adequately selecting the injection mode of oxygen in SRF, the amount of oxygen that does not contact with the molten iron and the carbonaceous material is secured to a sufficient level, thus attaining high post combustion percentage.

On the other hand, the high temperature mixture of raw materials that was preliminarily reduced is likely re-oxidized. And, in the case that the high temperature mixture of raw materials is charged to SRF giving high concentration of $CO_2$ and $H_2O$ in the generated gas, (particularly to SRF giving 20% or higher post combustion percentage of the generated gas), there occurs a problem that a part of the mixture of raw materials is re-oxidized before reaching thereof to the bath surface owing to the contact thereof with the generated gas, ($CO_2 + Fe \rightarrow FeO + CO$, $H_2O + Fe = FeO + H_2$), which causes the degradation in the unit requirement in SRF.

The degree of re-oxidization of the mixture of raw materials charged to SRF depends on the concentration of CO, $CO_2$, $H_2$, and $H_2O$ in the gas generated in SRF. In particular, higher concentration of $CO_2$ and $H_2O$ induces re-oxidization more likely. Therefore, for the same target to decrease the unit requirement of oxygen and of coal in SRF, the increase in post combustion percentage in the furnace and the prevention of re-oxidization of the mixture of raw materials charged to SRF give counter effect to each other.

Contrary to the Reference arts described before, or conducting reduction of the mixture of raw materials to high metallization degree (90% or more), the present invention sets the metallization degree of mixture of raw materials after the preliminary reduction to a low level (5 to 55% of average metallization degree), so the influence of the re-oxidization is significantly small compared with that in the Reference arts even when the mixture of raw materials is re-oxidized on being charged to SRF. For example, when the mixture of raw materials (pellets) is reduced to an average metallization degree of 95% in the Reference arts, the average metallization degree decreases to 70% or less by re-oxidizing the portion of the surface layer of the pellets having a size of 10 mm in diameter only to a thickness of 0.5 mm. According to the present invention, however, when, for example, the mixture of raw materials (pellets) is reduced to an average metallization degree of 40%, the average metallization degree decreases only to around 30% even after the portion of the surface layer of pellets having a size of 10 mm in diameter is re-oxidized to a thickness of 0.5 mm. Therefore, the influence of re-oxidization is far less than that in the Reference arts.

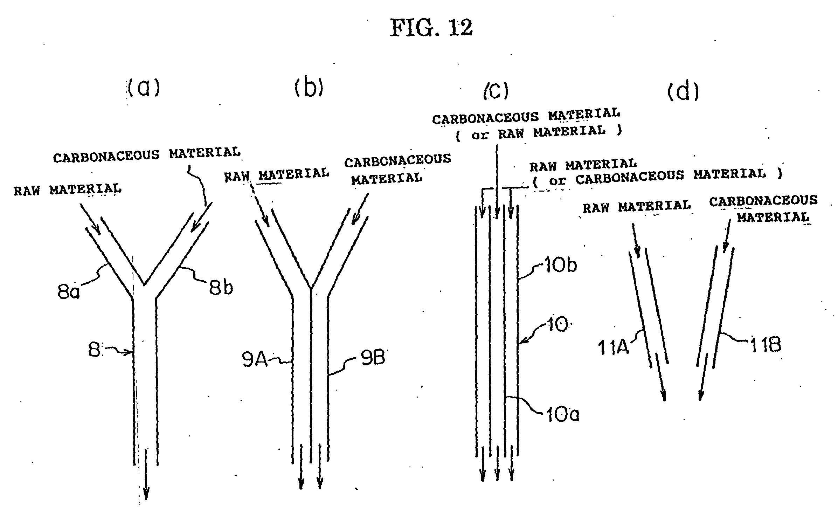

The pellets which were preliminarily reduced in a prereduction furnace were exposed to a high temperature atmosphere having a specified level of gas oxidization degree ($(CO_2 + H_2O)/(CO + CO_2 + H_2 + H_2O)$), which atmosphere simulates the atmosphere in SRF, to investigate the degree of re-oxidization. During the test, the pellets that completed the preliminary reduction were those having 30% and 90% of the average metallization degree, respectively. Each group of these pellets was exposed to an atmosphere of 0 to 50% of gas oxidization degree and 1,500°C of temperature for a specified period of time, then the degree of re-oxidization for each group was determined. FIG. 11 shows the result. The figure indicates that the re-oxidization (reduction in the metallization degree) of pellets appears from around 20% of gas oxidization degree, and the magnitude of the re-oxidization is significantly large for the pellets of 90% of average metallization degree compared with the pellets of 30% of average metallization degree, further the tendency strengthens at higher level of gas oxidization degree. For the pellets of 30% of average metallization degree, the magnitude of re-oxidization is far small compared with that of the pellets of 90% of average metallization degree, though the re-oxidization is identified from around 20% of the gas oxidization degree.

Consequently, according to the present invention, the degradation of unit requirement in SRF caused by the re-oxidization of mixture of raw materials can be limited to a minimum degree even the SRF is operated under the condition of 20% or higher post combustion percentage which is preferred in view of operation.

The amount of gas generated in SRF relates to the amount of carbonaceous material being charged to SRF. Accordingly, to generate gas from SRF in a stable state, stable supply of carbonaceous material to SRF is preferred separately from the carbonaceous material that is mixed with the mixture of raw materials. To do this, it is preferable that a carbonaceous material (mainly coal) is charged to SRF through an adequate charge means, separately from the carbonaceous material existing in the mixture of raw materials. For SAF in the above-described RHF-SAF process, the charge of carbonaceous material is almost unnecessary, and, if needed, the process adopts a method of simultaneous charge of small amount of coke by preliminarily mixing with the mixture of raw materials coming from RHF.

Considering the stable charge of carbonaceous material to the furnace, the durability of the charge unit, the charge efficiency of carbonaceous material (reducing agent) to a region conducting final reduction, (in the vicinity of interface between the slag and the molten iron), it is preferred that the carbonaceous material is introduced to an upper level than the interface between the molten iron and the slag. Examples of the method for charging the carbonaceous material to an upper level than the interface between the molten iron and the slag are: placing the carbonaceous material on layer (what is called the "gravity-dropping method"), charging the carbonaceous material from upper part of the furnace accelerating thereof by a booster ("pouring charge method"). and charging the carbonaceous material through lance ("injection method"). If an immersion nozzle is used in the injection method using a lance; the front end of the nozzle of lance is preferably positioned above the interface between the molten iron and the slag.

For the case that a carbonaceous material (in this case, particularly coal) is charged to SRF separately from the carbonaceous material being mixed with the mixture of raw materials, it is particularly preferred to adopt a method described below.

As described before, the high temperature mixture of raw materials that was preliminarily reduced is likely re-oxidized by the contact with the generated gas during a period of from being charged to SRF and reaching the bath surface. To minimize the re-oxidization, it is preferred that the high temperature mixture of raw materials which was preliminarily reduced is charged to SRF together with the carbonaceous material, and that they fall down in the furnace in a state that at least a part (preferably total amount) of the charged mixture of raw materials and of the charged carbonaceous material are in a mixed condition to reach the bath surface. With that type of method, the re-oxidization of the mixture of raw materials caused by the gas generated in SRF is prevented owing to the actions described below.

(1) The mixture of raw materials charged in the furnace falls down through the furnace while individual materials are covered with the carbonaceous material, so the opportunity of direct contact between the mixture of raw materials with the generated gas decreases.

(2) During the passage of the high temperature mixture of raw materials and the carbonaceous material falling down through the furnace in a mixed state to each other, the volatile matter in the carbonaceous material (coal) is gasified by the sensible heat of the mixture of raw materials. The volatile matter gas covers individual raw materials to decrease the opportunity of direct contact between the mixture of raw materials with the generated gas decreases.

(3) The carbonaceous material and the volatile matter gas (carbon content of the gas) generated from the carbonaceous material reduce the $CO_2$ around the mixture of raw materials to CO, so the opportunity of re-oxidization of the mixture of raw materials by $CO_2$ decreases.

(4) Even when the mixture of raw materials is re-oxidized, the volatile matter gas (the carbon content and hydrogen content of the gas) generated from the carbonaceous material, as described above, re-oxidizes the mixture or raw materials.

The method is particularly effective in the case that the mixture of raw materials that was preliminarily reduced is particularly likely re-oxidized, or in concrete terms, the case that the mixture of raw materials is charged to SRF at high temperatures of 400°C or more, and that the post combustion percentage of the gas generated in SRF is 20% or more. According to the method, the carbonaceous material and the mixture of raw materials are charged to the bath in a state that both are close or contact to each other, so the carbonaceous material gives similar effect as that of the residual carbon (carbonaceous material) in the mixture of raw materials.

FIG. 12 (a) through (d) show examples of charging method for the mixed raw materials and the carbonaceous material charged to SRF to fall down through the furnace in a state of mixing to each other. FIG. 12(a) shows a method for charging the mixture of raw materials and the carbonaceous material through a single charge pipe 8 which gathers a raw material charge pipe 8a and a carbonaceous material charge pipe 8b. FIG. 12(b) shows a method for charging the mixture of raw materials and the carbonaceous material through a raw material charge pipe 9A and a carbonaceous material charge pipe 9B, arranged in parallel to each other. FIG. 12(c) shows a method for charging respective mixture of raw materials and carbonaceous material through a double tube type charge pipe 10, wherein either one of the mixture of raw materials and the carbonaceous material is introduced to an inner pipe 10a, while other is introduced to an annular pass formed between the inner pipe 10a and outer pipe 10b. FIG. 12(d) shows a method for charging the mixture of raw materials and the carbonaceous material, each of them is introduced separately to respective raw material charge pipe 11A and carbonaceous material charge pipe 11B, while they are gathered during falling down through the furnace. Either one of these methods can be applied. Alternatively, other method from those given above may be applied.

The charging position (charge position on the slag bas surface) of the raw materials (mixture or raw materials or mixture of raw materials + carbonaceous material) in SRF preferably avoids a bath surface region which forms oxidizing atmosphere by a supporting gas jet, (hereinafter referred to as the "oxidizing atmosphere region"), avoids a bath surface region where an ascending flow is formed at the slag bath section, (hereinafter referred to as the "ascending flow region"), and selects a bath surface region where a descending flow is formed at slag bath section, (hereinafter referred to as the "descending flow region"). When the position of raw material charge is selected in the oxidizing atmosphere region or the ascending flow region, the ore which was reduced in RHF to a specified level of metallization degree may be re-oxidized under the influence of surrounding oxidizing atmosphere. Responding to the phenomenon, if the position of charging the raw materials is selected to the descending flow region, the re-oxidization of ore which was preliminarily reduced is adequately prevented because the charged raw materials are immediately caught by the descending flow in the slag bath section to enter the bath, thus the reduction reaction of ore (semi-reduced iron) by the residual carbon in the mixture of raw materials in SRF and by the separately charged carbonaceous

EP 1 253 207 A1

material rapidly proceeds to efficiently improve the productivity of SRF. According to that kind of charging method, both for the case that the density of charged raw materials is larger than that of the slag and the case that the density of the raw materials is almost the same as or slightly smaller than that of the slag, the raw materials descend while being entrained by the descending flow of the slag bath section, so the.phenomenon is effective in the improvement of yield of raw materials, in the suppression of the re-oxidization, and in the enhancement of the reduction. To conduct that type of raw material charge, it is preferable to adequately adjust the position of charge chute and the method of charging. The raw . material charge referred herein includes the case of placing-on-layer method (charging by free fall) and the case of injection charge through lance.

If the top-blowing of the support oxygen (or an oxygen-containing gas) is carried out using a top-blowing lance against the bath surface, generally the above-described descending flow region exists at furnace wall side distant by 1.5 m or more from the center of the top-blowing lance in the furnace radial direction, and the region width is determined by the acid-feeding condition of the top-blowing lance. Accordingly, to charge the raw materials to the descending flow region, the center of the raw material charge position (the dropping position on the bath surface) is preferably selected to 1.5 m or more from the center of top-blowing lance in the furnace radial direction to the furnace wall side, more preferably 2 m or more, and most preferably 2.5 m or more.

When the gas (agitation gas) is injected in the bath from the bottom-blowing tuyere, generally the upward widening angle of the gas (and accompanied ascending flow) injected from the bottom-blowing tuyere is around 5° from the center of the tuyere. Accordingly, the gas ascends with the widening angle to the slag bath surface (normally heights of 2 to 3 m from the furnace bottom), and the region of gas widening up to the slag bath surface should be the ascending region. Consequently, it is preferable for the center of the raw material charge position (the dropping position on the bath surface) to avoid the above-described gas widening region at heights of about 2 m or more from the furnace bottom. preferably about 3 m of height.

When the powder or the gas is injected in the bath from a blowing tuyere located on a furnace side wall, the widening angle of the gas or the powder injected from the tuyere into the . furnace is around 5° from the center of the tuyere, and the ascending flow is expectedly formed in a region within at least 1.5m from the tuyere in the furnace radial direction. Therefore, the center of the raw material charge (the dropping position on the bath surface) preferably avoids a range within 1.5 m from the tuyere in the furnace radial direction, more preferably within 2 m, and most preferably within 2.5 m.

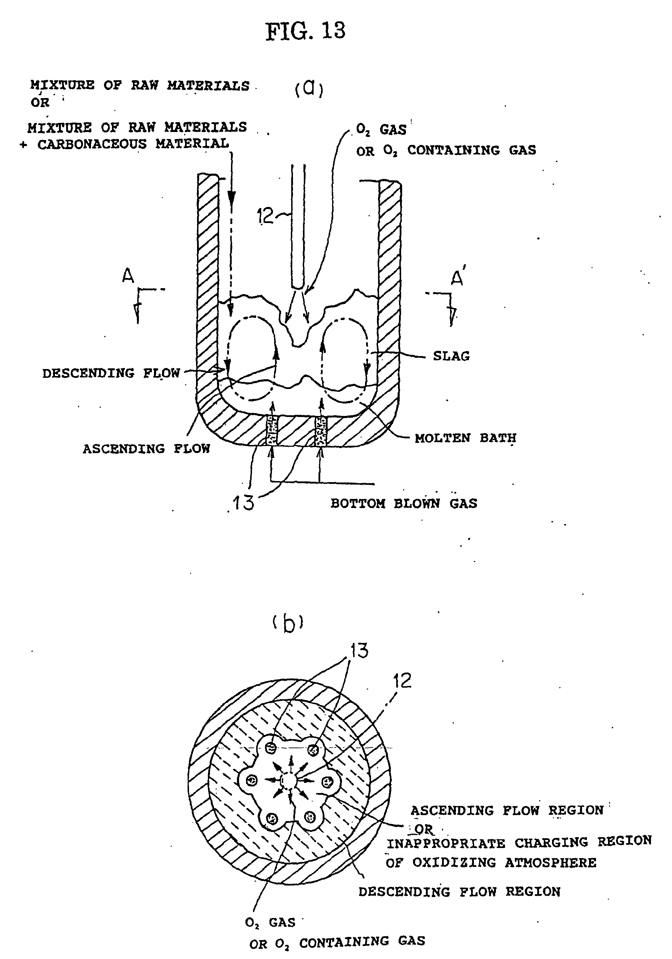

FIG. 13 through FIG. 15 show the modes for carrying out the raw material charge to the descending flow region.

FIG. 13 shows an SRF in which the support oxygen (or oxygen-containing gas) is injected from the top-blowing lance 12 onto the bath surface, and the bottom-blowing gas (normally an agitation gas such as nitrogen gas) is injected into the bath from the bottom-blowing tuyere 13 at bottom of the furnace. FIG. 13(a) shows a schematic longitudinal cross section of the melting furnace. FIG. 13(b) shows a schematic longitudinal cross section of FIG. 13(a) along A-A' line. For that type of SRF, the section hatched by broken line in FIG. 13(b) becomes the descending flow region, and other section becomes the oxidizing atmosphere region or the ascending flow region. Therefore, in this case, the raw materials are preferably charged to the descending flow region given by the section hatched by broken line in FIG. 13(b).

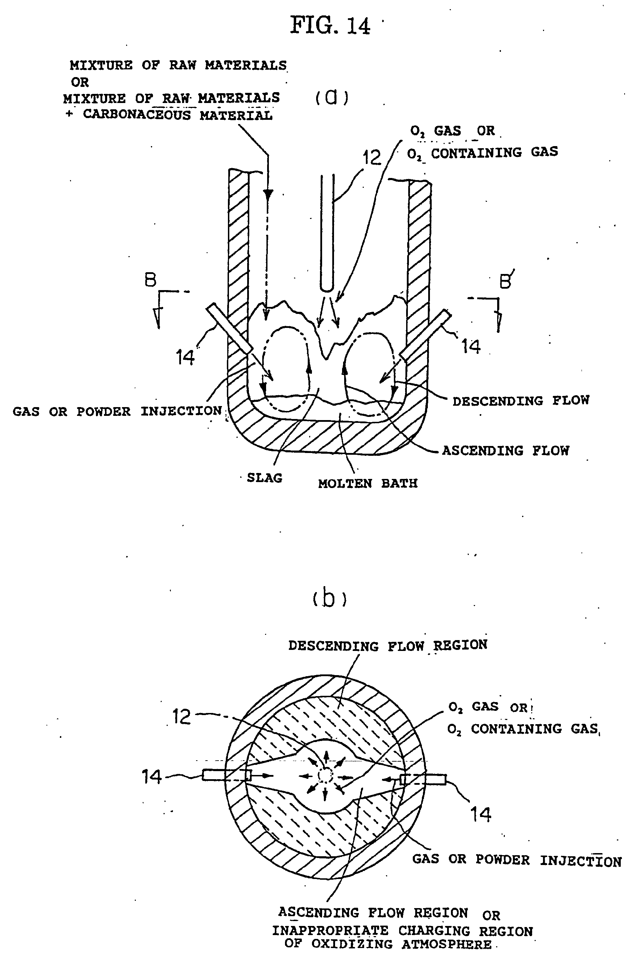

FIG. 14 shows an SRF in which the support oxygen (or oxygen-containing gas) is injected from the top-blowing lance 12 onto the bath surface, and the gas (normally an agitation gas such as nitrogen gas) and the powder are injected into the bath from respective tuyeres 14 on a furnace side wall. FIG. 14(a) shows a schematic longitudinal cross section of the melting furnace. FIG. 14(b) shows a schematic longitudinal cross section of FIG. 14(a) along B-B' line. For that type of SRF, the section hatched by broken line in FIG. 14(b) becomes the descending flow region, and other section becomes the oxidizing atmosphere region or the ascending flow region. Therefore, in this case, the raw materials are preferably charged to the descending flow region given by the section hatched by broken line in FIG. 14(b).

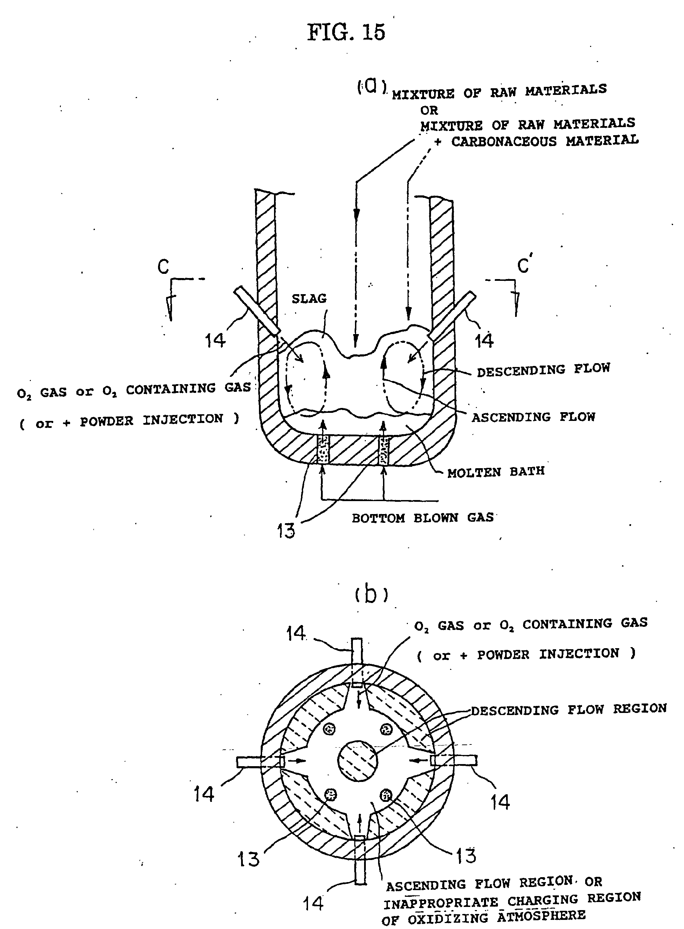

FIG. 15 shows an SRF in which the support oxygen (or oxygen-containing gas) is injected from a tuyere on the furnace side wall, and the powder is injected into the bath, further the bottom-blowing gas (normally an agitation gas such as nitrogen gas) is injected into the bath from the bottom-blowing tuyere 13 at bottom of the furnace. FIG. 15(a) shows a schematic longitudinal cross section of the melting furnace. FIG. 15(b) shows a schematic longitudinal cross section of FIG. 15(a) along C-C' line. For that type of SRF, the section hatched by broken line in FIG. 15(b) becomes the descending flow region, and other' section becomes the oxidizing atmosphere region or the ascending flow region. Therefore, in this case, the raw materials are preferably charged to the descending flow region given by the section hatched by broken line in FIG. 15(b).

The above-described modes for raw material charging to SRF (melting furnace), (or the raw material charge modes described using the examples of FIG. 13 through FIG. 15), are particularly useful in the method for metal smelting of the first mode according to the present invention, and also in the method for metal smelting of the second mode according to the present invention, (the latter is described later). That is, the method for metal smelting of the first mode according to the present invention is a method for metal smelting conducts reduction of iron ore (iron ore in a mixture of raw materials) to a specified level of metallization degree (5 to 55% of average metallization degree) in a prereduction furnace, followed by conducting melting and final reduction in a melting furnace. The method for metal

24

smelting of the second mode according to the present invention is a method for metal smelting that conducts reduction of iron ore (iron ore in a mixture of raw materials) to a specified level of' metallization degree (more than 5% of average metallization degree), then the iron ore is charged to a melting furnace together with an iron ore which was not preliminarily reduced and an iron ore which is at a low preliminary reduction rate, to attain a specified level of the metallization degree as total, (5 to 55% of the average metallization degree), followed by conducting melting and final reduction in a melting furnace. By adopting the above-described raw material charge modes in these methods for metal smelting, an iron ore which was preliminarily reduced to a relatively low metallization degree can be efficiently melted and finally reduced while preventing the re-oxidization thereof.

The above-described raw material charge modes are applicable to wide varieties of methods for metal smelting other than the methods for metal smelting of the first mode and the second mode according to the present invention, that is, for the kinds of the method for metal smelting containing the steps of:

(A) preliminarily reducing a mixture of one or more of raw materials selected from the group consisting of following-given (a) through (c) in a prereduction furnace;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof into a melting furnace for metal smelting to convert the carbonaceous material into the reducing agent therein, and by using the combustion heat of the carbonaceous material and the combustion heat of the carbon monoxide generated in the melting furnace as the main heat source. Accordingly, the mode can be applied to the step (B) in the methods for metal smelting (I) through (VI), described later.

The combustion gas (fuel gas) supplied to RHF is preferably a gas generated in SRF. With the use of generated gas, the energy balance in the molten iron manufacturing process is maintained to a favorable level. In this case, the gas generated in SRF is supplied to RHF as the main fuel gas or a part of the fuel gas (that is, as an auxiliary fuel gas). For the latter case, the gas is used together with other fuel gas such as natural gas.

Although the gas generated in SRF has sufficient calorific value and volume for using as the combustion gas for RHF, the calorific value is less than that of natural gas.

To use the gas generated in SRF as the combustion gas in RHF, the gas is preferably subjected by dust-removal treatment (normally washing treatment is also applied). During the dust removal treatment, the gas temperature decreases to below 300°C, generally near to normal temperature. As a result, the generated gas is preferably preheated to 200°C or above, more preferably 300°C or above, and most preferably 500°C or above before entering the RHF.

The preheating of the gas generated in SRF by the sensible heat of flue gas coming from RHF and/or the sensible heat of flue gas obtained by combusting a part of the gas generated in SRF allows more effective using of the energy in the process.

Also the support oxygen-containing gas (air or oxygen-rich air) to be introduced to RHF is preferably preheated (preferably to 200°C or above, more preferably 300°C or above', and most preferably 500°C or above) before introducing to RHF. The preheat of-the support oxygen-containing gas can also use the sensible heat of flue gas coming from RHF and/or the sensible heat of flue gas obtained by combusting a part of the gas generated in SRF, which allows more effective using of the energy in the process.

When the gas (s) generated in SRF and the support oxygen-containing gas (o) are preheated in a heat exchanger (heating unit) using the sensible heat of the flue gas coming from RHF, it is preferable that the flue gas coming from RHF, which gas is generally at high temperature of 1,000°C or above, at which temperature the corrosion of the heat exchanger caused by the corrosive components does not proceed, is cooled to an adequate temperature level before introducing to the heat exchanger, thus increasing the durability of the heat exchanger by preventing the corrosion thereof caused by the corrosive components such as Na, K, Cl, and SOx existing in the flue gas coming from RHF. In concrete terms, the temperature of the flue gas coming from RFH on entering the heat exchanger is preferably at a level that the preheating temperature of the SRF generated gas (s) and of the support oxygen-containing gas (o) becomes lower than 500°C (more preferably lower than 450°C). On the other hand, the preheating temperature of the SRF generated gas (s) and of the support oxygen-containing gas (o) is preferably high in view of energy efficiency and of unit requirement of gas in RHF.

When the gas (s) generated from SRF and the support oxygen-containing gas (o), which become below 300°C after discharged from SRF, is preheated by the sensible heat of flue gas coming from RHF, the following procedure is preferred.

(i) The above-described generated gas (s) and/or support oxygen-containing gas (o) is preheated by the sensible heat of the flue gas coming from RHF in a first heat exchanger to raise the temperature to lower than 500°C (preferably 200°C or above, more preferably 300°C or above).
(ii) Succeedingly, the SRF generated gas (s) and/or the support oxygen-containing gas (o) is preheated by the sensible heat generated by combusting the flue gas that was obtained by combusting a part of the generated gas (s) and/or the sensible heat generated by combusting other fuel (for example, clean fuel such as natural gas) in a second heat exchanger to further raise the temperature (preferably to 500°C or above).

To preheat the SRF generated gas (s) and/or the support oxygen-containing gas (o) in the above-described step (i) to raise the temperature thereof to below 500°C, the flue gas coming from RHF is cooled to a temperature level suitable for the preheating temperature, (for example, around 550°C), before introduced to the first heat exchanger. Owing to the preheating, the corrosion caused by the corrosive components such as Na, K, Cl, and SOx existing in the flue gas coming from RHF is prevented, thus increasing the durability of the heat exchanger.
In the above-described step (ii), the flue gas obtained by combusting a part of the generated gas (s) and by combusting other fuel (for example, clean fuel such as natural gas) is a clean gas containing no corrosive component such as Na, K, Cl, and SOx. Accordingly, when the flue gas is introduced to the second heat exchanger at a high gas temperature (for example, around 800°C) to conduct heat exchange with the generated gas (s) and/or the support oxygen-containing gas (o), there occurs no problem of corrosion of heat exchanger caused by the corrosive components.
In the above-described step (ii), when the flue gas obtained by combusting a fuel other than the generated gas (s) is used as the heating medium for preheating, the fuel may be an industrial fuel such as natural gas, industrial propane, kerosene, and gasoline.
Consequently, the gas (s) generated in SRF and the support oxygen-containing gas (o) can be preheated to a specified temperature (preferably 500°C or above) using the sensible heat of the flue gas coming from RHF, while assuring the durability of the heat exchanger, and the preheated gas can be supplied to RHF.
The following is the description on the significance of using the gas generated in SRF as the combustion gas in RHF in the method for metal smelting according to the present invention, comparing with the Reference arts.
Generally, RHF contains a drying and heating zone and a succeeding reduction zone for the mixture of raw materials, (refer to FIG. 3). In Reference arts that conduct reduction of the mixture of raw materials to a high metallization rate (90% or more), the concentration of $CO_2$ and of $H_2O$ in the atmosphere of the reduction zone is required to be maintained to a certain level or below. Accordingly, when the gas generated in SRF, particularly a generated gas having high post combustion percentage (that is, a generated gas having high concentration of $CO_2$ and $H_2O$), is used, there arises a problem of incapable of reduction of the mixture of raw material to a sufficiently high level. As a result, the use of gas generated in SRF as the combustion gas for RHF is actually impossible.
To the contrary, according to the method for metal smelting of the present invention, the metallization degree of the mixture of raw materials after the preliminary reduction is set to a low level (5 to 55% of the average metallization degree), so some degree of oxidization of the mixture of raw materials in the reduction zone raises no problems, (as described later, the oxidization to some degree is rather preferred in some cases). That is, in Reference arts, when the mixture of raw materials is reduced to an average metallization degree of 95%, the introduction of SRF generated gas, having relatively high post combustion percentage, into the reduction zone decreases the average metallization degree to 70% or less under the re-oxidization of, for example, 0.5 mm thickness portion of the surface layer of pellets having a size of 10 mm in diameter, thus it is difficult to attain a high metallization degree targeted by the Reference arts. On the other hand, according to the method for metal smelting of the present invention, when the mixture of raw materials is reduced to an average metallization degree of 40%, the introduction of an SRF generated gas having relatively high post combustion percentage into the reduction zone assures about 30% of the average metallization degree under the re-oxidization of, for example, 0.5 mm thickness portion of the surface layer of pellets having a size of 10 mm in diameter, thus the average metallization rate targeted by the present invention is achieved inducing no problem. Therefore, according to the present invention, the gas generated in SRF, even when the gas has 20% or higher post combustion percentage, can be used as the combustion gas for RHF without inducing problem.
On conducting preliminary reduction of a mixture of raw materials in RHF in the method for metal smelting according to the present invention, it is preferred that the mixture of raw materials is reduced in the reduction zone and that an oxide layer is formed on the surface layer of the particles of the mixture of raw materials. By forming the oxide layer on the surface layer of the mixture of raw materials in RHF, there occurs no further oxidization of the mixture of raw materials between the time of exiting thereof from RHF and the time of melting thereof in SRF, thus preventing the energy loss in RHF caused by re-oxidization of the mixture of raw materials discharged from RHF. That is, when a mixture of raw materials that was preliminarily reduced to a specified average metallization degree is re-oxidized between the time of exiting thereof from RHF and the time of melting thereof in SRF, the energy corresponding to the amount of re-oxidized raw materials is lost in the reduction action. However, by reducing the inside portion of particle to a specified level of metallization degree to establish a specified (targeted) average metallization degree as the total raw material particles, while forming an oxide layer on the surface layer of the mixture of raw materials in RHF, the re-oxidization of the mixture of raw materials after exited RHF is prevented to eliminate loss of energy necessary for reduction in RHF, thus melting the mixture of raw materials at a specified average metallization degree in SRF.

To form an oxide layer on the surface layer of the mixture of raw materials in RHF, it is effective so as the gas oxidization degree $((CO_2 + H_2O)/(CO + CO_2 + H_2 + H_2O))$ of the atmosphere of furnace in a part or total of the reduction zone in RHF to 30% or more. The mixture of raw materials in RHF islikely re-oxidized in a higher concentration of $CO_2$ and $H_2O$ in the intrafurnace atmosphere. By adjusting the gas oxidization degree in apart or total of the atmosphere of furnace to 30% or more, the oxide layer can easily be formed on the surface layer of the particles of mixture of raw materials. The reduction of the mixture of raw materials in the reduction zone begins from the surface layer of the raw material particles, and proceeds to inside of particle. If, however, the gas oxidizing degree of the intrafurnace atmosphere is high, the surface layer of raw material particle which was once reduced is re-oxidized to form the oxide layer on the surface layer.

To raise the gas oxidization degree of the intrafurnace atmosphere in a part or total region of the reduction zone of RHF to 30% or more, for the case of, for example, introduction of gas generated in SRF to RHF as the combustion gas, it is advantageous that the gas generated in SRF reaches a high post combustion percentage (preferably 20% or higher post combustion percentage), and the generated gas is introduced to the reduction zone. In any case, it is effective to raise the air ratio of combustion burner mounted in the reduction zone.

In the method for metal smelting according to the present invention, the oxide layer is formed on the surface layer of the mixture of raw materials being preliminarily reduced owing to the low set level of the average metallization degree of the mixture of raw materials after the preliminary reduction. To the contrary, for the case of reduction of the mixture of raw materials to a high metallization degree, as in the case of Reference arts, the average metallization degree significantly decreases only by forming a very thin oxide layer on the surface layer, as described before, so that the formation of an oxide-layer is substantially impossible.

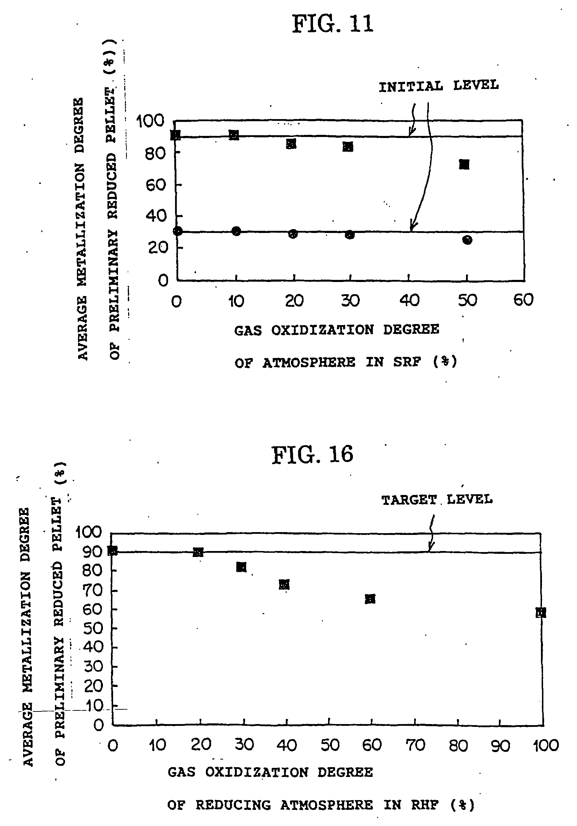

FIG. 16 shows a result of observed average metallization degree, which result was obtained in a preliminary reduction test furnace by conducting preliminary reduction of a mixture of raw materials (pellets) in varied atmospheres in the reduction zone. During the tests, the composition of the raw material pellets, the intrafurnace temperature, and the rotational speed were fixed, and the atmosphere in the furnace was varied based on the gas oxidization degree as the index. According to FIG. 16, at gas oxidization degrees of the atmosphere in the reduction zone of 20% or less, the preliminarily reduced pellets having an average metallization degree of 90% were manufactured. However, at the gas oxidization degree of 30% or more, the average metallization degree of the preliminarily reduced pellets decreases, and the manufacture of the preliminarily reduced pellets having an average metallization degree e of 90% is almost impossible.

As described above, for reducing a mixture of raw materials to a high metallization degree, as in the case of Reference arts, it is necessary to decrease the gas oxidization degree ($CO_2$ and $H_2O$ concentrations) of the intrafurnace atmosphere as far as possible to minimize the oxidization in RHF. As a result, large amount of unburned gas is formed in RHF, and the unburned gas is not completely consumed even in the drying and heating zone, so the gas has to be combusted outside the furnace. On the other hand, according to the method for metal smelting of the present invention, the gas oxidization degree in RHF is set to a high level, thus the formed amount of unburned gas is minimized, which decreases the energy necessary in RHF.

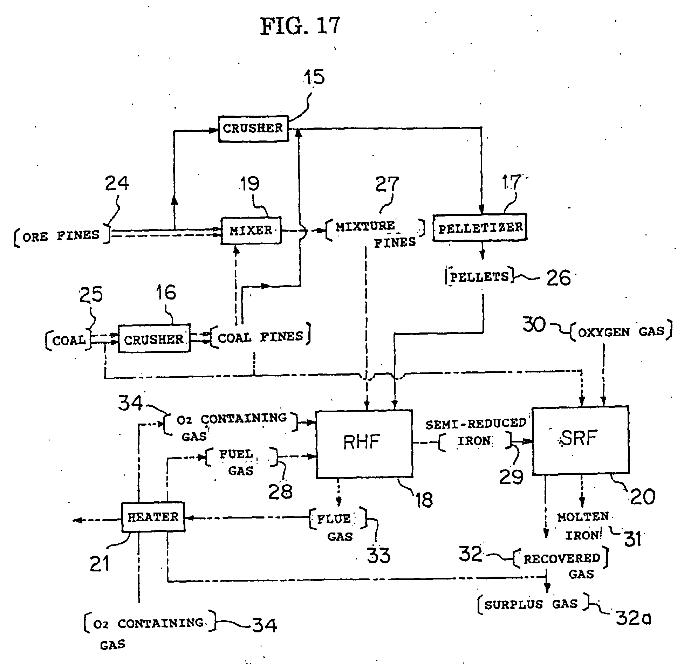

FIG. 17 shows a flowchart of a mode of the RHF-SRF process according to the present invention.

For the case that a mixture of raw materials containing a carbonaceous material (normally coal) and an iron ore (ore fines) is mixed and granulated to form pellets, and which pellets are then subjected to preliminary reduction in RHF, the route of treatment is shown by solid line in the figure. That is, the ore fines 24 and the coal 25 are crushed by respective crushers 15, 16, at need, then they are mixed together in a mixer (not shown) or the like, and are granulated in a pelletizer 17 to obtain pellets. The pellets 26 are charged to RHF 18 to conduct pre-reduction smelting. For the case that a mixture of raw materials containing a carbonaceous material (normally coal) and an iron ore (ore fines) are mixed without forming to pellets, the route follows the broken line in the figure. That is, the coal 25 is crushed in the crusher 16, at need, then is mixed with the ore fines 24 in the mixer 19, and thus obtained mixture of raw materials 27 is charged to RFH to conduct pre-reduction smelting. To the RHF 18, a recovered gas 32 (gas generated in RHF) of SRF is supplied as a fuel gas 28. By combusting the fuel gas, the mixture of raw materials is heated, and the ore fines 24 is reduced by the coal 25 to manufacture a semi-reduced iron 29 having average metallization degree of from 5 to 55 wt.%.

The mixture of raw materials (the pellets 26 or the powder and particle mixture of raw materials 27) that contains the semi-reduced iron 29 which was preliminarily reduced in RHF 18 is charged to SRF 20, where the finish smelting aiming at the final reduction and melting is carried out. To SRF 20, the oxygen gas 30 and the coal 25 are supplied to obtain the molten iron 31 and the recovered gas 32. On starting up the furnace, SRF 20 needs the charge of a seed melt such as molten iron. In a stable operation state, however, there is no need of the seed melt owing to the presence of intrafurnace iron bath.

A part of the recovered gas 32 of SRF 20 is supplied to RHF 18 as the fuel gas, as described before, and residual recovered gas 32 is consumed as the surplus gas 32a in various plants (not shown) such as steel making plant, rolling mill plant, surface treatment plant, and oxygen and power generation plant.

The recovered gas 32 has a lower calorific value (1,000 to 2,000 Kcal/Nm$^3$) than that of natural gas, and decreases the temperature by the dust-removal treatment after recovered. Accordingly, the recovered gas 32 is heated by a heating unit 21 (heat exchanger) to use as the main fuel gas for RHF 18. The heating unit 21 indirectly heats the recovered gas 32 by the heat exchange with the sensible heat of the flue gas 33 coming from RHF 18. Alternatively, the surplus gas 32a is combusted, and the sensible heat of the flue gas is used for the indirect heat exchange to heat the recovered gas 32.

Also for a support oxygen-containing gas 34 such as air and an oxygen-enriched air being supplied to RHF 18, the above-described heating unit 21 is applied to indirectly heat the gas 34 by the sensible heat of the flue gas 33 coming from RHF 18 before supplied to RHF 18. Alternatively, the surplus gas 32a is combusted, and the sensible heat of the flue gas is used for the indirect heat exchange to heat the support oxygen-containing gas 34.

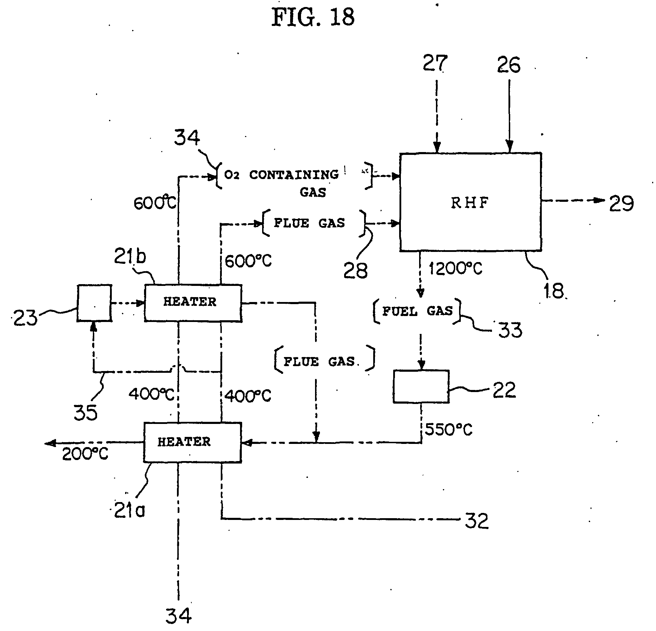

FIG. 18 shows another mode of supplying the recovered gas 32 (SRF generated gas) and the support oxygen-containing gas 34 to RHF after preheating. According to the mode, the recovered gas 32 and the support oxygen-containing gas 34 are preheated in a first heating unit 21a (heat exchanger) using the sensible heat of the flue gas 33 coming from RHF 18. The flue gas 33 coming from RHF 18, which flue gas is at high temperatures of around 1,200°C, is cooled to around 550°C by a cooler 22 (for example, waste heat recovery boiler). then is introduced to the first heating unit 21a. The sensible heat of the flue gas 33 is used to indirectly heat the recovered gas 32 and the support oxygen-containing gas 34 to a level of below 500°C (preferably 200°C or above, and more preferably 300°C or above). Thus heated recovered gas 32 and support oxygen-containing gas 34 are further preheated in a heating unit 21b. To the second heating unit 21b, a high temperature flue gas 35 which is prepared by combusting a part of the above-described recovered gas 32 is introduced. The sensible heat of the flue gas 35 is used to indirectly heat the recovered gas 32 and the support oxygen-containing gas 34 preferably to 500°C or more.' The combustion flue gas, that is introduced to the heating unit 21b to exchange the heat with the recovered gas'32 and the support oxygen-containing gas 34, may also be a combustion flue gas obtained by combusting other fuel (clean fuel) such as natural gas. Also the support gas used in the burner 23 may be the support oxygen-containing gas 34 which is preheated in the heating unit 21a or 21b. The recovered gas 32 (fuel gas 28) and the support oxygen-containing gas 34 which are preheated to a specified temperature (preferably 500°C or above) are supplied to RHF 18.

In these modes, since the flue gas 33 coming from RHF 18 is cooled to an adequate temperature by the cooler 22 before entering the first heater 21a, the corrosion of the first heater 21a caused by the corrosive components such as Na, K, Cl, and SOx existing in the flue gas coming from RHF 18 is prevented, thus improving the durability of the heating unit. The flue gas obtained by combusting a part of the recovered gas 32 (or other fuel gas) is a clean gas that does not contain corrosive components such as Na, K, Cl, and SOx, so that the flue gas does not induce problem of corrosion of the heating unit even if the flue gas is introduced to the second heating unit 21b in a state of high temperature gas (for example, 800°C or above), thus allowing preheating the recovered gas 32 and the support oxygen-containing gas 34 to a specified high temperature level. Consequently, the recovered gas 32 and the support oxygen-containing gas 34 can be preheated to a specified temperature (preferably 500°C or above) using the sensible heat of the flue gas 33 coming from RHF 18, thus supplying the preheated gas to RHF 18.

According to the second mode of the method for metal smelting of the present invention, a mixture of raw materials (iron ore) is preliminarily reduced in a prereduction furnace such as the above-described RHF to a specified low level of average metallization degree (over 5%), which is then charged together with a not-preliminarily reduced iron are and an iron ore having low level of preliminary reduction to SRF. In the method for metal smelting according to the present invention, the total average metallization degree of the iron ore being charged to SRF is expected in a range of from 5 to 55%, so if only the condition is satisfied, the preliminarily reduced above-described mixture of raw materials in RHF may be charged to SRF along with an iron ore without preliminarily reduced or an iron ore having low level of preliminary reduction percentage. Alternatively, the preliminary reduction may proceed to an average metallization degree of over 55% for the mixture of raw materials (iron ore).

That is, According to the second mode of the method for metal smelting of the present invention, the molten metal is manufactured by the steps of:

(A2) preliminarily reducing a mixture of one or more of raw materials selected from the group consisting of following-given (a) through (c) in a prereduction furnace such as above-described RHF to attain average metallization degree of over 5% for the iron ore;

(a) a mixture of raw materials prepared by mixing at least a carbonaceous material and a metal oxide and/or a metal hydroxide,

(b) a mixture of raw materials prepared by mixing and granulating at least a carbonaceous material and a metal oxide and/or a metal hydroxide, and

(c) a mixture of raw materials prepared by mixing and molding at least a carbonaceous material and a metal oxide and/or a metal hydroxide; and

(B2) melt-reduction smelting (finish smelting = final reduction and melting) the preliminarily reduced mixture of raw materials and an iron ore of (i) and/or (ii) given below by charging theretogether to SRF for to a degree that the average metallization degree of the total iron ore is in a range of from 5 to 55%;

(i) an iron ore which has lower percentage of preliminary reduction than that of mixture of raw materials preliminarily reduced in the step (A2), and

(ii) an iron ore which is not preliminarily reduced.

The iron ore of the above-described (i) and/or (ii) may be mixed with a mixture of raw materials that is preliminarily reduced in RHF before being charged to SRF, or may be charged separately without mixing with the mixture of raw materials which is preliminarily reduced in RHF.

For the case that the high temperature mixture of raw materials which was discharged after completed the preliminary reduction is mixed with the iron ore of above-described (i) and/or (ii) before charging to SRF, it is preferred that the high temperature mixture of raw materials discharged from RHF is stored in an above-described non-open type vessel along with the iron ore of above-described (i) and/or (ii), then is transferred to SRF, or, that the high temperature mixture of raw materials which was discharged from RHF is stored in a pneumatic conveying unit along with the above-described iron ore of (i) and/or (ii), then is pneumatically transferred to SRF to charge therein through the pneumatic conveyer piping using a non-oxidizing gas, (the kind of gas is described before).

In this case, the mixture of raw materials discharged from RHF is mixed with the above-described iron ore of (i) and/or (ii) in a non-open type vessel or a pneumatic conveying unit. The method may be either one of: the one that the above-described iron ore of (i) and/or (ii) is put into a non-open type vessel, then the high temperature mixture of raw materials is introduced from RHF to the non-open type vessel; the one that both of them are introduced in reversed order; or the one that both of them are introduced at a time. The third simultaneous introduction is preferred because the temperature distribution and the material distribution become uniform.

The above-described superiority to the Reference arts, which was described before relating to the first mode of the method for metal smelting according to the present invention, and the conditions of facilities and of operation of applied RHF and SRF, are the same the second mode of the method for metal smelting according to the present invention.

The above-described first and second modes of the method for metal smelting according to the present invention dealt with an example case that RHF is used as the prereduction furnace, and SRF is used as the melting furnace. Other than RHF, the prereduction furnace may be other types that conduct preliminary reduction using a carbonaceous material as the reducing agent. Examples of these other types of the prereduction furnace are a horizontally moving hearth type, a multi-hearth type, and a rotary kiln type.

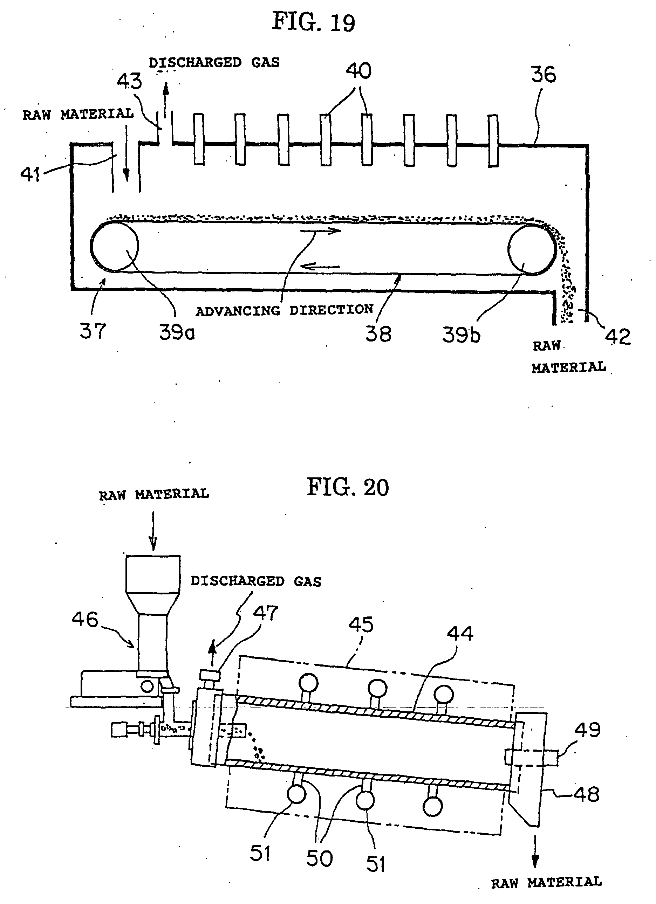

FIG. 19 shows an example of prereduction furnace of horizontally moving hearth type. The prereduction furnace has a furnace body 36 (furnace wall) and a horizontally moving hearth 37 located inside of the furnace body 36. The horizontally moving hearth 36 has almost the same structure with that of what is called the Dwight-Lloyd type sintering machine. That is, the horizontally moving hearth 37 has the transfer hearth 38 which is structured by connecting plurality of pallets in endless belt pattern, and the chain sprocket wheels 39a, 39b that hold an endless transfer hearth 38 at both ends thereof and move thereof, and has rails (not shown) that support the transfer hearth section that supports the raw materials and transfers thereof.

At upper part of the furnace body 36, heating burners 40 (or supply nozzles for oxygen-containing gas for post combustion) are arranged along the length of the furnace at a specified pitch. A raw material charge opening 41 is located at an end of the furnace body 36 in longitudinal direction, and a raw material discharge opening 42 is located at other end thereof. In addition, an intrafurnace gas discharge opening 43 is located at a single position on the furnace body 36.

For that type of prereduction furnace of horizontally moving hearth type, the mixture of raw materials, for example, (hereinafter the description is given on the case that the mixture of raw materials is in pellet shape), is charged onto the transfer hearth 38 from above the raw material charge opening 41 through a raw material charge unit (not shown). During the movement of the transfer hearth 38, the pellets are heated in the furnace in which the heating burners 40 heat the atmosphere to high temperature level of 1,200 to 1,500°C. The pellets are dried and heated in the first half zone of the transfer hearth 38, then are further heated in the last half zone thereof, thus the iron ore that structures the pellets is reduced to a level that a part of them is metallized by the carbonaceous material existing in the pellets, then they are discharged to outside of the furnace through the raw material discharge opening 42.

FIG. 20 shows an example of prereduction furnace of rotary kiln type. In this type of rotary kiln prereduction furnace, the rotary furnace body 44 is supported by a support body 44 in rotational mode, and is rotated by a rotary drive unit (not shown). On one side of the rotary furnace body 44, a metering feeder 46 of the materials and a intrafurnace gas discharge opening 47 are located. On the other side of the rotary furnace body 44, a raw material discharge opening 48 and a heating burner 49 are provided. On the furnace wall of the rotary furnace body 44, a plurality of gas supply nozzles 50 and a gas header 51 to supply a supporting gas (oxygen or oxygen-containing gas)are provided. Through the gas header 51 and the gas supply nozzles 50, the support gas is introduced to the rotary furnace body 44. The gas header 51 and the gas supply nozzles 50 are integrally structured with the rotary furnace body 44, and they rotate together with the rotary furnace body 44, thus, with an adequate means, the supporting gas is supplied to the gas header 51.

Consequently, in the rotary kiln type prereduction furnace, the heating of the heating burner 49 makes the internal atmosphere of the rotary furnace body 44 to high temperatures of from 1,200 to 1,500°C. A mixture of raw materials, (hereinafter the description deals with an example case that the mixture of raw materials is in pellet shape), is charged from one end of the rotary furnace body 44 through the metering feeder 46, and the pellets are heated in the furnace. During the process of movement of the pellets through the rotary body 44, the pellets are dried and heated in the first half section of the rotary furnace body 44, then is further heated in the last half section thereof, thus the iron ore that structures the pellets is reduced to a level that a part of them is metallized by the carbonaceous material existing in the pellets, then they are discharged to outside of the furnace through the raw material discharge opening 48 on the rotary furnace body 44.

In that type of rotary kiln type prereduction furnace, the pellets charged in the rotary furnace body move toward the furnace wall following the rotation of the rotary furnace body 44, and individual pellets also move, so that there is large possibility of powdering of pellets compared with RHF. However, since the movement of the pellets keeps the heat-receiving plane displace, there is an advantage that the pellets are uniformly heated and reduced. For the case that the mixture of raw materials is a mixture of iron ore and carbonaceous material, there is an effect that the mixing of these materials is enhanced.

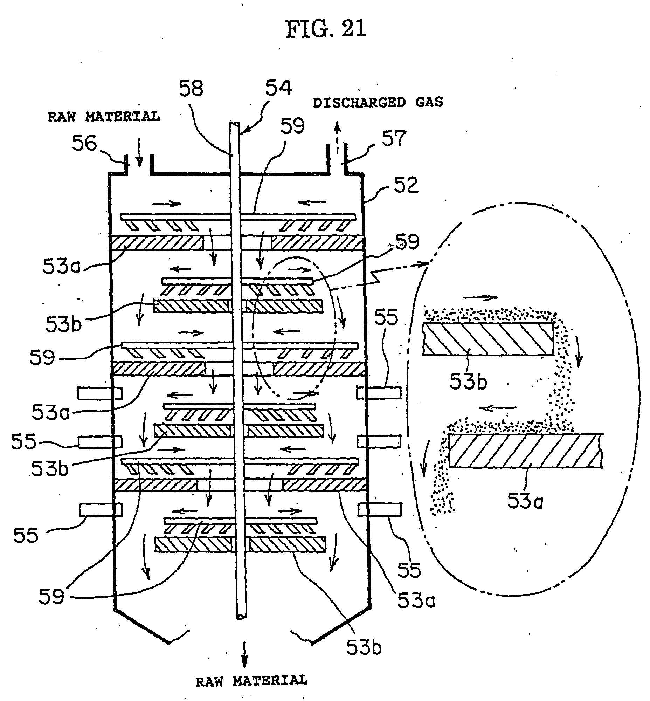

FIG. 21 shows an example of prereduction furnace of multi-hearth type. The prereduction furnace is provided with' a vertical furnace body 52 (furnace wall), a plurality stages of shelf-type hearth 53 located in the furnace body, and a removing means 54 to scrape off the raw materials from each hearth section 53. To the side of the furnace body 52, plurality of heating burners 55 (or supply nozzles for oxygen-containing gas for post combustion) are located at positions between top and bottom hearth sections 53.

The furnace body 52 has a raw material charge opening 56 and an intrafurnace gas discharge opening 57 at the upper section thereof, and has a raw material discharge opening (not shown) at the lower section thereof.

In the plurality of stages of hearth section.53, there are alternately arranged a hearth section 53a which is positioned in an inner-flange shape along the inner wall of the furnace body and a hearth section 53b that is positioned in an disk shape at center zone of the furnace body, in the vertical direction. Thus, by the above-described removing means 54, the raw materials are successively scraped off from upper stage hearth section to lower stage hearth section.

The above-described removing means 54 has a main shaft 58 that is located at center of the furnace body 52 in rotating mode, plurality of scrape rods that are protruded from the main shaft 58 over each of the hearth sections 53, and a drive unit (not shown) that rotates the main shaft 58. The rotary motion of the scrape rods 59 scrapes off the raw materials on respective hearth section 53. As of the scrape rods 59, scrape rods 59 that are arranged along the inner wall of the furnace body in an inner-flange shape for respective hearths 53a have members to scrape the raw materials on respective hearth sections 53 toward the furnace center. And, scrape rods 59 for respective hearths 53b in disk shape at center part of the furnace body have members to scrape the raw materials on respective hearth sections 53 toward the furnace wall.

In that type of multi-hearth type prereduction furnace, the heating burners 55 raise the temperature of the intrafurnace atmosphere to 1,200 to 1,500°C. The mixture of raw materials, (hereinafter the description deals with the case that the mixture of raw materials is in pellet shape), is charged on the uppermost stage of hearth sections 53 from above the raw material charge opening 56 through a raw material charge unit (not shown). The pellets are heated during a course of moving through the furnace, or of falling down through the furnace by the scraping action of the removing means 54 to move successively' to lower stages of hearth sections 53. Firstly, the pellets are dried and heated on the hearth section 53 of upper stage, then are further heated on the hearth section 53 of lower stage, thus the iron ore is reduced by the carbonaceous material existing in the pellets to partially metallized state, then the pellets are discharged from the furnace through the raw material discharge opening.

In the above-described various types of prereduction furnaces, when the gas generated in SRF is used as the combustion gas, the gas may be in a low calorific value. Accordingly, it is preferred to use pure oxygen as the support gas, or to use a combustion unit such as tubular flame burner that has high combustion stability. In particular, when the pure oxygen is used as the support gas, the concentration of nitrogen in the combustion gas can be lowered, and the concentration of CO, $CO_2$, and $H_2O$ as the radiation gas components can be increased, thus the heating efficiency is drastically increased.

The melting furnace is not limited to SRF if only the furnace conducts iron ore melting and final reduction using a carbonaceous material as the reducing agent, and using the combustion heat of the carbonaceous material and the combustion heat of carbon monoxide generated in the furnace as the main heat source. Therefore, the furnace may be a type that uses electric power as apart of the heat source. For example, an additional carbonaceous material charge unit and an oxygen (or, air or the like) blowing unit to SAF and other electric furnace may be applied to decrease the electric power.

The above-given description deals with iron ore as the metal oxide and/or metal hydroxide as the target material of the melt-reduction. Other kinds of metal oxide and/or metal hydroxide such as Ni ore, Cr ore, and Mn ore may also be the target materials.

Next is the description of the mode of RHF and of the operational method preferred for conducting the method for metal smelting according to the present invention.

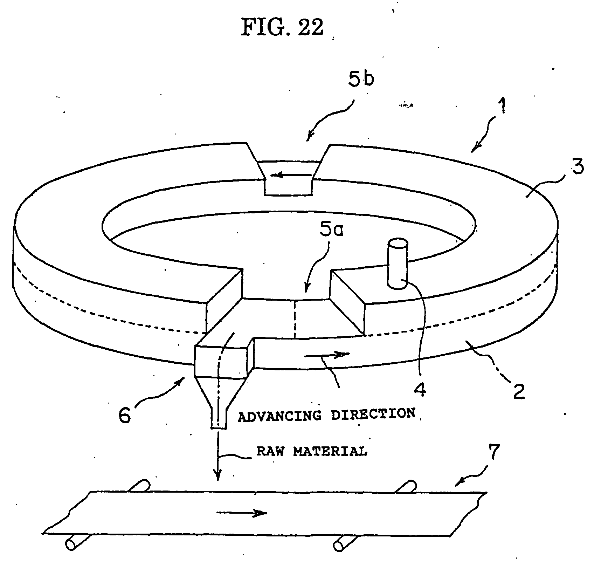

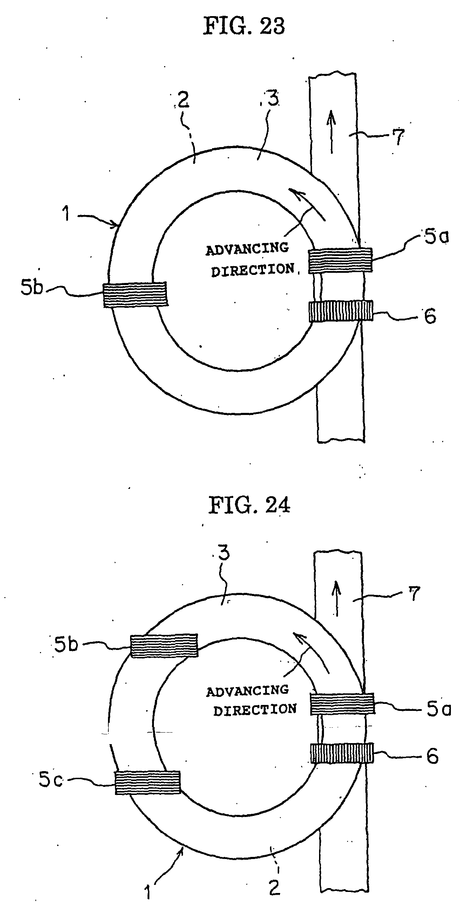

FIG. 22 and FIG. 23 show a preferred mode of RHF for carrying out the present invention.. FIG. 22 shows a perspective view, and FIG. 23 shows a plan view of the raw material charge opening . and the raw material discharge opening.

As in the case of RHF shown in FIG. 2, the furnace body 1 of the RHF is structured by a ring-shape rotary hearth 2 and a furnace wall 3 that maintains the intrafurnace atmosphere by covering the whole rotary hearth. The rotary hearth 2 rotates in the arrow direction. Plurality of combustion burners (not shown) for heating the intrafurnace atmosphere are arranged at upper section of the furnace wall 3 over the whole periphery of the furnace with a specified pitch. The furnace wall 3 is provided with a gas discharge opening 4.

The RHF is provided with raw material charge openings 5a, 5b at almost opposite sides (nearly 180° ) to each other on the periphery. A raw material discharge opening 6 is located at a position near to one of the raw material charge opening 5a, (at a position near opposite to the hearth rotational direction). The positions of raw material charge openings 5a, 5b are not strictly opposite to each other (180°) on the periphery but the relative positions that the peripheral length between the raw material charge opening 5a and the raw material charge opening 5b and the peripheral length between the raw material charge opening 6 and the raw material discharge opening 5b are almost equal.

The raw material discharge mechanism (raw material discharge unit) at the raw material discharge opening 6 may be arbitrary type. For example, the mechanism may be structured by a screw unit that crosses the rotary hearth 2, and the screw unit breaks to bring out or scrapes out the raw materials from the raw material layer, thus to transfer them toward the raw material discharge opening 6.

A belt conveyer 7 to carry out the mixture of raw materials, which was preliminarily reduced and was discharged at beneath the raw material discharge opening 6. Instead of the belt conveyer 7, the above-described non-open type transfer vessel (container) may be moved to beneath the raw material discharge opening 6, and after receiving the discharged mixture of raw materials, the transfer vessel transfers them to SRF. By the procedure, the temperature reduction and the re-oxidization of the mixture of raw materials after the preliminarily reduction and before the charge to SRF is minimized.

The following is the description of the operational method using that type of RHF, with an example of preliminary reduction of the pellets prepared by granulating the mixture of raw materials.

The pellets of the mixture of raw materials are charged onto the rotary hearth 2 using a raw material charge unit (not shown) from above the two raw material charge openings 5a, 5b, and are heated by combustion burners. Generally, the state of charged pellets on the rotary hearth 2 is, for example, one layer (or partially two layers) of pellets having sizes of 10 to 15 mm. The pellets are heated in a high temperature atmosphere of 1,200 to 1,500°C while the rotary hearth 2 rotates in the arrow direction (counterclockwise), thus the iron ore forming the pellets is reduced by the carbonaceous material existing in the pellets to partially metallized state.

The RHF shown in FIG. 22 and FIG. 23 has raw material charge openings 5a, 5b nearly opposite positions to each other on the periphery, and has the raw material discharge opening 6 at a position near to one raw material charge opening 5a opposite to the hearth rotational direction. Accordingly, the charge, the reduction, and the discharge of the pellets are carried out following the procedure described below. First, the pellets are charged onto the rotary hearth 2 through the first raw material charge opening 5a, and the first pellet charge layer (raw material layer) is heated by direct heat transfer from the intrafurnace atmosphere until the pellets are charged from the second (downstream side) raw material charge opening 5b, or until the rotary hearth 2 rotates by about half turn. Generally, the time of about half turn of the rotary hearth 2 takes about 4 to 5 minutes. During the period, the pellets are reduced to an average metallization degree of the target level or the near-target average metallization degree. New pellets are charged onto thus reduced first pellet charge layer from the second raw material charge opening 5b. Also the second pellet charge layer (raw material layer) is heated by direct heat transfer from the intrafurnace atmosphere until the second pellet charge layer reaches the raw material charge opening 6, or the rotary hearth 2 further rotates by about half turn, thus the pellets are reduced to an average metallization degree of near-to the target level. Then, the first and the second pellet charge layers are discharged from the furnace through the raw material discharge opening 6.

FIG. 24 shows another mode of RHF suitable for carrying out the present invention, illustrating the plan view of the raw material charge opening and the raw material discharge opening.

The RHF in this mode is provided with three raw material charge openings 5a, 5b, and 5c along. the periphery thereof at nearly equal pitch, and with a raw material charge discharge opening 6 at a position near to one raw material charge opening 5a (at position near opposite to the hearth rotational direction). The positions of raw material charge openings 5a, 5b, and 5c have no strict interval in the peripheral direction, but are arranged in relative positions that the peripheral length between the raw material charge opening 5a and the raw material charge opening 5b, the peripheral length between the raw material charge opening 5b and the raw material charge opening 5c, and the peripheral length between the raw material charge opening 5c and the raw material discharge opening 6 are almost equal.

Also the operational method of the RHF shown in FIG. 24 is basically similar with that shown in FIG. 22 and FIG. 23. The first pellet charge layer (raw material layer) charged onto the rotary hearth 2 through the first raw material charge opening 5a is heated by direct heat transfer from the intrafurnace atmosphere during the period of rotation of the rotary hearth 2 by about one third turn. Thus the pellets are reduced to an average metallization degree of near-target level or to close to the average metallization degree. After that, the second and the third pellet charge layers which are successively charged over the first pellet charge layer from the second and the third raw material charge openings 5b, 5c, are reduced to an average metallization degree of near-target level by direct heating of the intrafurnace atmosphere. Finally, these first to third pellet charge layers are discharged from the furnace through the raw material discharge opening 6.

Also for an RHF that is provided with four or more positions of raw material charge openings in peripheral direction, the configuration and the operational method conforming to those of the above-described mode are adopted.

The above-described example adopted pellets as the mixture of raw materials. For the case that the mixture of raw materials is briquettes and is powder and particle mixture form, the same configuration and the operational procedure are applied. Since, however, powder and particle shape mixture of raw materials gives lower heat transfer efficiency than pellets and briquettes, the metallization degree becomes lower than that of the preliminarily reduced pellets and briquettes.

As for the operation of the above-described modes, the first pellet charge layer and the second pellet charge layer, (the mode of FIG. 23), or the first pellet charge layer through the third pellet charge layer, (the mode of FIG. 24), differ in retention time in the furnace. Accordingly, the metallization degree of iron ore is strictly in an order of: the first pellet charge layer > the second pellet charge layer > the third pellet charge layer. The metallization degree is, however, determined by the time of direct heating of the pellet charge layer by the intrafurnace atmosphere, thus the difference in the average metallization degree of iron ore is not significant between the first pellet charge layer, the second pellet charge layer, and the third pellet charge layer, and gives almost homogeneous metallization degree.

When the case of a mixture of raw materials consisting mainly of granulated or molded materials such as pellets and briquettes and the case of a mixture of raw material in powder shape are compared, the former gives significantly large heat transfer coefficient on the rotary hearth from the intrafurnace atmosphere, which shortens the time necessary to gain the same metallization degree. Therefore, the granulated and molded materials such as pellets and briquettes are superior in productivity to the mixture of raw material in powder shape, and allows increasing in the number of raw material charge openings in RHF.

Regarding the raw material discharge opening of RHF, for the case that only one raw material discharge opening is located to a plurality of raw material charge openings, the retention time of the raw materials charged from respective raw material charge openings in the furnace differs to each other. Consequently, in strict view, the metallization degree of iron ore becomes nonuniform. The degree of nonuniformity is, however, slight as described above, and the case of only one raw material discharge opening gives no problem. Nevertheless, raw material discharge openings can be located to positions near respective raw material charge openings at opposite side to the hearth rotational direction. In that case, the metallization degree of the mixture of raw materials becomes further uniform. In the case that only one raw material discharge opening (for example, screw unit described before) cannot fully conduct the discharge of raw materials caused by the discharge capacity of the raw material discharge mechanism, two or more of the raw material discharge openings may be located to adjacent positions to each other, and respective raw material discharge units may be provided.

The intrafurnace gas discharge opening may be located each one between each pair of the raw material charge openings, and the number of the gas discharge openings is arbitrarily selected. The RHF according to the present invention, described above, can manufacture semi-reduced iron having low metallization degree at high productivity. The method for metal smelting according to the present invention is extremely favorable at this point. Consequently, by applying the RHF to the RHF-SRF process which is described before, the high productivity, the decreased unit requirement of energy, and the improved energy balance, which are the targets of the molten iron manufacturing process, can be effectively realized.

Generally, conventional RHFs have drawbacks described below on manufacturing semi-reduced iron having low metallization degree while improving the productivity.

(1) The productivity of semi-reduced iron may be increased by increasing the diameter of RHF. The actual maximum RHF furnace diameter is expected to around 50 m owing to the accuracy limit of fabrication, (the existing largest RHFs have this level of diameter). Therefore, the improvement in productivity by scale up of RHF diameter has a limitation.

(2) The metallization degree of semi-reduced iron may be decreased by increasing the rotational speed of the rotary hearth of RHF. The increased rotational speed of the rotary hearth increases the mechanical load, and the wear and equipment damage resulted from the high speed rotation significantly increase. Therefore, the method to reduce the metallization degree of semi-reduced iron by adjusting the rotational speed of rotary hearth is not a practical one.

(3) The productivity may be improved by increasing the thickness of raw material layer on the rotary hearth of RHF. Since, however, RHF adopts a method of heating the raw material layer from above thereof, the increased thickness of raw material layer significantly decreases the reduction reaction in the lower layer zone of the raw material layer. As a result, the manufactured semi-reduced iron gives significant dispersion in the metallization degree.

To those problems, the RHF according to the present invention can manufacture semi-reduced iron having low metallization degree while maintaining conventional level of the furnace diameter, the rotational speed of rotary hearth, and the thickness of raw material layer-charged onto the rotary hearth.

The above-described RHF is applicable to other methods for metal smelting than that of the present invention. For example, the semi-reduced iron which was manufactured by the RHF can be sold as the product, or can be used as a raw material for other process (such as SAF described before).

The following is the description of several preferred modes on the operational procedure of RHF in the RHF-SRF process according to the present invention. The operational procedure for the modes described below is applicable independent of the structure of RHF. Accordingly, for example, the operational procedure can be applied to RHF shown in FIG. 2 and FIG. 3, and to RHFs shown in FIG. 22 through FIG. 24.

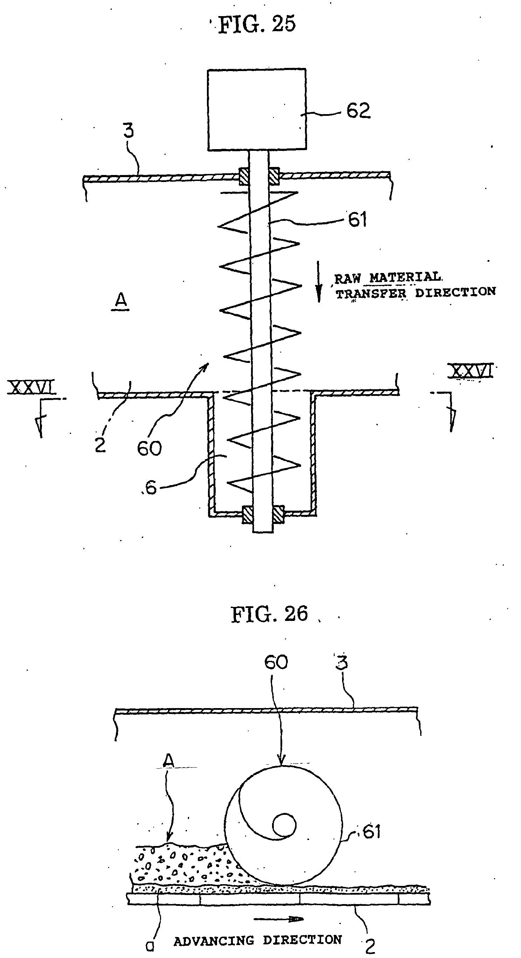

As described before, the raw material discharge unit (raw material discharge mechanism) at the raw material discharge opening 6 of RHF may be arbitrary type. Commonly, however, the raw material layer on the rotary hearth 2 is discharged by breaking-to-bring out or scraping out using a mechanical means. FIG. 25 and FIG. 26 show an example of the raw material discharge unit located at the raw material discharge section. The raw material discharge unit 60 is provided with a screw body 61 for scraping out the raw materials, installed on the rotary hearth 2 crossing in width direction thereof. By rotating the screw body 61 using a drive unit 62, the raw material layer A (raw material charge layer) is broken to collapse, thus the raw materials are transferred to the raw material discharge opening 6.

When that kind of mechanical means is applied to discharge raw materials, however, the refractory of the rotary hearth 2 may be damaged or worn. Therefore, to prevent the accident, it is preferred to conduct preliminary reduction while forming a powder and particle layer "a" on the rotary hearth 2, which layer "a" is not discharged from the raw material discharge opening 6, as shown in FIG. 26. The powder and particle layer "a" may be a mixture of raw materials, or may be other powder and particles. By forming the powder and particle layer "a" which is not discharged from the raw material discharge opening 6, the damages and wear of the rotary hearth 2 are effectively prevented even when the raw material layer A on the rotary hearth 2 is mechanically broken-out or scraped out.

When the preliminary reduction is given on charging powder and particle mixture of raw materials onto the rotary hearth 2, the iron ore in the mixture of raw materials likely induces secondary sintering. If the secondary sintering of iron ore occurs in the lowermost layer of the raw material layer, the discharge of raw materials at that section may become difficult. Accordingly, when powder and particle mixture of raw materials is used, it is preferable that a layer containing smaller amount of iron ore at the lowermost layer "b" of the raw material layer A, (for example, a layer containing large amount of carbonaceous material or auxiliary raw material), than in the upper layer section. With this adjustment, the secondary sintering at the lowermost layer "b" of the raw material layer is prevented, and the raw material discharge can be smoothly conducted.

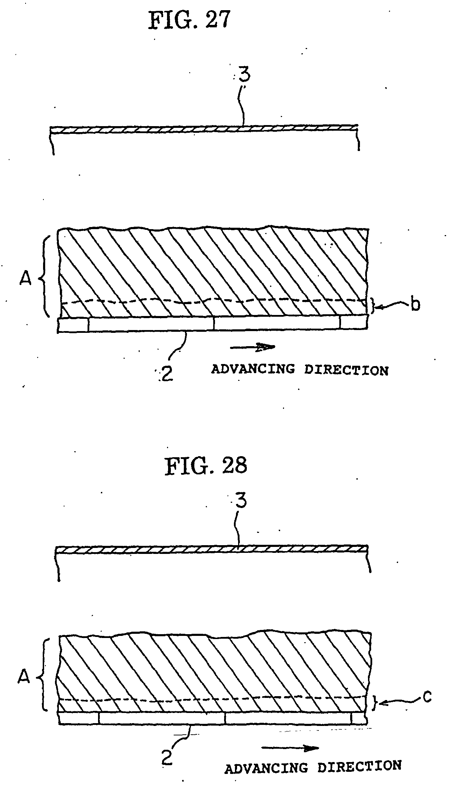

In the case that unburned auxiliary raw material such as limestone is charged to the raw material layer together with the mixture of raw materials, and they are fired, there occurs a problem that the $CO_2$ generated by firing the auxiliary raw material consumes the carbonaceous material in the mixture of raw materials, ($CO_2 + C \rightarrow 2CO$), thus decreasing the amount of carbonaceous material that can be used for preliminary reduction. To suppress the consumption of the carbonaceous material, it is preferred that, in the case that the unburned auxiliary raw material being charged to the melting furnace is charged to RHF, an auxiliary raw material layer or a layer consisting mainly of the auxiliary raw material is formed at lowermost layer of the raw material layer A, as shown in FIG. 28, to minimize the contact between the auxiliary raw material and the carbonaceous material. Accordingly, the unburned auxiliary raw material may be mixed with the mixture of raw materials or may be mixed and granulated or mixed and molded there-

33

together. If possible, however, it is most preferable that the unburned auxiliary raw material is separately charged onto the rotary hearth without mixing with the mixture of raw materials, and the mixture of raw materials which is formed in pellet or briquette shape or the mixture of powder and particle mixture of raw materials is charged over the layer of unburned auxiliary raw material, then the firing of auxiliary raw material and the preliminary reduction of the mixture of raw materials are conducted.

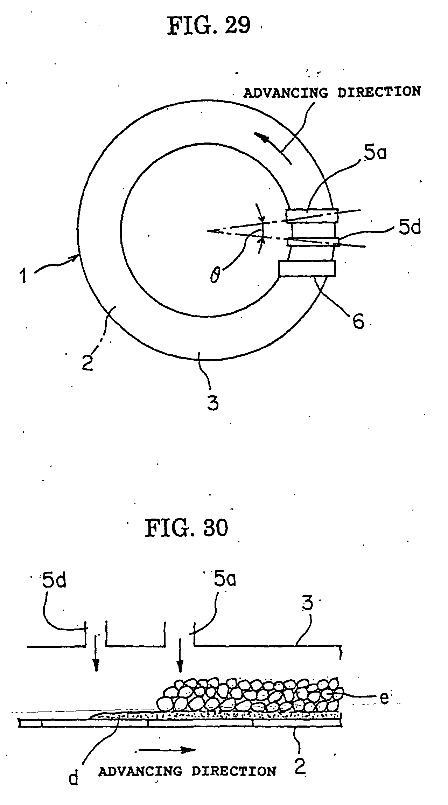

The raw material layer A shown in FIG. 27 and FIG. 28 can be formed by using an RHF shown in FIG. 29 in an operation mode which is described later. That is, a raw material containing smaller amount of iron ore is charged onto the rotary hearth 2 from a raw material charge opening 5d, (for the case of FIG. 27), or a raw material consisting of auxiliary raw material or consisting mainly of auxiliary raw material is charged, followed by charging ordinary mixture of raw materials are charged from a raw material charge opening 5a, (for the case of FIG. 28).

FIG. 29 and FIG. 30 show an example of preferred operational mode for using granulates and molded forms such as pellets and briquettes of the mixture of raw materials. According to the operational mode, in the case that the preliminary reduction is conducted by charging granulates and molded forms such as pellets and briquettes of mixture of raw materials, (hereinafter the description deals with pellets), the powder and particles "d" such as powder raw material is charged onto the rotary hearth 2 from the raw material charge opening 5d, then the pellets "e" are charged onto the upper layer to the charged material "d" (powder and particles) from the raw material charge opening 5a at downstream side in the moving direction of the rotary hearth. By the procedure, the shock of dropping the pellets against the hearth is reduced, and the break and powdering of the pellets "e" on dropping on the hearth is prevented.

The use of powder raw material generated on pelletizing to obtain the powder and particles, (mainly powder of iron ore and coal) provides an advantage of allowing increasing the temperature of the powder raw material while sustaining the heat receiving from the intrafurnace gas to the pellets "e". That is, when the powder raw material generated on pelletizing is charged onto the rotary hearth together with the pellets, the powder raw material coats individual pellets to act as an insulator, thus inducing a problem of hindering the heat receiving of pellets "e" from the intrafurnace gas. To the contrary, if the powder raw material is separated from the pellets "e", as described above, and the powder raw material is charged onto the rotary hearth before the pellets are charged, the powder material can be heated and can raise the temperature thereof while sustaining the heat receiving from the intrafurnace gas to the pellets "e". In addition, since the heat transfer between powder particles of the powder raw material is poor, they act as an insulator to maintain the temperature of also the hearth to a low level, thus suppressing the wear and damage of the refractory and decreasing the heat loss caused by the heat dissipation from the furnace bottom. Furthermore, when the hearth is cooled by radiation effect, (the cooling amount is proportional to the fourth power of the absolute temperature), after the raw material is discharged, the low temperature of hearth allows reducing the cooling amount of the refractory at the section of raw material discharge.

Examples of the charge "d" (powder and particles) being charged onto the rotary hearth 2 before charging the pellets "e" are powder and particle raw material (for example, powder raw material such as iron ore and coal) and powder and particles of auxiliary raw material (for example, limestone, calcium oxide, and dolomite) being charged into the melting furnace. One or more of these materials may be used. Alternatively, a charge consisting mainly of these powder and particle raw materials and the powder and particle auxiliary raw materials, (that is, a charge that contains other material than the powder and particle raw materials and powder and particle auxiliary raw materials as a part may be used).

When the above-described charge "d" is the powder raw material generated on pelletizing, (mainly powder of iron ore and coal), the hearth temperature can be maintained to a low level, as described above, furthermore, the powder raw material is in small particle size and contains less including water compared with that of pellets, so that the sudden expansion (rupture) of the material caused by the rapid heating of included water is difficult to occur. Consequently, non-dried powder raw material (for example, the water content of around 3 to 10%), can be used.

If, other than the coal included (existing) in pellets, a part or total amount of the coal necessary in SRF is used to a part or total of the charge "d", the coal is sent to SRF in a state that the volatile matter was removed by vaporization and the coal has raised the temperature, thus the unit requirement of oxygen and of coal in SRF can be decreased compared with the case that the coal is charged to SRF without preliminarily treated. In addition, since the volatile matter removed by vaporization from the coal in RHF can be consumed as a fuel gas in RHF, the corresponding amount of the fuel gas in RHF can be decreased.

By using a non-fired auxiliary raw material (auxiliary raw material being charged to the melting furnace) such as limestone and dolomite as the charge "d", they can be fired in RHF so that no additional unit for firing auxiliary raw material is necessary, and the investment cost is decreased.

The distance between the charge point of the charge "d", (raw material charge opening 5d), and the charge point of pellets "e", (raw material charge opening 5a), along the periphery or rotary hearth is preferably within 30° of the rotational angle θ of the rotary hearth 2. If the distance exceeds 30° of the rotational angle θ of the rotary hearth 2, the effective hearth area of RHF decreases to degrade the productivity, and the effective use of volatile gas generated from the carbonaceous material in the charge "d" caused by the heat of hearth is interfered.

The powder and particles of raw materials and of auxiliary raw material being charged onto the rotary hearth 2 preferably have the particle sizes (sheave openings) of from 0.05 to 10 mm, more preferably from 0.1 to 8 mm. If the particle size is less than 0.05 mm, the dust generation increases on charging thereof or in the furnace of RHF. If the particle size exceeds 10 mm, there increases the danger of rupture caused by the heating from the hearth, and the effect as a cushion also decreases. For the case of powder and particle auxiliary raw material, the firing degree also degrades.

In this operational mode, since the rapid heat reception from the hearth immediately after the pellets dropping thereon is prevented owing to the presence of charge "d", the rupture. of pellets caused by the included water in the pellets can be prevented. Accordingly, the pellets "e" containing 3 to 10% of water, before subjected to drying treatment, can be charged onto the upper layer to the charge "d".

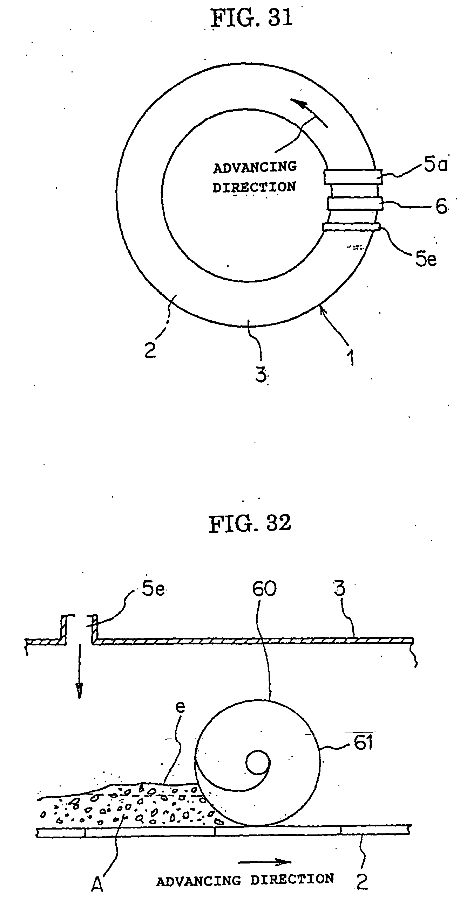

FIG. 31 and FIG. 32 show an example of another preferred operational mode according to the present invention. A mixture of raw materials and the like are charged from the raw material charge opening 5a as the coolant "e" onto the raw material layer A immediately before being discharged from the raw material discharge opening 6, and the treated raw materials (product) in a state of mixture of the raw materials and the coolant "e" are discharged to outside of the furnace using a raw material discharge unit 60 located at the raw material discharge opening 6.

As described before, in the raw material discharge section, a mechanical means such as screw unit is applied as the raw material discharge unit 60. When, however, the raw materials which were heated to a high temperature by that type of mechanical means are discharged without further treatment, the mechanical parts are significantly damaged by heat. Therefore, normally, a water-cooled panel is located near the raw material discharge section to cool the raw materials (product) to an approximate level of 100 to 200°C before discharging thereof. That kind of method, however, induces unnecessary consumption of cooling water and heat loss of the treated raw materials. To the contrary, for the case that the discharge is conducted after mixing the treated raw materials with the coolant "e" consisting mainly of the mixture of raw materials, as described above, the treated raw materials are adequately cooled without using the cooling water, thus the damage of the raw material discharge unit 60 by heat is prevented, and also the coolant "e" itself which carried out heat exchange with the treated raw materials is charged to SRF, which prevents the heat loss of the raw materials (product).

According to the method, however, the coolant is charged to SRF in a nonreduced state, so a problem of worsening the unit requirement in SRF arises if the coolant amount is excessive. Therefore, it is preferable that the weight ratio of the Fe amount (A) in the coolant "e" being charged onto the raw material layer A to the Fe amount (B) in the raw materials structuring the raw material layer A, (A)/(B), is adjusted to a range of from 1/10 to 1/1. If the weight ratio, (A)/(B), is less than 1/10, the cooling effect of the treated raw materials is not satisfactory. If the weight ratio, (A)/(B), exceeds 1/1, the unit requirement in SRF becomes poor.

Examples of applicable coolant "e" are one or more materials selected from the group consisting of: powder and particle mixture of raw materials; iron ore; auxiliary raw material being charged to the melting furnace, (for example, limestone, calcium oxide, and dolomite); and carbonaceous material (such as coal). Also pellets and briquettes lump raw materials may be applied, though they have less cooling effect and are more expensive than that given above.

The above-described various kinds of operational modes for RHF are particularly useful in the first and the second mode of the method for metal smelting according to the present invention. That is, the first mode of the method for metal smelting according to the present invention is a method for metal smelting conducted by reducing an iron ore (iron ore in the mixture of raw materials) to a specified metallization degree (average metallization degree of from 5 to 55%) in a prereduction furnace, followed by applying melting and final reduction in the melting furnace. The second mode of the method for metal smelting according to the present invention is a method for metal smelting conducted by reducing an iron ore (iron ore in the mixture of raw materials) to a specified metallization degree (more than 5% of average metallization degree), and by charging the iron ore, an iron ore which is not preliminarily reduced, and an iron ore having low percentage of preliminary reduction into the melting furnace while adjusting the metallization degree of the total of them to a low level (5 to 55% of average metallization degree), then by applying melting and final reduction. In these methods for metal smelting, the adoption of RHF operation modes described above makes the productivity effectively improve.

The above-described various types of operational modes for RHF are widely applicable to other methods for metal smelting than the first and the second modes of the method for metal smelting according to the present invention. That is, various kinds of methods for metal smelting contain the step (A) preliminarily reducing a mixture of one or more of raw materials selected from the group consisting of following-given (a) through (c) in a prereduction furnace to attain average metallization degree of from 5 to 55% for metal oxide and/or metal hydroxide;

> (a) a mixture of raw materials prepared by mixing at least a carbonaceous material and a metal oxide and/or a metal hydroxide,
> (b) a mixture of raw materials prepared by mixing and granulating at least a carbonaceous material and a metal oxide and/or a metal hydroxide, and

(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof in the melting furnace for metal smelting to convert a carbonaceous material into a reducing agent therein, and by using the combustion heat of the carbonaceous material and the combustion heat of the carbon monoxide generated in the melting furnace as the main heat source. Consequently, the modes can also be applied to the step (B) in the methods for metal smelting (I) through (VI) described later. In particular, as of the above-described operational modes, the following-given ones are satisfactorily useful for the methods for metal smelting other than the first and the second modes of the method for metal smelting according to the present invention.

(1) A method for preliminarily reducing the mixture of raw materials by using a rotary hearth type prereduction furnace provided with two or more of raw material charge opening along the periphery thereof, by charging successively the mixture of raw materials through respective raw material charge openings onto the rotary hearth, thus letting the raw material layer of the mixture of raw materials charged from the upstream side raw material charge opening be directly heated by the intrafurnace atmosphere until a mixture of raw materials is charged from the downstream side raw material charge opening to conduct the preliminary reduction of the mixture of raw materials.
(2) In the above-described method (1), the preliminary reduction of the mixture of raw materials is conducted using a prereduction furnace provided with two or more of raw material charge openings along the periphery of the furnace at nearly equal pitch.
(3) A method for conducting preliminary reduction of a mixture of raw materials while forming a layer containing small amount of iron ore at the lowermost layer of the raw material layer on the rotary hearth of the prereduction furnace.
(4) In the above-described method (3), the lowermost layer of the raw material layer consists of an auxiliary raw material or consists mainly of the auxiliary raw material being charged to the melting furnace.
(5) A method in which a charge consists of powder and particle raw materials (one or more kind of raw materials selected from the group consisting of mixture of raw materials, iron ore, and carbonaceous material) and/or powder and particles of auxiliary raw material being charged to the melting furnace, is charged onto the rotary hearth of the prereduction furnace, then the granulates and/or molded forms of the mixture of raw materials are charged on the upper layer of the charge at downstream side in the direction of rotary hearth movement.
(6) In the above-described method (5), the particle size of the powder and particle charge being charged onto the rotary hearth is adjusted to a range of from 0.05 to 10 mm.
(7) In the above-described method (5), the powder and particle charge being charged onto the rotary hearth is the charge of coal or consisting mainly of coal.
(8) In the above-described method (5), the powder and particle charge being charged onto the rotary hearth is the charge of non-fired auxiliary raw material or the charge consisting mainly of non-fired auxiliary raw material.
(9) In the above-described method (5), the granulates and/or molded forms of the mixture of raw materials being charged onto the upper layer of the charge on the rotary hearth are the granules and/or molded forms that are not preliminarily dried.

The third mode of the method for metal smelting according to the present invention is a method for metal smelting by the procedure that a mixture of one or more of raw materials selected from the group consisting of following-given (a) through (c) in a prereduction furnace is preliminarily reduced so as a part of those raw materials to be metallized;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and
    thus preliminarily reduced mixture of raw materials is charged to a melting furnace for metal smelting, where the carbonaceous material is used as the reducing agent to carry out the melting and finally reducing thereof using the combustion heat of the carbonaceous material and the combustion heat of the carbon monoxide generated in the melting furnace as a main heat source, wherein the sensible heat of the high temperature flue gas discharged from the prereduction furnace is effectively used; and the flue gas is subjected to desulfurization treatment by contacting non-fired auxiliary raw material being charged to the melting furnace with the high temperature flue gas discharged from the prereduction furnace to conduct firing thereof.

An apparatus for metal smelting according to the present invention, which is suitable for carrying out that type of methods for metal smelting, is an apparatus for metal smelting that has: a prereduction furnace to conduct preliminarily reduction of one or more of the mixture of raw materials selected from the group consisting of above-described (a) through (c); a firing furnace that introduces a high temperature flue gas discharged from the prereduction furnace with a non-fired auxiliary material being charged to the melting furnace for metal smelting to fire the auxiliary raw material; and a melting furnace for metal smelting to melt and finally reduce the iron ore that was heated and preliminarily reduced in the prereduction furnace using a carbonaceous material as the reducing agent and using the combustion heat of the carbonaceous material and the combustion heat of carbon monoxide generated in the furnace as the main heat source.

As described before, the flue gas coming from a prereduction furnace such as RHF is at high temperatures (900 to 1,300°C) and contains relatively large amount of sulfur. Thus, by introducing the flue gas to an adequate furnace (such as rotary kiln type furnace, rotary hearth type furnace, suspension preheater type kiln, shaft type firing furnace, and fluidized bed type firing furnace), and let the flue gas contact with non-fired auxiliary raw material such as limestone and dolomite, the auxiliary raw material can be fired, and further the flue gas coming from RHF can be desulfurized because the CaO or the like in the auxiliary gas acts as the desulfurizing agent to the flue gas.

Since the flue gas discharged from the firing furnace is still at a high temperature level, the sensible heat of the flue gas can be used to heat air, and the heated air can be supplied to the prereduction furnace such as RHF as the combustion air.

Applicable firing furnace to introduce the flue gas from the prereduction furnace for conducting firing the auxiliary raw material may be a rotary kiln of direct heating type (a type to make the heating gas contact with the material to be heated). However, the firing furnace is not limited to that type.

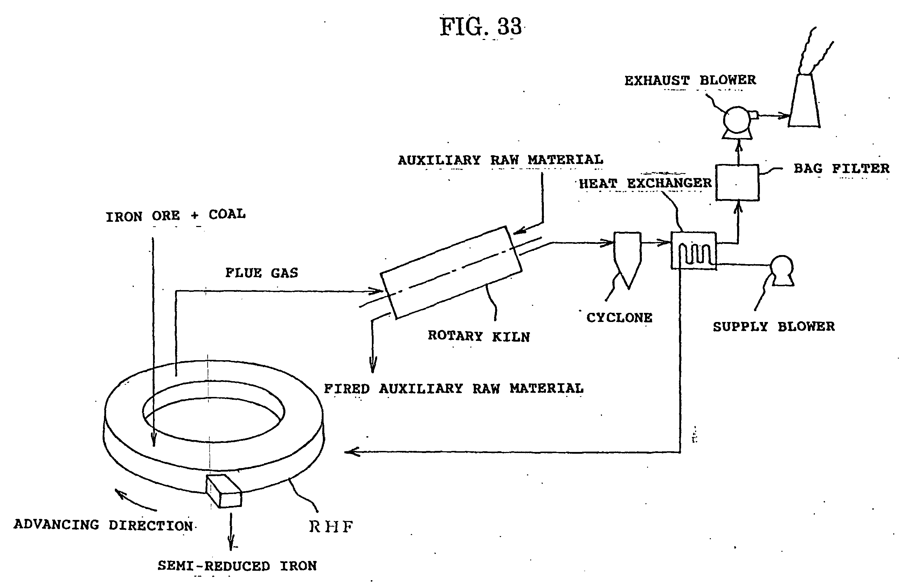

FIG. 33 shows a mode for the case of direct heating rotary kiln type firing furnace. The non-fired auxiliary raw material and the flue gas coming from the prereduction furnace (RHF in this example) are introduced to a rotary kiln, where both contact to each other, thus the auxiliary raw material is fired by the sensible heat of the flue gas, while the flue gas is desulfurized by CaO or the like existing in the auxiliary raw material. The fired auxiliary raw material is charged to the melting furnace such as SRF. On the other hand, the flue gas discharged from the rotary kiln is treated for removing dust in a cyclone, then is used to heat air in a heat exchanger using the sensible heat thereof, and the cooled flue gas is discharged to outside of the system via a bag filter. The preheated air which was heated in the heat exchanger is supplied to the prereduction furnace as the combustion air or the like.

The third mode of the method for metal smelting according to the present invention does not specifically limit the metallization degree of semi-reduced iron. Similar with the first mode of the method for metal smelting according to the present invention, the iron ore (iron ore in the mixture of raw materials) may be reduced in the prereduction furnace to a specified metallization degree (5 to 55% of average metallization degree), followed by melting and finally reducing in the melting furnace. Alternatively, as in the case of the second mode of the method for metal smelting according to the present invention, the iron ore (iron ore in the mixture of raw materials) may be reduced to a specified metallization degree (more than 5% of average metallization degree), and the iron ore is charged to the melting furnace together with an iron ore having low pre-reduction rate while adjusting the total metallization degree to a low level, (5 to 55% of average metallization degree), followed by melting and finally reducing. By applying the metallization degree of semi-reduced iron as a specific condition as specified in the above-described first and second modes of the method for metal smelting according to the present invention, and by adopting the above-described specific type of prereduction furnace, the metal smelting with further improved energy efficiency can be conducted. That is, according to the method for metal smelting, a high temperature flue gas coming from a prereduction furnace such as RHF that conducts preliminary reduction of iron ore to above-described specific range of average metallization degree, and the flue gas is brought to contact with a non-fired auxiliary raw material being charged to the melting furnace to fire the auxiliary raw material. The high temperature flue gas which was used for firing the auxiliary raw material is used to preheat air, at need, and the preheated air is supplied to a prereduction furnace such as RHF as the combustion air or the like.

An applicable apparatus therefor includes the above-described prereduction furnace such as RHF, the firing furnace that fires the auxiliary raw material by contacting with non-fired auxiliary raw material being charged to the melting furnace, and the melting furnace for metal smelting.

Also as the prereduction furnace used in the third mode of the method for metal smelting according to the present invention, the above-described RHF, horizontally moving hearth type, multi-hearth furnace type, rotary kiln type, and other various types of furnaces can be used. The applicable melting furnace is not specifically limited if only the furnace conducts melting and finally reducing the iron ore using a carbonaceous material as the reducing agent, and using the combustion heat of the carbonaceous material and the combustion heat of the carbon monoxide generated in the furnace as the main heat source. Therefore, a furnace of a type of using electric power as a part of the heat source can also be applied. For example, a furnace to decrease the power charge by installing a separate carbonaceous material charge unit and an oxygen (or air) injection unit to SAF and other electric furnace may be applied.

As for the metal oxide and/or metal hydroxide that is the target of melt-reduction, Ni ore, Cr ore, Mn ore, and the like other than the iron ore may be adopted.

**[Examples of RHF operation]**

Tests for manufacturing semi-reduced iron from iron ore were conducted using several RHF apparatuses having respective arrangements of raw material charge openings as shown in FIG. 23, FIG. 24, and FIG. 3. The productivity of semi-reduced iron on respective RHF apparatuses was determined. The results are shown in Table 1 and Table 2, along with the charge mode of mixture of raw materials, the configuration of applied RHF, the rotational speed of RHF, and the average metallization degree of the semi-reduced iron. The productivity of the semi-reduced iron was evaluated by the converted value to total Fe content in the manufactured semi-reduced iron product, and is expressed in the tables as the productivity index on the basis of the productivity of "operation example 3" using the conventional type RHF as "unity: 1".

Table 1

| Item | Operation example 1 | Operation example 2 | Operation example 3 |
|---|---|---|---|
| Mode of raw material charge | Pellet | Pellet | Pellet |
| Number of raw material charge openings | 2 | 3 | 1 |
| Number of raw material discharge openings | 1 | 1 | 1 |
| Index of rotational speed | 0.7 | 0.8 | 1 |
| Average metallization degree (%) | 55 | 10 | 90 |
| Productivity index | 1.4 | 2.3 | 1 |

Table 2

| Item | Operation example 4 | Operation example 5 | Operation example 6 |
|---|---|---|---|
| Mode of raw material charge | Powder and particle shape | Powder and particle shape | Powder and particle shape |
| Number of raw material charge openings | 2 | 3 | 1 |
| Number of raw material discharge openings | 1 | 1 | 1 |
| Index of rotational speed | 0.2 | 0.2 | 0.2 |
| Average metallization degree (%) | 55 | 10 | 90 |
| Productivity index | 1.0 | 1.6 | 0.7 |

The applied RHF was a test furnace having 5 m in furnace diameter. The applied mixture of raw materials (ore fines + coal) was in two kinds: pellets; and powder and particle mixture of raw materials. The rotational speed of the rotary hearth was expressed by the index: "0.7 to 1" (about 30 to 12 minutes for one turn) for pellets, and "0.2" (about 60 minutes for one turn) for powder and particle mixture of raw materials. The ore fines and the coal were the same grade throughout the operation examples for each of them.

The mixture of raw materials was prepared by the following procedure. For the pellets, a powder and particle ore prepared by crushing a ore fines in a crusher to approximate size of 40 $\mu$m and a powder and particle coal prepared by crushing in a crusher to almost equal size with that of the ore fines were mixed and granulated in a pelletizer to obtain pellets having approximate sizes of 10 to 15 mm.

As for the powder and particle mixture of raw materials, a ore fines of as-sinter-feed iron ore having approximate average particle sizes of from 0.2 to 0.4 mm and a powder and particle coal crushed to sizes of about 3 mm or less were mixed together in a mixer to prepare the powder and particle mixture of raw materials.

The mixing ratio of coal in the mixture of raw materials was adequately set in a range of about 2 to 4 (weight ratio) to the amount of ore. The temperature, of intrafurnace atmosphere of RHF was adjusted in a range of from 1,300 to 1,400°C. The average percentage of semi-reduced iron was adjusted by the intrafurnace atmosphere temperature, the mixing ratio of ore and of carbonaceous material, the rotational speed of rotary hearth, the thickness of raw material charge layer, and the like.

As of the Operation examples 1 through 6, the Operation example 1 and the Operation example 4 are the examples using RHF shown in FIG. 23, (RHF having two raw material charge openings 5a, 5b at two positions along the periphery of the furnace), and the Operation example 2 and the Operation example 5 are the examples using RHF shown in FIG. 24, (RHF having three raw material charge openings 5a, 5b, 5c at three positions along the periphery of the furnace),further the Operation example 3 and the Operation example 6 are RHF shown in FIG. 3, (RHF having only one raw material charge opening 5).

As shown in Table 1 and Table 2, the RHF having two or more positions of raw material charge openings in peripheral direction can manufacture semi-reduced iron having low level of average metallization degree at high productivity.

**[Embodiment]**

The applied RHF test furnace (with 5 m of furnace diameter) has the arrangement of raw material charge openings shown in FIG. 23 (RHF having two raw material charge openings 5a, 5b at two positions along the periphery of the furnace) and also the arrangement of raw material charge opening shown in FIG. 3 (RHF having only one raw material charge opening 5). With the RHF test furnace and with the above-described RHF operation examples, the mixture of raw materials (coal + ore fines) was preliminarily reduced to manufacture semi-reduced irons (pellets) having various levels of average metallization degree. The operational condition and the productivity for respective cases were converted to the basis of commercial apparatus (an RHF commercial apparatus having 50 m in furnace diameter). Assuming the finish smelting of these semi-reduced irons in commercial melting furnaces (SRF, SAF), the operational condition, the unit requirement of respective materials, the energy consumption, and the energy balance were estimated. Table 3 shows the result.

The Examples according to the present invention used an RHF shown in FIG. 23, and the Comparative Examples used an RHF shown in FIG. 3. The temperatures of intrafurnace atmosphere for each RHF were adequately adjusted in a range of from 1,300 to 1.500°C.

The RHF (hearth) rotational speed index and the . productivity index given in Table 3 are the RHF (hearth) rotational speed in the case that the semi-reduced iron having average metallization degree of 90 wt.%, and the productivity of the basis value ("1"), respectively.

## Table 3

| Item | Example 1 | Example 2 | Example 3 | Comparative Example 1 | Comparative Example 2 | Comparative Example 3 | Remark |
|---|---|---|---|---|---|---|---|
| Type of melting furnace | SRF | SRF | SRF | SAF | SRF | SRF | |
| RHF rotational speed index | 1.5 | 2 | 2.3 | 1 | 1 | 1 | |
| RHF average metallization degree (%) | 55 | 30 | 10 | 90 | 90 | 0 | |
| RHF reduction rate (%) | 70 | 53 | 40 | 93 | 93 | 33 | |
| RHF productivity index | 1.4 | 2 | 2.3 | 1 | 1 | 2.5 | |
| Coal amount required in RHF (kg/ton-molten iron) | 370 | 300 | 250 | 470 | 470 | 220 | |
| Coal amount required in melting furnace (kg/ton-molten iron) | 280 | 380 | 460 | 0 | 150 | 500 | |
| Oxygen required in melting furnace (Nm$^3$/ton-molten iron) | 240 | 290 | 330 | – | 170 | 350 | |
| Recovered gas in melting furnace (1) (Mcal/ton-molten iron) | 990 | 1300 | 1550 | 100 | 550 | 1680 | |
| Unit requirement of fuel in RHF (2) (Mcal/ton-molten iron) | 610 | 300 | 50 | 1050 | 1050 | 0 | |
| Utilities in RHF, melting furnace (3) (Mcal/ton-molten iron) | 360 | 400 | 430 | 1540 | 500 | 450 | Electricity, oxygen, nitrogen, other |
| Surplus energy in iron making (Mcal/ton-molten iron) | 20 | 600 | 1070 | -2490 | -1000 | 1230 | = (1) - ( (2)+(3) ) |
| Net energy consumption in iron making (Mcal/ton-molten iron) | 4800 | 4500 | 4200 | 6000 | 5600 | 4100 | |
| Energy consumption in succeeding processes (4) (Mcal/ton-molten iron) | 1100 | 1100 | 1100 | 1100 | 1100 | 1100 | |
| Surplus energy in iron making plant (Mcal/ton-molten iron) | -1080 | -500 | -30 | -3590 | -2100 | 130 | = (1) - ( (2)+(3)+(4) ) |
| Emitted energy (Mcal/ton-molten iron) | 0 | 0 | 0 | 0 | 0 | 130 | |

In Table 3, Comparative Example 1 is a case that the semi-reduced iron having 90 wt.% of average metallization degree is subjected to finish smelting in SAF. The final reduction in SAF was assumed to be done by the residual carbon existing in the semi-reduced iron, and the heat necessary for the reaction and for the melting of molten iron with slag was assumed as charged in electricity form via electrodes. The gas generated in SAF was assumed to be recovered as the recovered gas, which gas was supplied to RHF as a part of the fuel gas. The basicity (CaO/SiO$_2$) of the slag in SAF is normally adjusted to around 1 to 3. Generally, the calcium oxide and lightly-fired dolomite of necessary amount for the adjustment of the basicity are charged to SAF along with the semi-reduced iron. The Comparative Example 1 also assumed to apply the same adjustment method.

Comparative Example 2 is a case that a semi-reduced iron having 90 wt.% of average metallization degree is subjected to finish smelting in SRF. Comparative Example 3 is a case that a semi-reduced iron having 0 wt.% of average metallization degree (33% of pre-reduction percentage) is subjected to finish smelting in SRF. Examples 1 through 3 are the cases that semi-reduced irons having 10 to 55 wt.% of average metallization degree are subjected to finish smelting in SRF. The final reduction in SRF was assumed to be conducted using separately charged coal to SRF adding to the residual coal in the semi-reduced iron, and the heat necessary for the reaction and for the melting of molten iron with slag was assumed to be given by the combustion of carbon monoxide generated from above-described reduction reaction and by the combustion of coal with oxygen. The gas generated from' SRF, (calorific value of 800 to 1,800 kcal/Nm$^3$) was assumed to be recovered as the recovered gas to be used as fuel gas in RHF. The surplus recovered gas was assumed to be used as energy necessary in utilities of RHF and SRF, and further in succeeding processes (steel making, rolling, surface treating facilities, or the like). The firing of limestone and dolomite necessary for slag basicity adjustment was assumed to be totally conducted in RHF that manufactures the semi-reduced iron. Both the calcium oxide and lightly-fired dolomite, necessary for adjusting basicity, were assumed to be charged to SRF together with the raw materials.

For all of the above-described Examples and Comparative Examples, the semi-reduced iron (pellets) discharged from RHF was assumed to be transferred to the melting furnace in a state of stored in a sealed vessel to prevent temperature decrease and re-oxidization.

According to Table 3, when the Comparative Example 1 is compared with Examples 1 through 3 in terms of net energy consumption in iron making (at RHF and melting furnace), the Comparative Example 1 which dealt with the RHF-SAF process gave a value of 6 Gcal/ton, and the Examples 1 through 3 gave 4.8 Gcal/ton, 4.5 Gcal/ton, and 4.2 Gcal/ton, respectively, showing that the Examples 1 through 3 provide very high energy efficiency.

On the other hand, when the average metallization degree is lowered to 0%, as in the case of Comparative Example 3, the net energy consumption in iron making further decreases. Consequently, large amount of surplus gas is generated so that the surplus gas cannot fully be used even as the total iron making plant including the succeeding processes. Thus, as large as 130 Mcal/ton of energy has to be emitted. As a result, if the amount of emitted energy is counted in the iron making energy, the energy consumption of iron making unexpectedly increases. Even for the RHF-SRF process, when the average metallization degree of the semi-reduced iron is increased to 90 wt.% as in the case of Comparative Example 2, the energy consumption in iron making becomes worse to 5.6 Gcal/ton.

From the viewpoint of energy balance, Comparative Example 3, in which the average metallization degree of semi-reduced iron is set to lower level than the range specified in the present invention, generates surplus energy, as described above, even considered over the total iron making plant range. Inversely, Comparative Example 2, in which the average metallization degree of semi-reduced iron is set to higher level than the range specified in the present invention, the amount of gas fuel necessary in RHF becomes insufficient, and expensive energy source such as natural gas has to be introduced.

To the contrary, Example 1 according to the present invention is the case that the average metallization degree of the semi-reduced iron is set to 55 wt.%, and the case establishes almost complete energy balance in the iron making process. The energy balance is an ideal and critical one for the iron making plant that manufactures iron from ore and that sells cast iron and slabs.

On practically applying the method for metal smelting of the modes described above, the preliminary reduction of mixture of raw materials has several problems given below.

(1) The problem of reducibility of iron ore as raw material.
(2) The problem of productivity caused by heating method of heating burners.
(3) The problem of productivity caused by uneven temperature distribution in the raw material charge layer.
(4) The problem of fuel gas for heating burners, used in the prereduction furnace, and the problem of use of flue gas discharged from SRF.
(5) The problem of rupture of mixture of raw materials charged in the prereduction furnace.

The methods for metal smelting (I) through (VI) according to the present invention, described below, particularly contain the means to advantageously solve these problems.

The following is the description about the methods for metal smelting (I) through (VI) according to the present invention, with an example case of manufacturing molten iron by using an iron ore (ore fines) as the metal oxide and/ or the metal hydroxide as the target materials of the metal smelting, and by applying pre-reduction and melt-reduction to the iron ore.

**A. Method for metal smelting (I)**

Generally, sinter-feed ore (10 mm or smaller particle size) has a problem of poor reducibility when the ore is preliminarily reduced in a prereduction furnace such as RHF.

Since the sinter-feed ore is coarse in particle size compared with that of pellet-feed ore (0.08 mm or smaller particle size for pellet use), it is difficult to granulate the sinter-feed ore into pellet shape. Crushing the sinter-feed ore to a level of pellet-feed ore is not economical because significant cost is required. Therefore, conventionally the forming of sinter-feed ore to briquette shape is considered as a practical lump-forming method, though there is problems of increased amount of binder and decreased workability and yield.

When the pellet-base molded forms and the sinter-feed-base molded forms are compared, the sinter-feed ore is inferior in reducibility, as described above, so the reduction rate in the prereduction furnace gives significant difference to each other, and the sinter-feed-base molded forms provide only half to two-thirds of reduction rate to that of pellet-base molded forms.

To that kind of problem, the method for metal smelting (I) according to the present invention can improve the reducibility of ore during the preliminary reduction when the sinter-feed ore is used as the raw material ore. Thus, the method (I) decreases the cost and improves the productivity of the melt-reduction smelting of metal oxide and/or metal hydroxide of iron ore and the like.

For the conventional recognition and problems described above, the inventors of the present invention carried out re-examination on the reducibility of sinter-feed ore and of granulates or molded forms based on the sinter-feed ore. The examination revealed the following. The reduction rate significantly increases only by applying primary crushing to the sinter-feed ore to adequate particle sizes, and by mixing thus crushed sinter-ore with a carbonaceous material to conduct preliminary reduction, (that is, preliminary reduction is given without granulating and molding the ore, with the carbonaceous material using a binder, into pellets or the like), thus attaining the reduction rate and the productivity equal or near to those of the conventional pellets. Also it was revealed that the reduction rate and the productivity equal or near to those of the conventional pellets are attained even when the sinter-feed ore is crushed to adequate particle sizes in primary crushing, and thus crushed sinter-ore is mixed with a carbonaceous material to conduct granulation and molding, using an ore having coarse particles than conventional one.

The method for metal smelting (I) according to the present invention was completed based on the above-described findings. The method (I) is a method for metal smelting containing the steps of:

(A) preliminarily reducing a mixture of one or more of raw materials selected from the group consisting of following-given (a) through (c) in a prereduction furnace such as rotary hearth type, horizontally moving hearth type, multi-hearth type, or rotary kiln type furnace until a part of the iron ore is metallized;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof in a melting furnace for metal smelting to convert the carbonaceous material to the reducing agent therein, and by using the combustion heat of the carbonaceous material and the combustion heat of the carbon monoxide generated in the melting furnace as the main heat source. The iron ore in the mixture of raw materials is an ore prepared by primarily crushing an ore consisting mainly of sinter-feed ore. The particle size of the ore after the primary crushing is preferably in a range of from 0.1 to 1 mm.

By that type of method for metal smelting (I) according to the present invention, the reduction rate and the productivity equal or near to those of pellets are obtained by applying the mixture of raw materials based on the sinter-feed ore.

The following is the detail description of the method for metal smelting (I) according to the present invention.

In the method for metal smelting (I) according to the present invention, the mixture of raw materials being charged to the prereduction furnace is one or more of the mixture of raw materials (a) through (c) given below.

(a) The mixture of raw materials prepared by mixing at least a carbonaceous material and an iron ore.
(b) The mixture of raw materials prepared by mixing and granulating at least a carbonaceous material and an iron ore.

(c) The mixture of raw materials prepared by mixing and molding at least a carbonaceous material and an iron ore.

The mixture of raw materials is preliminarily reduced in a prereduction furnace such as rotary hearth type, horizontally moving hearth type, multi-hearth type, or rotary kiln type furnace until the iron ore becomes a specified average metallization degree (preferably 5 to 55%), and the preliminarily reduced mixture of raw materials is charged to a melting furnace for metal smelting such as an iron-bath type melt-reduction furnace (SRF), where the melting and final reduction of the iron ore are conducted using the carbonaceous material as the reducing agent and using the combustion heat of the carbonaceous material and the combustion heat of carbon monoxide generated in the furnace as the main heat source.

In the method for metal smelting (I), the iron ore in the mixture of raw materials uses an ore prepared through the primary crushing of an ore consisting mainly of sinter-feed ore for sintering, preferably a sinter-feed ore crushed to 0.1 to 1 mm of particle size by the primary crushing.

Presumable reason of significant improvement in the reduction rate by applying the sinter-feed ore after the primary crushing to adequate particle sizes as the iron ore being mixed in the mixture of raw materials is that the refinement of particles of sinter-feed ore by the primary crushing increases the surface area to make the contact with the carbonaceous material dense, thus significantly improving the reducibility.

Smaller size of the sinter-feed ore after crushing enhances further the effect. Since, however, the crushing raises the cost, there is an optimum size level. Since the original particle size and the particle size distribution differ in each kind of ore, the necessary energy for crushing and the crushing strength also differ in each case. Accordingly, an optimum size shall be determined for respective ores. It was found, however, that a target reducibility is attained without significantly increasing the crushing cost if only the ore is crushed to, generally, an approximate range of from 0.1 to 1 mm (the particle size of: passing through 1 mm of sheave opening, remaining on 0.1 mm of sheave opening).

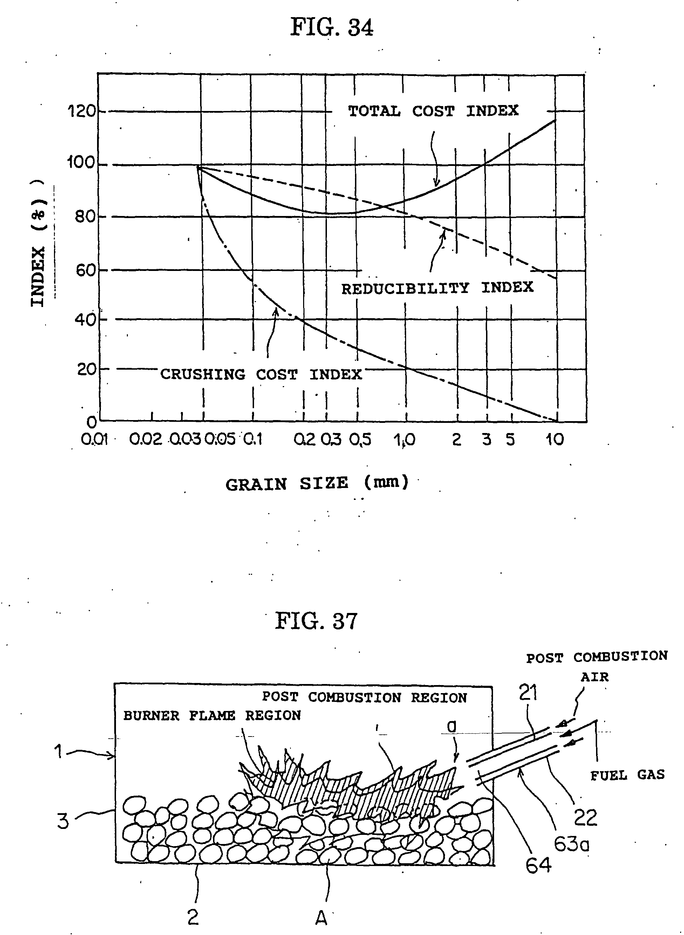

Table 4 and FIG. 34 show the relation between the particle size after crushed, the crushing cost index, and the reducibility index for a sinter-feed ore in the case that the sinter-feed ore is crushed in the primary crushing, which is then mixed with a carbonaceous material to prepare a mixture of raw materials, and the mixture of raw materials is charged to a prereduction furnace such as RHF to conduct preliminary reduction. These table and figure indicate that total cost becomes the lowest in a range of crushed particle sizes of from 0.1 to 1 mm. Therefore, according to the present invention, the particle size of the sinter-feed ore after the primary crushing is preferably in a range of from 0.1 to 1 mm.

Table 4

| Particle size (mm) *1 | 10 | 5 | 2.5 | 1 | 0.5 | 0.3 | 0.2 | 0.1 | 0.075 | 0.045 |
|---|---|---|---|---|---|---|---|---|---|---|
| Crushing cost index | 0 | 7 | 10 | 22 | 27 | 35 | 40 | 56 | 65 | 100 |
| Reducibility index | 60 | 66 | 72 | 76 | 86 | 88 | 90 | 94 | 96 | 100 |
| Total cost index | 115 | 106 | 98 | 86 | 82 | 81 | 83 | 88 | 92 | 100 |

*1 Representative particle size

As of the methods for metal smelting (I) according to the present invention, the method of preliminarily reducing only by mixing the ore prepared by primary crushing of the sinter-feed ore with the carbonaceous material has an advantage of eliminating the step for manufacturing pellets and briquettes, and further eliminating the facilities such as pelletizer and briquetting machine. In the case that the ore prepared by primary crushing the sinter-feed ore and the carbonaceous material are formed into pellets and briquettes, the ore powder and the carbonaceous material are heated and reduced in a state of further dense contact to each other, so the reduction rate is increased.

The RHF used in the methods for metal smelting (I) according to the present invention may be RHF shown in FIG. 2 and FIG. 3, or may be RHFs shown in FIG. 22, FIG. 23, and FIG. 24. The basic structure and function of these RHFs are described before in the description of the first mode of the method for metal smelting according to the present invention, and detail description thereabout is not given here.

The prereduction furnace may be, other than RHF, any of the prereduction furnace of horizontally moving hearth type, multi-hearth type, and rotary kiln type. The structure and the function of prereduction furnace of each of horizontally moving hearth type, multi-hearth type, and rotary kiln type are described before in the description of the first mode of the method for metal smelting according to the present invention, and detail description thereabout is not given here.

**B. Method for metal smelting (II)**

Heating the charge in conventional RHF adopts either the radiation heating using high temperature gas at upper section of the furnace or the conduction heating from the high temperature hearth. Accordingly, the heating process is controlled by the heat transfer, thus the productivity per unit area of hearth depends on the heat transfer capacity, and the increase in the productivity is difficult.

To cope with the problem, the method for metal smelting (II) according to the present invention significantly increases the productivity in the preliminary reduction stage, through which the cost decrease and the productivity improvement are achieved in the melt-reduction smelting for the metal oxide and/or the metal hydroxide such as iron ore.

To the above-described conventional problems on RHF, the inventors of the present invention focused on the point that, for the case of manufacturing molten iron by charging a preliminarily reduced ore to the iron-bath type melt-reduction furnace, it is preferred that the semi-reduced iron is brought to a low metallization degree, and acquired a concept of (1) and of (2), thus completed the method for metal smelting (II) according to the present invention:

(1) Direct heating of the raw material charge in the prereduction furnace using burner flame significantly improves the productivity per unit hearth area owing to the effect of enhancement of both the luminous flame radiation heat transfer by the burner flame and the convection heat transfer by the generated high temperature combustion gas.
(2) With that type of heating method, since the surrounding area of the reducing flame of the burner flame inevitably accompanies the oxidizing flame, so that the surface of the raw material being heated is oxidized. Consequently, if the high metallization degree of the charge is aimed, the condition becomes highly disadvantageous one, substantially failing in practical application. However, there is no problem in the above-described method for metal smelting for preliminarily reducing the iron ore at a low metallization degree.

That is, the method for metal smelting (II) according to the present invention is a method for metal smelting containing the steps of:

(A) preliminarily reducing a mixture of one or more of raw materials selected from the group consisting of following-given (a) through (c) in a prereduction furnace such as that of rotary hearth type and horizontally moving hearth type until a part of the iron ore is metallized in the prereduction furnace;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof in a melting furnace for metal smelting to convert the carbonaceous material to the reducing agent therein, and by using the combustion heat of the carbonaceous material and the combustion heat of the carbon monoxide generated in the melting furnace as the main heat source; wherein, during the heating of the mixture of raw materials in the prereduction furnace, the flame of heating burner is brought into contact with at least a part of the top surface of the mixture of the raw materials. According to that type of method for metal smelting (II) of the present invention, efficient enhancement of thermal efficiency in the prereduction furnace significantly improves the productivity in the prereduction furnace.

The apparatus for metal smelting according to the present invention suitable for carrying out the above-described method for metal smelting (II) contains: a pre-reducing furnace of rotary hearth type or horizontally moving hearth type, which conducts preliminary reduction by charging one or more of the mixture of raw materials selected from the group consisting of (a) through (c),

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

a melting furnace for metal smelting to melt and finally reduce the mixture of raw materials that is preliminarily reduced in the prereduction furnace using the carbonaceous material as the reducing agent and using the combustion heat of the carbonaceous material and the combustion heat of carbon monoxide generated in the furnace as the main heat source; wherein the flame of heating burner is brought into contact with at least a part of the top surface of the mixture of the raw materials in a mode of either one of the (i) through (iii) given below:

(i) The burner tuyere is located at lower section of the side wall of furnace body.
(ii) The burner tuyere is located on the side wall of furnace body, and the burner tuyere is inclined downward by 45° from horizontal plane.
(iii) The burner tuyere is located on ceiling facing downward.

The following is the detail description of the method for metal smelting (II) according to the present invention and the apparatus for metal smelting.
The mixture of raw materials that is charged to the prereduction furnace in the method for metal smelting (II) according to the present invention is at least one of the following (a) through (c).

(a) The mixture of raw materials prepared by mixing at least a carbonaceous material and an iron ore.
(b) The mixture of raw materials prepared by mixing and granulating at least a carbonaceous material and an iron ore.
(c) The mixture of raw materials prepared by mixing and molding at least a carbonaceous material and an iron ore.

The mixture of raw materials is preliminarily reduced in a prereduction furnace such as rotary hearth type, horizontally moving hearth type, multi-hearth type, or rotary kiln type furnace until the iron ore becomes a specified average metallization degree (preferably 5 to 55%), and the preliminarily reduced mixture of raw materials is charged to a melting furnace for metal smelting such as an iron-bath type melt-reduction furnace (SRF), where the melting and final reduction of the iron ore are conducted using the carbonaceous material as the reducing agent and using the combustion heat of the carbonaceous material and the combustion heat of carbon monoxide generated in the furnace as the main heat source.
According to the method for metal smelting (II), on heating the mixture of raw materials in the prereduction furnace, the flame of heating burner (combustion burner) is brought into contact with at least a part of the top surface of the mixture of raw materials. The flame of heating burner herein indicates the portion that emits visual light by the combustion of gas. Normal diffusion flame forms an oxidizing flame at outer section thereof and a reducing flame at inner section thereof. Thus, the luminous flame radiation heat transfer transmits the combustion heat efficiently to the object compared with normal radiation heat transfer.
The following is the description of the method for metal smelting (II) according to the present invention referring to an example case of adopting RHF as the prereduction furnace.
Applicable RHF includes RHF shown in FIG. 2 and FIG. 3, and RHFs shown in FIG. 22, FIG. 23, and FIG. 24. The basic structure and function of these RHFs are described before in the description of the first mode of the method for metal smelting according to the present invention, and detail description thereabout is not given here.
During the operation of preliminary reduction in RHF according to the present invention, heating the mixture of raw materials is conduced by contacting at least a part thereof with the flame of heating burner. With the direct heating of the burner flame, the productivity per unit hearth area is improved owing to the effect of luminous flame radiation heat transfer of the burner flame and to the effect of enhancing convection heat transfer from the generated high temperature combustion gas. In this method, however, an oxidizing flame inevitably exists surrounding the reducing flame of the burner flame, thus the surface of the object is likely oxidized. Therefore, the method cannot be applied when the reduction in RHF aims at high metallization degree. That is, the method is applicable only in the present invention that has a presumption of low metallization degree in the reduction in RHF.
The apparatus for the metal smelting according to the present invention has an arrangement of heating burners in the prereduction furnace suitable for the above-described method. That is, the heating burners to heat the mixture of raw materials charged onto the hearth conform to either one of the modes (i) through (iii) given below.

(i) The burner tuyere is located at lower section of the side wall of furnace body.
(ii) The burner tuyere is located on the side wall of furnace body, and the burner tuyere is inclined downward by 45° from horizontal plane.
(iii) The burner tuyere is located on ceiling facing downward.

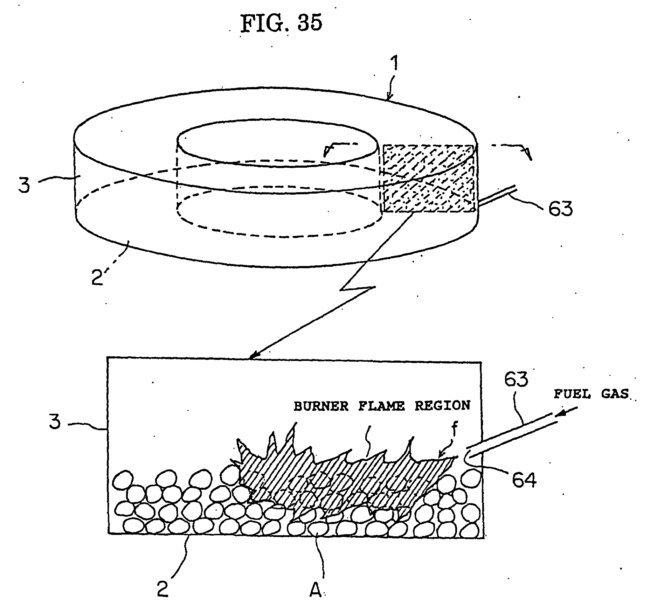

FIG. 35 shows a mode for carrying out the present invention, giving a cross sectional view in the radial direction of the furnace of RHF at the burner mounting position.
The heating burner 63 is mounted in a manner that a part of the burner flame "f" contacts at least a part of the top surface of the raw material charge layer A, and that particularly the reducing flame contacts with the raw material charge. To do this, the burner tuyere 64 is positioned at lower part of the furnace side wall, and the angle of the burner tuyere facing the hearth surface is in a range of from horizontal plane to 45° downward therefrom. If the burner tuyere angle is upward from horizontal plane, the burner flame "f" cannot be brought into contact with the raw material charge A. If, the burner flame "f" exceeds 45° downward, the heating of raw material charge layer A is limited to a local zone.

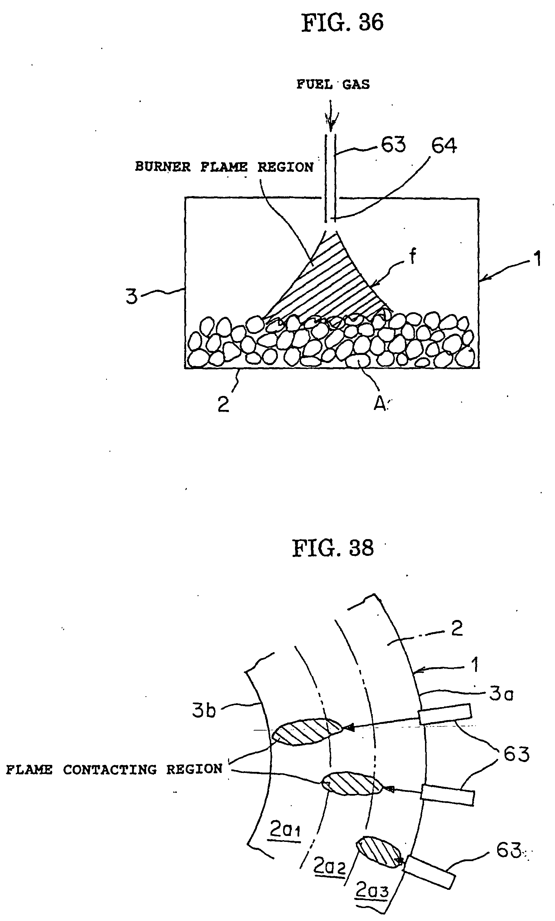

FIG. 36 shows another mode for carrying out the present invention, in which the heating burner 63 is located on the ceiling of furnace body 1 facing downward therefrom. When the burner tuyere 64 is located on the ceiling of furnace body, excessive distance between the tuyere and the hearth fails in reaching the flame to the hearth. Accordingly, the burner tuyere 64 is preferably positioned within 2.5 m from the hearth, (more preferably within 2.0 m, and most preferably within 1.5 m). The distance allows the burner flame 5 stably contacting the top surface of the raw material charge layer A on the hearth.

A preferable range of the air ratio for burner combustion is from 0.5 to 1.3, more preferably from 0.6 to 0.85. Within the range, the combustion rate is high, and the flame in an adiabatic flame temperature range directly contacts with the object, so that the convection heat transfer is efficiently enhanced.

To avoid excessive thermal load on the hearth section, it is preferable that the hearth section has a layer thereon containing a carbonaceous material or an auxiliary raw material, or their mixture, other than the mixture of raw materials. The method and apparatus according to the present invention allow efficiently combusting the gas of volatile matter generated by heating the carbonaceous material and the fuel components in the decomposition gas, further transmitting the combustion heat to the raw material charge.

By blowing post combustion air along with the combustion gas coming from the heating burner to a place near the raw material charge or to a place directly contacting with the combustion flame, unburned CO and $H_2$ can be combusted by the post combustion air, thus the radiation heat thereof can be used for heating the mixture of raw materials. As a result, the thermal efficiency of the furnace further increases. FIG. 37 shows the above-described state. A heating burner 63a is structured by inserting a burner body 65 into a post combustion air supply pipe 66 to charge the post combustion air. When the post combustion air is heated to an approximate level of from 300 to 600°C, the effect is further enhanced.

As in the modes of FIG. 35 and FIG. 37, when the heating burners 63, 63a are located on the side wall of the furnace body 1, the flame directs lateral to the hearth moving direction, and the length of the heating burner flame is preferably at least about one-thirds to half of the hearth width, more preferably to about 79 to 80% of the furnace width. Also in such a case, the radiation heat transfer effect by the combustion in upper gas space section becomes a level of conventional modes.

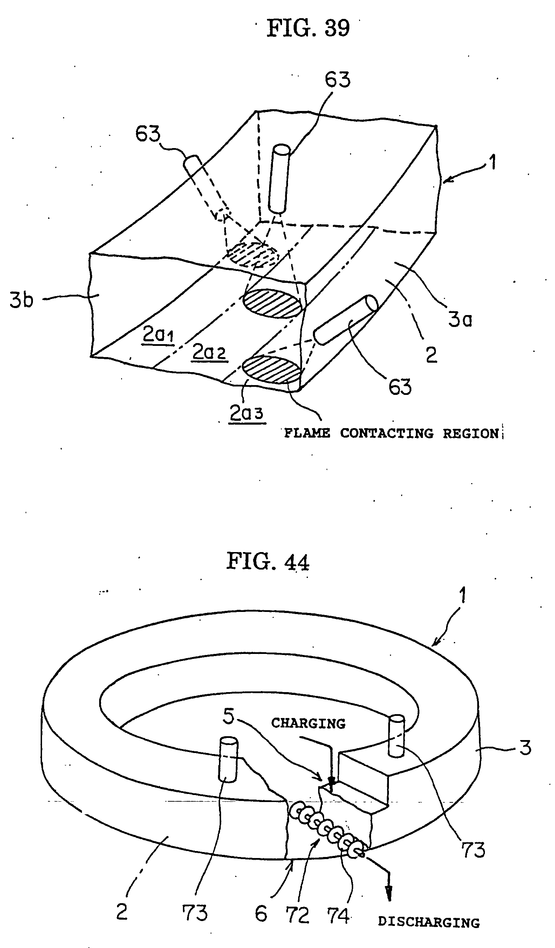

To assure uniform contact of flame with the raw material charge in the hearth width direction, the hearth width may be divided into plurality of segments $2a_1$ through $2a_3$ in the width direction as shown in FIG. 38 (plan view), and the flame "f" of each of different heating burners 63 may be brought into contact with the raw material charge in each segment. In this case, each heating burner 63 may be located on only one side of the furnace wall 3a as shown in FIG. 38, or the heating burners 63 may be located on both sides of the furnace wall 3a, 3b, and also on the ceiling, as shown in FIG. 39.

The method for metal smelting (II) according to the present invention may use a horizontally moving hearth type prereduction furnace other than RHF. The structure and function of the horizontally moving hearth type prereduction furnace are described before in the description of the first mode of the method for metal smelting according to the present invention, and description thereabout is not given here.

**C. Method for metal smelting (III)**

In RHF of the type shown in FIG. 2 and FIG. 3, the raw material charge layer is heated by the heating burners (combustion burners) located on side furnace wall or the like, and the raw material charge layer is heated by mainly the radiation heat transfer from upper section of the furnace or the conduction heat transfer from the hearth section. When, however, the raw material charge layer is heated by the radiation heat transfer from upper section of the furnace or the conduction heat transfer from the hearth section, the heat transfer inside of the raw material charge layer becomes the rate controlling factor of the temperature rise process. Accordingly, even when the heat input from the heating burner and the like is increased to increase the production rate, the result is only increasing in the uneven temperature distribution within the raw material charge layer, and the improvement in uniform temperature level is difficult to attain.

To that kind of problem, the method for metal smelting (III) according to the present invention can minimize the unevenness of the temperature distribution in the raw material charge layer, and attains the effect of increase in the production rate corresponding to the increase in the energy input. Thus, the cost decreases and the productivity increases in the melt-reduction smelting of metal oxide and/or metal hydroxide such as iron ore.

That is, the method for metal smelting (III) according to the present invention is a method for metal smelting containing the steps of:

(A) preliminarily reducing a mixture of one or more of raw materials selected from the group consisting of following-given (a) through (c) in a prereduction furnace such as that of rotary hearth type and horizontally moving hearth type until a part of the iron ore is metallized in the prereduction furnace;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof in a melting furnace for metal smelting to' convert the carbonaceous material to the reducing agent therein, and by using the combustion heat of the carbonaceous material and the combustion heat of the carbon monoxide generated in the melting furnace as the main heat source; wherein, the mixture of raw materials that was charged onto the hearth of the prereduction furnace in the step (A) is rotated and/or moved against the hearth during the heating and reducing step. According to that type of method for metal smelting (III) of the present invention, the unevenness of the temperature distribution within the raw material charge layer is eliminated, thus allowing the productivity of the furnace significantly improving.

The apparatus for metal smelting according to the present invention suitable for carrying out the above-described method for metal smelting (III) contains: a pre-reducing furnace of rotary hearth type or horizontally moving hearth type, which conducts preliminary reduction by charging one or more of the mixture of raw materials selected from the group consisting of (a) through (c),

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and
a melting furnace for metal smelting to melt and finally reduce the mixture of raw materials that is preliminarily reduced in the prereduction furnace using the carbonaceous material as the reducing agent and using the combustion heat of the carbonaceous material and the combustion heat of carbon monoxide generated in the furnace as the main heat source; wherein the prereduction furnace is provided a means to rotate and/or move against the hearth during the heating and reducing step.

The following is the detail description of the method for metal smelting (III) according to the present invention and the apparatus for metal smelting.

The mixture of raw materials that is charged to the prereduction furnace in the method for metal smelting (III) according to the present invention is at least one of the following (a) through (c).

(a) The mixture of raw materials prepared by mixing at least a carbonaceous material and an iron ore.
(b) The mixture of raw materials prepared by mixing and granulating at least a carbonaceous material and an iron ore.
(c) The mixture of raw materials prepared by mixing and molding at least a carbonaceous material and an iron ore.

The mixture of raw materials is preliminarily reduced in a prereduction furnace such as rotary hearth type and horizontally moving hearth type until the iron ore becomes a specified average metallization degree (preferably 5 to 55%), and the preliminarily reduced mixture of raw materials is charged to a melting furnace for metal smelting such as an iron-bath type melt-reduction furnace (SRF), where the melting and final reduction of the iron ore are conducted using the carbonaceous material as the reducing agent and using the combustion heat of the carbonaceous material and the combustion heat of carbon monoxide generated in the furnace as the main heat source.

According to the method for metal smelting (III), during the process of heating and reducing the mixture or raw materials charged onto the hearth of prereduction furnace to a layered state, the mixture of raw materials is rotated and/or moved against the hearth, thus attaining the uniform temperature distribution within the charge layer of the mixture of raw materials and attaining the homogeneous percentage of preliminary reduction.

The following is the description of modes of the method for metal smelting (III) according to the present invention referring to an example case of adopting RHF as the prereduction furnace.

Applicable RHF includes RHF shown in FIG. 2 and FIG. 3, and RHFs shown in FIG. 22, FIG. 23, and FIG. 24. The basic structure and function of these RHFs are described before in the description of the first mode of the method for metal smelting according to the present invention, and detail description thereabout is not given here.

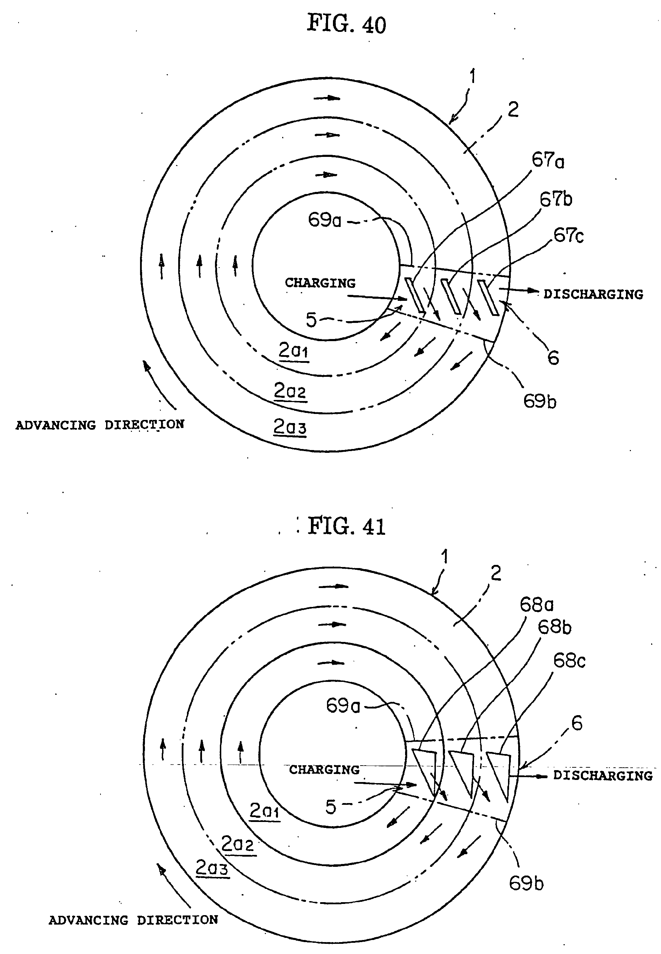

FIG. 40 shows a mode in which the present invention is applied to RHF. The reference number 2 designates the rotary hearth. According to the mode, baffle plates 67a through 67c are located at three positions in the furnace radial direction to displace (move) the raw material charge on the hearth toward outer periphery of the hearth (to outer direction in the furnace radial direction) successively on every turn of the hearth, thus letting the raw material charge being discharged from the furnace after the three turns thereof.

Each of the baffle plates 67 moves the raw material charge on the rotary hearth 2 to outer peripheral side (to outer direction in the furnace radial direction), so the baffle plates are positioned in a tilt angle against the hearth rotational direction viewed from above. Each of these baffle plates 67 is fixed to the furnace wall 3 (side section, ceiling, or the like) of the furnace body 1 in a manner that the lower edge of the baffle plate comes close to the top surface of the rotary hearth 2, thus the baffle plate stops the raw material charge on the rotary hearth 2 in a tilt angle position. As a result, the baffle plate pushes the raw material charge toward the outer periphery of the hearth, successively.

According to the mode, the hearth width is divided into three segments $2a_1$ through $2a_3$ in the width direction thereof by the three baffle plates 67a through 67c. As of these, the baffle plate 67a in the segment $2a_1$ (innermost periphery side) has a raw material charge opening 5 at the rear side thereof (at downstream side in the direction of hearth rotation), and the baffle plate 67c in the segment $2a_3$ (outermost periphery side) has a raw material discharge opening 6 at the front side thereof (at upstream side in the direction of hearth rotation).

In FIG. 40, gas seal plates 69a and 69b are provided to separate the adjacent raw material charge section (raw material charge opening 5) and the raw material discharge section (raw material discharge opening 6) from other intrafurnace space, and to keep the temperature of the atmosphere at these sections lower than the temperature of atmosphere of other intrafurnace space.

According to the RHF of the mode, the action of baffle plates 67a through 67c makes the raw material charge on the hearth successively move from inner periphery side to outer periphery side, so that the unevenness and dispersion of preheat temperature and of ultimate metallization degree of the raw material charge caused by the distribution and unevenness of the intrafurnace temperature conditions in peripheral direction and radial direction of the furnace are eliminated, thus attaining the efficient preheating of raw material charge and efficient preliminary reduction of the ore.

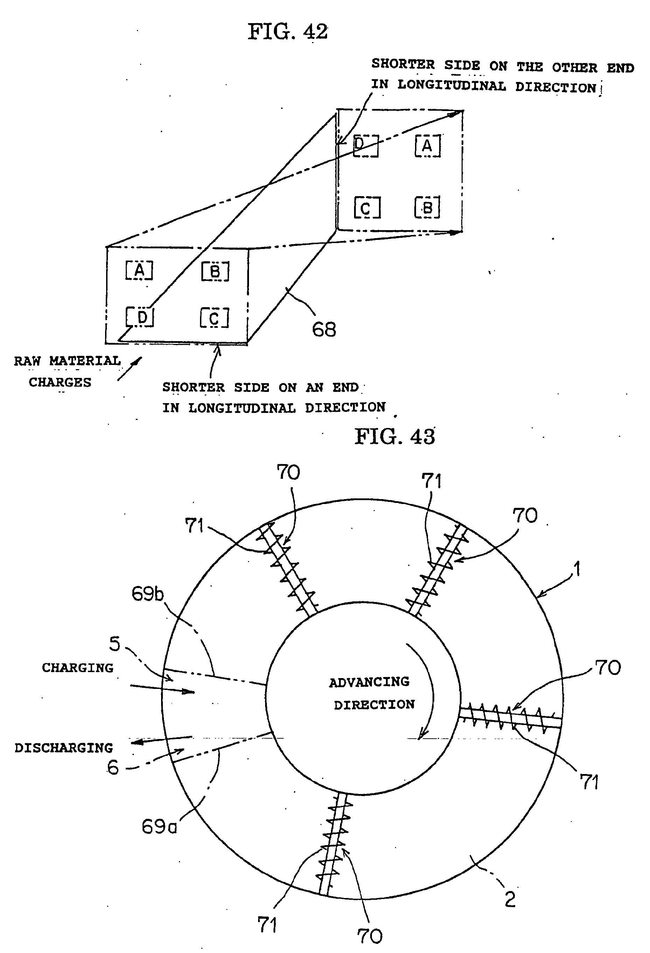

FIG. 41 shows another mode of the present invention. In this mode, twisted plates 68a through 68c shown in FIG. 42 for rotating the charge are located at three positions in the furnace radial direction. During the period of three turns of the raw material charge, the raw materials on the hearth are guided onto each of the twisted plates 68a through 68c, and are lifted, then are again discharged onto the hearth of outer periphery side.

As illustrated in FIG. 42, each of the twisted plates 68 has a skewed structure that miner sides on the edges of the baffle plate have several tens of degrees of angle (for example, 90°) from each other, thus making the total baffle plate twist, and the miner side at one end thereof is placed to almost parallel to the hearth surface and close thereto. Similar with the above-described baffle plate 67, the baffle plate 68 is supported and fixed to the furnace wall 3 (side section, ceiling, or the like). As a result, as illustrated in FIG. 42, the raw materials which were guided from this side of left in the figure onto the twisted plate 68 are lifted along the longitudinal direction of the twisted plate 68, then are discharged to the right side in the figure, and are again fallen down on the hearth.

Similar with the mode of FIG. 40, the mode also divides the hearth is the width direction to three segments $2a_1$ through $2a_3$ by the three twisted plates 68a through 68c. As of these, the baffle plate 68a in the segment $2a_1$ (innermost periphery side) has a raw material charge opening 5 at the rear side thereof (at downstream side in the direction of hearth rotation), and the baffle plate 68c in the segment $2a_3$ (outermost periphery side) has a raw material discharge opening 6 at the front side thereof (at upstream side in the direction of hearth rotation).

In FIG. 42, gas seal plates 69a, 69b are adopted as in the mode of FIG. 40. According to the RHF mode, the action of twisted plates 68a through 68c makes the raw material charge on the hearth move from inner periphery side to outer periphery. Consequently, the unevenness and dispersion of preheat temperature and of ultimate metallization degree of the raw material charge caused by the distribution and unevenness of the intrafurnace temperature conditions in peripheral direction and radial direction of the furnace can be eliminated. Furthermore, since the twisted plate 68 digs out the raw materials of the hearth surface side in the raw material charge layer, the raw materials of the lower side in the raw material charge layer (the hearth surface side) are moved toward the upper layer side, and that the heat-receiving surface is varied by the rotation of the raw materials, thus the unevenness and dispersion of preheat temperature and of ultimate metallization degree of the raw material charge caused by the distribution and unevenness of the intrafurnace temperature conditions in peripheral direction and radial direction of the furnace can be eliminated further effectively, thus the preheating of the raw material charge and the preliminary reduction of the ore are conducted efficiently. The mode is effective also in the case that the raw material charge is not layered because the heat-receiving surface of the raw materials (granulates or molded forms) can be varied.

FIG. 43 shows another mode according to the present invention. A screw unit 70 is located in the furnace width direction. By mixing and agitating (that is, digging out) the raw material charge layer using the screw unit 70, the raw materials are rotated and/or moved against the hearth. Particularly when that type of screw unit 70 is applied, the effect is increased because the agitation action by the screw makes the raw materials in the raw material charge layer change the place up and down.

The screw unit 70 contains a crew body 71 (screw shaft) crossing in the furnace width direction, and a rotary drive unit (not shown ) for the screw body 71. The screw unit 70 is supported by and fixed to the furnace wall 3 or the like in a state that the lower edge the screw body 71 comes close to the to surface of the hearth.

The mode adopts plurality of screw units 70 in the peripheral direction of the furnace.

FIG. 43 shows gas seal plates 69a, 69b similar with those in FIG. 40.

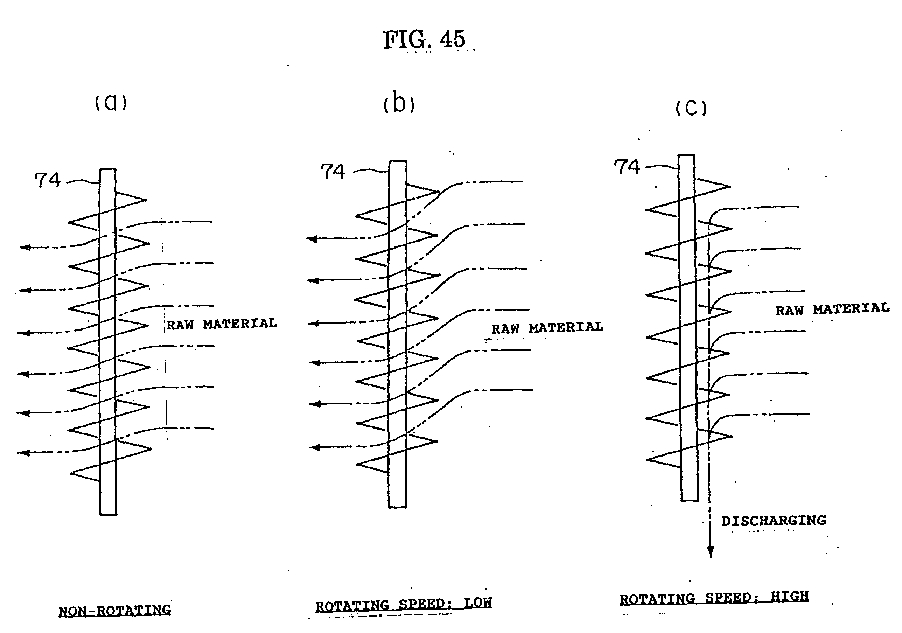

FIG. 44 shows further mode according to the present invention, using a screw unit. The mode provides the screw unit 72 with a raw material discharge function and a function for mixing and agitating the charge layer. The screw unit 72 is located in the raw material discharge section. Similar with the above-described RHF, the raw material discharge section (raw material discharge opening 6) and adjacent raw material charge section (raw material charge opening 5) are separated from other intrafurnace space (drying and heating zone, reducing zone) of RHF by the gas seal plates (not shown). Each of the sides of the raw material discharge section and of the raw material charge section, (or each of the sides of the drying and heating zone and the reducing zone) is provided with a flue gas duct 73 (intrafurnace gas discharge opening). The flue gas in the furnace is vented through the flue gas duct 73 using an induced draft fan (not shown). Owing to the suction effect of the gas seal plates and the flue gas duct 73, the temperature of the atmosphere in the raw material discharge section is kept to a low level, thus assuring the durability of the screw unit 72 to a high level.

The structure of the screw unit 72 is almost the same as that of FIG. 25. The screw unit 72 functions as a raw material discharge unit or as a mixing and agitating unit for the raw material charge layer by adjusting the rotational speed of the screw body 74 (screw shaft). That is, as shown in FIG. 45(c), when the screw body 74 is rotated at a relatively high speed, the screw unit 72 functions as the raw material discharge unit to discharge the raw material charge layer on the hearth to outside the furnace. On the other hand, when the screw unit 74 is rotated at a relatively slow speed, the screw unit 72 functions as the mixing and agitating unit for the raw material charge layer, as shown in FIG. 45(b), to allow the raw material in the raw material charge layer moving in the furnace width direction, while mixing and agitating the raw materials in the raw material charge layer. When the screw unit body 74 stops the rotation, the raw materials in the raw material charge layer pass between the blades of the screw body 74, thus, the raw materials very slightly move.

Therefore, in the mode of FIG. 45(b), adequate adjustment of the rotational speed allows adjusting the transfer distance of the raw materials and the degree of mixing and agitating the raw materials in the hearth width direction. That is, by adjusting the rotational speed of the screw body 74, the transfer distance M per one turn of RHF, thus arbitrary retention time in the furnace, $T (= W/M \times 1/S)$, or arbitrary cycles of mixing and agitating, $N (=W/M)$, can be established or adjusted. Through the procedure, the adjustment of metallization degree of semi-reduced iron that is discharged from RHF is very easily performed.

As described above, by rotating and/or moving the raw material charge against the hearth using a mechanical means, the temperature of intrafurnace atmosphere can be adjusted in a wide range of from low temperature region to high temperature region in the period of from the heating stage after the raw material charge to discharge time. In addition, even with a non-dried raw material charge, stable heating and reducing can be done by drying the raw materials during the initial period after charged.

When the mechanical means is located within the height of raw material charge layer, the mechanical means does not receive radiation of the intrafurnace atmosphere, so the durability of the mechanical means increases.

The mechanism to rotate and/or move the raw material in the raw material charge layer is not necessarily limited to those of FIG. 40 through FIG. 44, and other various modes may be applicable. For example, a mechanical means other than the above-described screw unit may be applied to rotate and reverse the charge, or to horizontally move thereof. Combination of these means achieves more surely the uniformization of the preheat temperature and the metallization degree of the raw material charge. For the case of, for example, single layer of pellets, the necessary power to rotate and move the charge becomes small, so further simple means can be applied.

According to the above-described method for metal smelting (III) of the present invention, the temperature distribution and the reduction degree of the raw material charge can be uniformized, and the effect of increase in production rate corresponding to the increased energy input is attained. For a conventional case that sufficient reduction degree cannot be attained unless the mixture of raw materials such as pellets is to limit a single layer, the method according to the present invention decreases the temperature differences in vertical direction of the raw material charge, and the case of multi-layer (2 to 3 layers) of pellets gives a reduction degree near to that of the conventional single layer case. As a result, the furnace productivity can be significantly increased.

The method for metal smelting (III) according to the present invention can apply a horizontally moving hearth type prereduction furnace other than RHF. The basic structure and function of the horizontally moving hearth type prereduction furnace are described before in the description of the first mode of the method for metal smelting according to the present invention, and detail description thereabout is not given here.

### D. Method for metal smelting (IV)

On carrying out the above-described various modes of the method for metal smelting according to the present invention, several problems arise. The problems include that of fuel gas' for heating burner for the prereduction furnace, and that of utilization of flue gas discharged from the melting furnace. That is, for the reduction treatment of the mixture of raw materials in the prereduction furnace, the use of gas generated in the melting furnace as the fuel gas for heating burner, particularly at a high temperature state of the generated gas, is the most preferable in terms of total process energy efficiency. The gas generated from a melting furnace with low internal pressure (for example, less than 1.2 atm of internal absolute pressure), however, is under a low pressure level, so the gas is necessary to be pressurized before supplied to the heating burner. Since, however, the gas generated in the melting furnace contains large amount of dust, it cannot be pressurized by compressor or the like. As a result, the gas generated in the melting furnace is difficult for using as the fuel gas of heating burner.

From the viewpoint of effective use of the gas generated in the melting furnace, a boiler may be installed to recover the gas sensible heat as steam. To do this, however, a boiler, a turbine and other equipment are necessary be installed for generating electric power from the recovered steam, and the investment is significant. On the other hand, dissipating the sensible heat of the gas generated in the melting furnace without utilization thereof hinders the improvement of total process thermal efficiency.

To those problems, the method for metal smelting (IV) according to the present invention can use the gas generated in the melting furnace for metal smelting as the fuel gas for heating burner of the prereduction furnace at high temperature gas level, and can operate the apparatus with small unit requirement of energy, thus the cost decrease and the improvement of productivity of melt-reduction smelting of metal oxide and/or metal hydroxide such as iron ore can be attained.

The first mode of the method for metal smelting (IV) according to the present invention is a method for metal smelting including the steps of:

(A) preliminarily reducing a mixture of one or more of raw materials selected from the group consisting of following-given (a) through (c) in a prereduction furnace such as that of rotary hearth type, horizontally moving hearth type, multi-hearth type, and rotary kiln type until a part of the iron ore is metallized in the prereduction furnace;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A); by charging thereof in a melting furnace for metal smelting to convert the carbonaceous material to the reducing agent therein, and by using the combustion heat of the carbonaceous material and the combustion heat of the carbon monoxide generated in the melting furnace as the main heat source; wherein, at least a part of the high temperature gas generated in the step (B) is blown into the heating burner as the fuel gas using an injector action that applies the fuel air and/or a gas generated in the melting furnace, which was pressurized after removing dust therefrom.

The second mode of the method for metal smelting (IV) according to the present invention is a method for metal smelting including the steps of:

(A) preliminarily reducing a mixture of one or more of raw materials selected from the group consisting of following-given (a) through (c) in a prereduction furnace such as that of rotary hearth type, horizontally moving hearth type, multi-hearth type, and rotary hearth type until a part of the iron ore is metallized in the prereduction furnace;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and

(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof in a melting furnace for metal smelting to convert the carbonaceous material to the reducing agent therein, and by using the combustion heat of the carbonaceous material and the combustion heat of the carbon monoxide generated in the melting furnace as the main heat source; wherein, at least a part of the high temperature gas generated in the step (B) is cooled to 800°C or below, and the dust in the gas is separated and recovered by a high temperature dust removal unit, then the gas is supplied to the heating burner of the prereduction furnace as the high temperature fuel gas.

As described above, the method for metal smelting (IV) according to the present invention can use the gas generated in the melting furnace as the high temperature fuel gas for heating burner of the prereduction furnace, and the operation of the apparatus can be done at a low unit requirement of energy.

The following is the detail description of the method for metal smelting (IV) according to the present invention and of the prereduction furnace suitable for the method.

In the method for metal smelting (IV) according to the present invention, the mixture of raw materials being charged to the prereduction furnace is at least one mixture of raw materials selected from the group consisting of (a) through (c),

(a) a mixture of raw materials prepared by mixing at least a carbonaceous material and a metal oxide and/or a metal hydroxide,

(b) a mixture of raw materials prepared by mixing and granulating at least a carbonaceous material and a metal oxide and/or a metal hydroxide, and

(c) a mixture of raw materials prepared by mixing and molding at least a carbonaceous material and a metal oxide and/or a metal hydroxide.

The mixture of raw materials is preliminarily reduced until the iron ore reaches a specified metallization degree (preferably 5 to 55%) in a prereduction furnace such as that of rotary hearth type, horizontally moving hearth type, multi-hearth and rotary kiln type, then the mixture of raw materials is charged to a melting furnace for metal smelting such as iron-bath type melt-reduction furnace (SRF), (hereinafter the description deals with SRF as an example). In SRF, the iron ore is subjected to melting and finally reducing using the carbonaceous material as the reducing agent and using the combustion heat of carbon monoxide generated in the furnace as the main heat source.

According to the method for metal smelting (IV), at least a part of the high temperature gas generated in SRF is blown into the heating burner as the fuel gas using an injector action that applies the fuel air and/or a gas generated in the melting furnace, which was pressurized after removing dust therefrom. Alternatively, at least a part of the gas generated in SRF is cooled to 800°C or below, and the dust in the gas is separated and recovered by a high temperature dust removal unit, then the gas is supplied to the heating burner of the prereduction furnace as the high temperature fuel gas.

The following is the description of modes of the method for metal smelting according to the present invention using RHF as the prereduction furnace and using SRF as the melting furnace.

The RHF may be RFH shown in FIG. 2 and FIG. 3, or may be RHFs shown in FIG. 22, FIG. 23, and FIG. 24. The basic structure and function of these RHFs are described before in the description of the first mode of the method for metal smelting according to the present invention, and detail description thereabout is not given here.

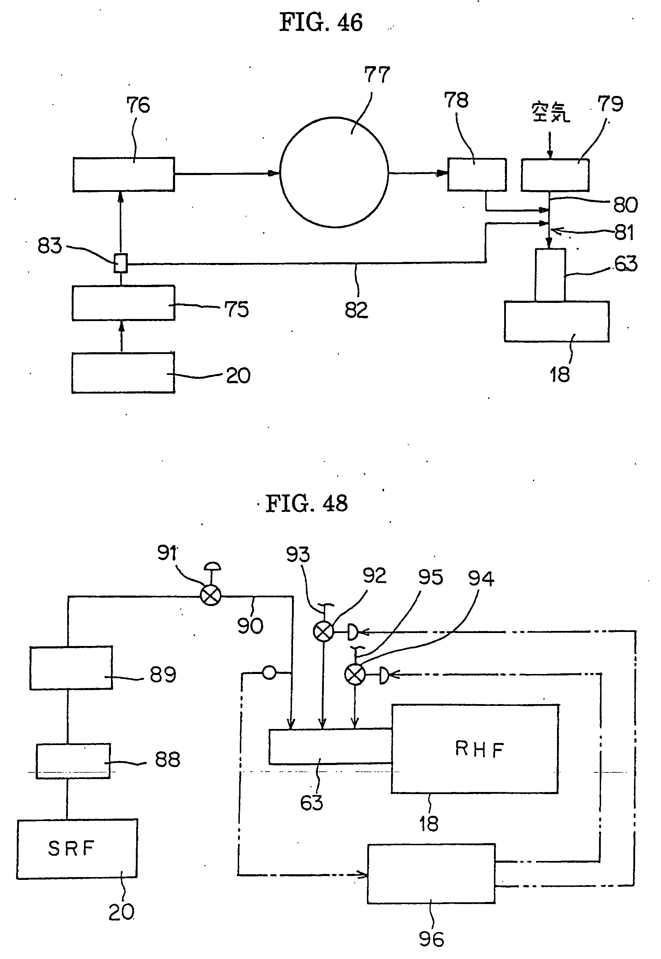

According to the first mode of the method for metal smelting (IV) of the present invention, at least a part of the high temperature gas (flue gas) generated in the melting furnace is blown into the heating burner as the fuel gas using the injector action that applies the fuel air and/or a gas generated in the melting furnace, which was pressurized after removing dust therefrom. Consequently, even when the generated gas discharged from the melting furnace is under a low pressure, the high temperature gas generated in the melting furnace can be supplied to heating burner of the prereduction furnace without applying pressurizing unit such as compressor. FIG. 46 shows an example of the first mode of the method for metal smelting (IV) according to the present invention. The method is preferable one when the pressure of gas generated in SRF is relatively low (for example, less than 1.2 atm of absolute pressure). In the figure, the reference number 20 designates an SRF, 75 designates a hot cyclone, 76 designates a Venturi scrubber, 77 designates a gas holder, 78 and 79 designate a compressor for SRF generated gas (SRF generated gas after dust removal) and for combustion air, respectively, 18 designates an RHF, 63 designates a heating burner for the RHF, 80 designates pipelines laid between the compressors 78, 79 and the heating burner 63. On the pipeline 80 laid between respective compressors 78, 79 and the heating burner 63, (at a position closer to the heating burner 63), an ejector 81 (injector) is formed, to which injector a gas piping 82 branched from the exit side pipe of the hot cyclone 75 is connected. At the branched section of the gas pipeline 82, a control valve 83 that controls the gas supply rate to the gas pipeline 82 is located.

With the configuration of the apparatus, the gas generated in SRF is treated in the hot cyclone 75 to remove dust therefrom, and is subjected to secondary dust removal in the Venturi scrubber 76 passing through the control valve 83, then is temporarily stored in the gas holder 77. The SRF generated gas in the gas holder 77 is then injected to the hearing burner 63 via the injector 81 using the compressor 78. The combustion air is also injected to the heating burner 63 via the injector 81 using the compressor 79. As for the gas generated in SRF after removing dust therefrom and the combustion air, only one of them may be supplied to the heating burner 63.

The control valve 83 divides the gas generated in SRF to adequate portions to send the gas to the gas pipeline 82. By the gas generated in SRF and pressurized by the compressors 78, 79 and/or by the combustion air passing through the injector 81 at a high speed, an injector action is created. Owing to the injector action, the high temperature SRF generated gas is sucked from the exit piping of the hot cyclone 75 via the gas pipeline 82, and the SRF generated gas is injected to the heating burner 63 through the injector 81 and the gas pipeline 80.

Accordingly, a part of the gas generated in SRF can be supplied as the fuel for heating burner of RHF 18 at a high temperature, and the sensible heat of the gas generated in SRF can be effectively used.

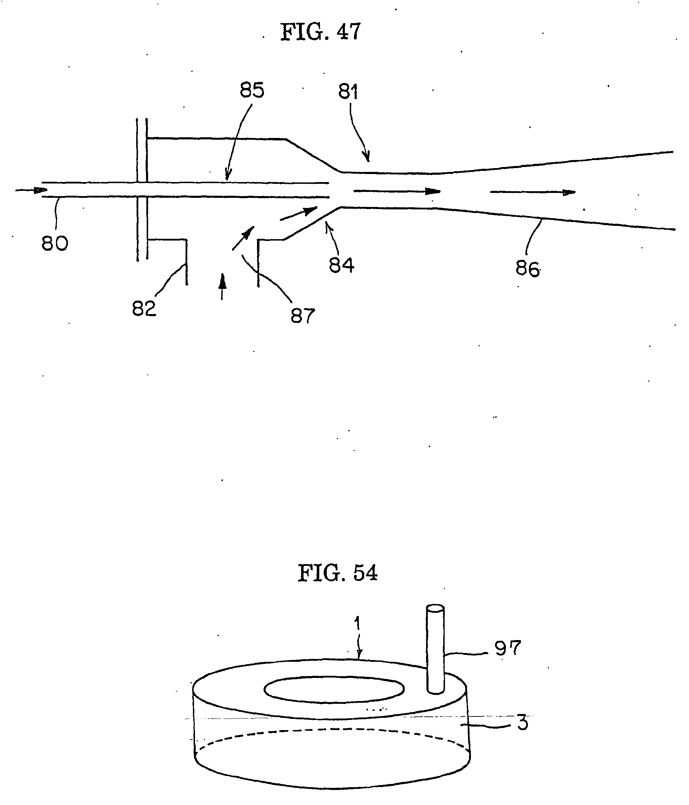

FIG. 47 (cross sectional view) shows an example of structure of the injector 81. The injector 81 has an ejection tube section 86 at the front end thereof with a decreased diameter, an injector body 84 having a suction opening 87-at a side thereof, and a nozzle tube 85 that protrudes from the rear end of the injector body 84 inward thereto and that is positioned near the base end of the injector body 84. The suction opening 87 of the injector body 84 is connected with the gas pipeline 82. The gas pipeline 80 is connected to the rear end of the nozzle tube 85. With that type of injector 81, the gas generated in SRF and/or the combustion air which was pressurized by respective compressors 78, 79 is supplied into the injector body 84 at a high speed via the nozzle tube 85. By thus generated injector action, the high temperature SRF generated gas is sucked into the injector body 84 from the suction opening 87 through the gas pipeline 82, then is injected to the heating burner 63 through the ejection tube section 86.

As illustrated in the figure, the nozzle front end section of the nozzle tube 85 may be in straight shape. Even in that case, the gas velocity becomes to about 50 m/sec to around sound speed. If, however, the nozzle front end section, (the inner diameter thereof), is formed to decreasing in diameter toward the front end, the gas velocity is increased as with the Laval nozzle, thus further increasing the injector effect.

As shown in the figure, it is preferable that the tube section of the ejection tube section near to the heating burner has a taper of around 5° to 10° to widen the tube diameter. If the taper is not given, or if the taper is less than 5° , the injector effect decreases because the expansion of the ejected gas from the nozzle front end section is suppressed by friction. On the other hand, if the taper exceeds 10° , turbulence occurs in surrounding area of the a jected gas jet , and the injector effect decreases.

The gas generated in SRF may be sucked into the injector 81 without preliminarily treated by the hot cyclone 75 to remove dust. In that case, no temperature drop occurs because the gas does not pass through the hot cyclone 75, which is further advantageous in view of thermal efficiency. Therefore, if the attach of the dust in the hot cyclone to the gas pipeline is prevented, it is preferred that the gas generated in SRF is supplied to the heating burner 63 without preliminarily treating the gas by the hot cyclone 75 to remove dust therefrom. To prevent the gas in the hot cyclone from attaching to the gas pipeline, it is preferred that, for example, the gas pipeline system has a water-cooled structure, or a boiler is installed in the gas pipeline to cool the gas generated in SRF to 950°C or below.

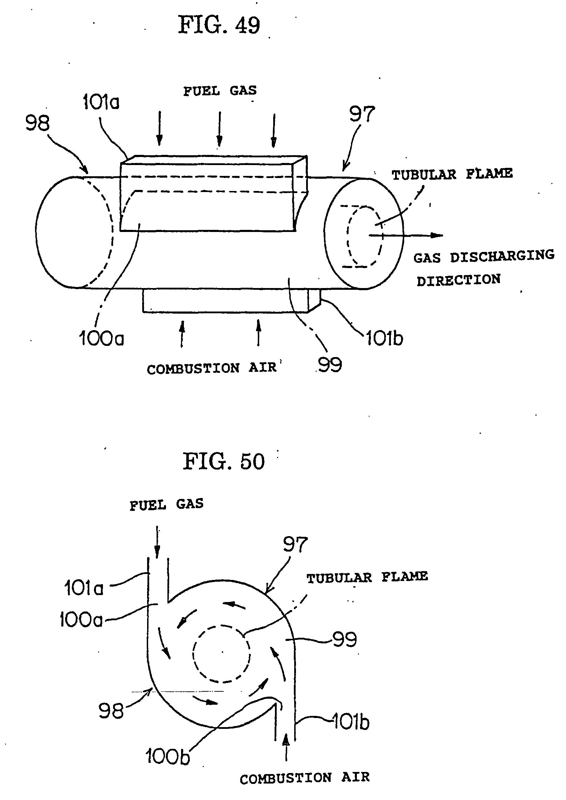

FIG. 48 shows an example of the second mode of the method for metal smelting (IV) according to the present invention. The method is applicable in the case that the gas generated in SRF is relatively high pressure (2 to 3 atm or higher absolute pressure).

In the figure, the reference number 88 designates a boiler, 89 designates a high temperature dust removal unit, 90 designates a gas pipeline that guides the gas generated in the SRF 20 to the heating burner 63 through the boiler 88 and the high temperature dust removal unit 89, 91 designates a pressure regulation valve inserted in the gas pipeline 90, 92 designates a flow regulator valve inserted in the pipeline 93 for supplying the combustion air to the heating burner 63, 94 designates a flow regulator valve inserted in the pipeline 95 for supplying the fuel (for example, LNG and kerosene) to the heating burner 94, 96 designates a measuring and controlling unit that measures the flow rate of flue gas, the gas composition, and the gas temperature in the gas pipeline 90, and controls the flow control valves 92, 94 based on thus measured values.

The high temperature dust removal unit 89 may be structured by a high temperature bag filter provided with, for example, ceramic filter and carbonaceous material filter, and other devices.

The filter applicable to that type of high temperature bag filter includes a filter made by ceramic fibers, a filter made by ceramics that have very fine pores in the structure formed by extrusion and the like, and a filter of moving bed type carbonaceous material. If only the filter has a specified dust removing capacity, the type thereof is not specifically limited. Nevertheless, the filter is requested to be made of a material suitable for the dust-removing temperature and the concentration of impurities such as alkali, sulfur, and halogen in the gas.

Common material for ceramic filter includes high alumina, cordierite, mullite, and zirconia. These ceramic filters are preferably used at temperatures that the impurity components are generally solidified, (at least at $950°C$ or below, preferably $850°C$ or below, and more preferably $650°C$ or below). Carbonaceous material filters prepared by using coke particles can bear further high temperatures. As for the effective use of the carbonaceous material after the dust removal, which is an issue of carbonaceous filter use, the carbonaceous material that is used in the filter can be used as the carbonaceous material to be charged to SRF, further, in that case, the recovery of sensible heat of the gas generated in SRF is enhanced.

If an anthracite or noncaking coal, both of which do not induce fusion and bridging even at high temperatures, is used as the carbonaceous material of the carbonaceous material filter, the material removes the volatile matter therefrom during the use period as the filter, so that the stabilization of percentage of post combustion in SRF at a high level is further enhanced. Also by mixing the carbonaceous material with limestone and dolomite, their calcination and gas desulfurization are enhanced.

Generally, the lower limit of particle size that can be removed in a hot cyclone is around 10 μm. The high temperature bag filter, however, removes the dust having sizes as small as 0.05 to 0.1 μm. Therefore, use of that type of high temperature dust removal unit eliminates the possibility of attaching dust to the inner wall surface of the downstream gas passage.

Since the generated gas discharged from SRF 20 is at a relatively high temperature, it can be supplied to the heating 'burner 63 without pressurized. If, however, the flue gas discharged from the furnace at above $800°C$ is introduced to the high temperature dust removal unit 89 to remove dust, the reaction and sintering between the dust and the members of dust removal section (ceramic filter and the like) proceed to degrade the dust removing function.

To this point, according to the present invention, the generated gas discharged from SRF 20 is sent to the high temperature dust removal unit 89 after decreasing the temperature thereof to $800°C$ or below. To do this, according to the mode, a boiler 88 is installed before the high temperature dust removal unit 89. By recovering the sensible heat of the generated gas in the boiler 88, the temperature of the generated gas is decreased to $800°C$ or below. After passing through the boiler 88 and the high temperature dust removal unit 89, the high temperature generated gas is adjusted in its pressure by the pressure regulation valve 91, then is supplied to the heating burner 63. The means to decrease the temperature of the generated gas to $800°C$ or below may be an arbitrary one, not specifically limited to boiler.

The measuring and controlling unit 96 continuously measures the gas flow rate, the gas composition, and the gas temperature in the gas pipeline 90, and, based on the measured values, controls the flow regulation valves 92, 94, to supply optimum combustion air and fuel responding to the respective conditions of generated gas, such as flow rate, to the heating burner 63.

In the method for metal smelting (IV) according to the present invention, the prereduction furnace may be, other than RHF, any, of the prereduction furnace of horizontally moving hearth type, multi-hearth type, and rotary kiln type. The structure and the function of prereduction furnace of each of horizontally moving hearth type, multi-hearth type, and rotary kiln type are described before in the description of the first mode of the method for metal smelting according to the present invention, and detail description thereabout is not given here.

## E. Method for metal smelting (V)

As described before, on carrying out the various methods for metal smelting according to the present invention, there is a problem of fuel gas for the heating burner used in the prereduction furnace. That is, in the reduction treatment of the mixture of raw materials in the prereduction furnace, it is most preferable that the gas generated in the melting furnace is used as the fuel gas for the heating burner in view of total process energy efficiency. The calorific value of the gas generated in the melting furnace is, however, approximately 800 to 1,800 kcal/Nm$^3$, and generally 1,100 to 1,400 kcal/Nm$^3$, which level is low in combustibility compared with pure fuels. Accordingly, a stable combustion of the gas needs a pilot burner 'and a stabilizing burner that use a pure fuel. The measures induces an additional cost for the pilot burner and the like, and further a serious problem of increased unit requirement of energy resulted from the increased amount of pure fuel use.

In this regard, according to the method for metal smelting (V) of the present invention, the gas generated in the melting furnace can be used as the fuel gas for the heating burner of the prereduction furnace without applying pilot burner and stabilizing burner. Consequently, the method allows operating at low unit requirement of energy. As a result, the cost decrease and the productivity improvement in the melt-reduction smelting of metal oxide and/or metal hydroxide such as iron ore can be attained.

The method for metal smelting (V) according to the present invention is a method for metal smelting containing the steps of :

(A) preliminarily reducing a mixture of one or more of materials selected from the group consisting of following-given (a) through (c) in a prereduction furnace such as that of rotary hearth type and horizontally moving hearth type until a part of the iron ore is metallized in the prereduction furnace;

(a) a mixture of raw materials prepared by mixing at least a carbonaceous material and a metal oxide and/or a metal hydroxide,

(b) a mixture of raw materials prepared by mixing and granulating at least a carbonaceous material and a metal oxide and/or a metal hydroxide, and

(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof in a melting furnace for metal smelting to convert the carbonaceous material to the reducing agent therein, and by using the combustion heat of the carbonaceous material and the combustion heat of the carbon monoxide generated in the melting furnace as the main heat source; wherein, a tubular flame burner is mounted to the prereduction furnace as the heating means. and the gas generated in the melting furnace, which was generated in the step (B), is supplied to the tubular flame burner as the fuel gas.

In that type of method for metal smelting, it is preferred that the gas generated in the melting furnace is supplied to the tubular flame burner of the prereduction furnace after removing dust therefrom, and that the gas generated in the melting furnace is stored in a gas holder, from which the gas is supplied to the tubular flame burner of the prereduction furnace.

With the method for metal smelting (V) according to the present invention, the gas generated in the melting furnace can be used as the fuel gas for heating burner of the prereduction furnace without applying pilot burner and stabilizing burner, both of which use a pure fuel. As a result, the apparatus can be operated at small unit requirement of energy.

The following is the detail description of the method for metal smelting (V).

The mixture of raw materials that is charged to the prereduction furnace in the method for metal smelting (V) according to the present invention is at least one of the following (a) through (c).

(a) The mixture of raw materials prepared by mixing at least a carbonaceous material and an iron ore.

(b) The mixture of raw materials prepared by mixing and granulating at least a carbonaceous material and an iron ore.

(c) The mixture of raw materials prepared by mixing and molding at least a carbonaceous material and an iron ore.

The mixture of raw materials is preliminarily reduced in a prereduction furnace such as rotary hearth type and horizontally moving hearth type furnaces until the iron ore becomes a specified average metallization degree (preferably 5 to 55%), and the preliminarily reduced mixture of raw materials is charged to a melting furnace for metal smelting such as an iron-bath type melt-reduction furnace (SRF), (hereinafter the description deals with SRF as an example), where the melting and final reduction of the iron ore are conducted using the carbonaceous material as the reducing agent and using the combustion heat of the carbonaceous material and the combustion heat of carbon monoxide generated in the furnace as the main heat source.

According to the method for metal smelting (V), a tubular flame burner is located in the prereduction furnace as the heating means. The gas generated in the step (B) is supplied to the tubular flame burner as the fuel gas.

The following is the description of the method for metal smelting (V) according to the present invention referring to an example case of adopting RHF as the prereduction furnace and SRF as the melting furnace.

Applicable RHF includes RHF shown in FIG. 2 and FIG. 3, and RHFs shown in FIG. 22, FIG. 23, and FIG. 24. The basic structure and function of these RHFs are described before in the description of the first mode of the method for metal smelting according to the present invention, and detail description thereabout is not given here.

Regarding the operation of the prereduction furnace by RHF as described above, according to the present invention, a tubular flame burner is applied to the RHF as the heating means, and the gas generated in SRF is charged to the tubular flame burner as the fuel gas to conduct preliminary reduction of the mixture of raw materials.

The tubular flame burner herein described is a burner that forms a tubular flame in the combustion chamber. Generally, the burner that has plurality of slit-shape gas injection openings (gas nozzles) being arranged on the inner wall surface of the tubular combustion chamber that has an open end, the direction of gas injection of the gas injection openings being offset against the axis of the burner body, particularly the direction of gas injection preferably being along the tangential direction of the inner wall surface of the combustion chamber.

The tubular flame burner has superior flame-stabilizing ability, and is a heating burner suitable for the case that a low calorific value gas such as SRF generated gas is used as the fuel gas. The tubular flame formed by the burner has high adiabatic property owing to the symmetric temperature distribution and has aerodynamic stability to the rotational movement of the flow, thus having superior characteristics as a flame for practical use combustion apparatuses. In particular, the tubular flame burner readily achieves lean-premixed combustion, and suppresses soot generation, occurring in the case of excessively rich mixture combustion, by increasing the flame length, thus the burner is advantage also in decreasing the environmental load.

The tubular flame burner is applicable for both the methods of:

(1) Injection of premixed gas of fuel gas and combustion air from the gas injection opening; and

(2) Injection of fuel gas and combustion air separately from respective gas injection openings. Particularly the method (2) achieves preheating of the fuel gas and the combustion air without fear of backfire and explosion, so the combustion efficiency of the tubular flame burner increases, and high combustion stability is attained.

FIG. 49 and FIG. 50 illustrates an example of the tubular flame burner that is used in the present invention. FIG. 49 is a perspective view, and FIG. 50 is a radial cross sectional view of the burner.

The tubular flame burner 97 has a combustion chamber 99 in a tubular shape opened its front end thereof into inside of the cylindrical burner body 98. On the inner wall surface of the combustion chamber 99, slit-shape gas injection openings 100a, 100b are formed so as the gas injection direction to direct along the tangential direction of the inner wall surface of the combustion chamber 99, while keeping the positions thereof at 180° distance from each other in the peripheral direction. These slit-shape gas injection openings 100a, 100b are connected to respective gas supply nozzles 101a, 101b. The gas injection opening 100 and the gas supply nozzle 101 connected thereto may be three or more in peripheral direction of the burner body 98.

According to the mode, the gas injection opening 100a injects fuel gas, and the gas injection opening 100b injects combustion air into the combustion chamber 99, thus forming a gas swirling flow inside the combustion chamber along the inner wall surface, as shown in FIG. 50, to form a tubular flame as illustrated in the figure.

To each of the gas injection openings 100a, 100b, a premixed gas of the fuel gas and the combustion air may be injected. In that case, however, it is preferable to adopt the preheat temperature of the premixed gas to 500°C or below, more preferably to 300°C or below to avoid the occurrence of backfire and explosion. For the case that the fuel gas and the combustion air are not premixed before injection, both the fuel gas and the combustion air can be preheated to a higher temperature level, so the thermal efficiency is further improved.

Other mode of the tubular flame burner includes a structure that, separate from the gas injection opening 100, gas injection openings to inject fuel gas and combustion air, respectively, may be opened in the axial direction of the burner body 98.

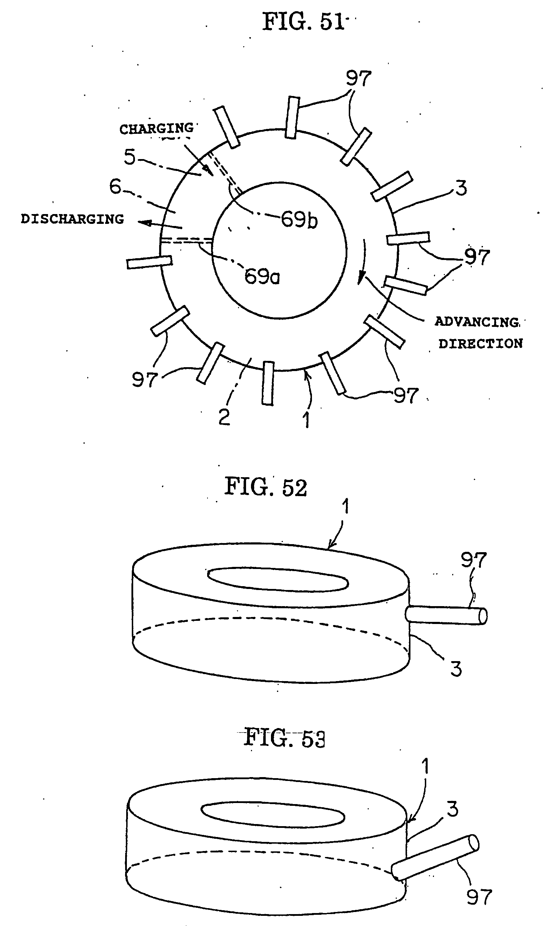

FIG. 51 and FIG. 52 show RHF that has the above-described tubular flame burner 97 as the heating means. FIG. 51 is a plane view, and FIG. 52 illustrates the state of mounting a single tubular flame burner 97.

The tubular flame burners 97 are arranged along the periphery of the furnace body 1 at an adequate pitch. For example, the tubular flame burner 97 is fixed so as the front end of the burner body 98 shown in FIG. 49 to penetrate the furnace wall 3 to inside of the furnace body 1. According to the mode, the tubular flame burner 97 is positioned at upper section of the furnace wall 3 nearly horizontally. In some cases, however, the tubular flame burner 97 may be located at a point in lower section of the furnace body 1, (a position relatively close to the rotary hearth), tilting downward. Alternatively, the tubular flame burner 97 may be mounted to the ceiling of furnace body 1 facing downward.

In the figure, the reference numbers 69a, 69b designate the gas seal plates (partition plates) that separate the raw material charge section (raw material charge opening 5) and the raw material discharge section (raw material discharge opening 6) from other furnace space.

The mounting of the tubular flame burner 97 to the furnace body 1 is preferably done in a manner that the combustion flame spreads from the furnace side wall or the ceiling into the space of the furnace. Since the tubular flame is formed in a stable state inside the burner, the tubular flame burner 97 is preferably located so as the front end of the burner to become nearly the same plane with the inner wall surface of the furnace.

To each of the tubular flame burners 97, the gas generated in SRF, which is a fuel gas along with the combustion air, is supplied. As described before, these combustion air and the fuel gas may be mixed together and be supplied to the burner. It is, however, preferable that each of them is introduced to respective gas supply nozzles 101a, 101b, and then injected to the combustion chamber 99 in the burner body 98 through respective gas injection openings 100a, 100b. Both the combustion air and the fuel gas injected into the combustion chamber 99 through respective gas injection openings 10a, 100b are combusted while forming a swirling gas flow, and form a tubular flame in the combustion chamber 99. Then, the combustion gas flow in the combustion chamber 99 is introduced to RHF, thus heating the mixture of raw materials by radiation heating or by direct heating.

For the case that the gas generated in SRF is used as a fuel gas for the tubular flame burner 97, higher temperature of the gas at the point of charging to the burner is preferred because the higher temperature increases more the combustibility. Particularly preferred temperature of the gas generated in SRF is 400°C or above, more preferably 600°C or above, and most preferably 700°C or above. If the gas generated in SRF is 700°C or more, the gas temperature becomes close to the ignition temperature of CO and of $H_2$ in the gas even for a low calorific gas, so the combustion stability becomes favorable. From the viewpoint to suppress the dust adherence to the wall surface of the gas passage, it is preferable that the temperature of the gas generated in SRF is 950°C or below. Regarding the preheat temperature of the combustion air, no possibility of dust adherence exists, so higher preheat temperature is more preferable within allowable range of energy balance and of investment cost.

Applicable methods for preheating the fuel gas and the support oxygen-containing gas for supplying to the tubular flame burner, there are several methods as described above, including: (1) a method of preheating by heat exchanger using the sensible heat of flue gas coming from RHF; and (2) a method of preheating by heat exchanger using the sensible heat of gas obtained by combusting the gas generated in SRF or other clean fuel. These methods (1) and (2) may be combined for preheating the fuel gas. It is also possible to use sensible heat of gas obtained by combusting non-clean fuel such as heavy oil for preheating the gas in a heat exchanger. In that case, however, the durability of the heat exchanger shall fully be cared, and effective measures to the durability shall be applied.

Another applicable method for preheating the fuel gas includes the methods described in the article of the method for metal smelting (IV), and the detail description for these methods is not given here.

As described above, the tubular flame burner 97 is applied. Therefore, stable combustion is available without applying a pilot burner or the like that uses pure fuel in spite of that the gas is generated in SRF, which gas is a low calorific value gas giving approximately 800 to 1,800 kcal/$Nm^3$, and generally 1,100 to 1,400 kcal/$Nm^3$.

The gas generated in the melting furnace may be introduced to the tubular flame burner 97 without removing dust therefrom. Nevertheless, it is preferred that the gas is introduced to the tubular flame burner 97 after removing the dust, (at least primary dust removal, more preferably after primary and secondary removal), in view of wear of the burner.

It has been found that further stable combustibility of the tubular flame burner 97 is attained by supplying the gas generated in the melting furnace after temporarily stored in a gas holder and after stabilizing the gas composition, the gas pressure, and the gas flow rate before supplying the gas to the tubular flame burner 97.

For example, in the case of SRF of the melting furnace, if the gas holder has a capacity to hold the generated gas flow rate corresponding to the 5 to minutes of flow amount, the combustibility of the tubular flame burner 97 can be satisfactorily stabilized.

FIG. 55 shows an example of apparatus having a gas holder. The reference number 20 designates an SRF, 75 designates a hot cyclone, 76 designates a Venturi scrubber, 77 designates a gas holder, and 78 designates a compressor. The gas generated in SRF is treated by the primary and the secondary dust removal by the hot cyclone 75 and the Venturi scrubber 76, which is then stored in the gas holder 77, and is supplied to the tubular flame burner 79 by the compressor 78.

If the gas holder 77 has a sufficient capacity, the flue gas discharge rate is uniformized, and the pressure variations of the gas are diminished, so the gas holder 77 contributes to the flame stabilization of the tubular flame burner 97. Excessive capacity is, however, not preferable because the investment cost significantly increases. For an iron-bath type melt-reduction apparatus for iron ore, if the installed gas holder has a capacity of at least 50 x S ($m^3$) to the furnace skin cross sectional area S ($m^2$) at the straight shell part of the melt-reduction furnace, maximum 1,500 x S ($m^2$), and approximately 600 x S ($m^2$), the stable combustion of the tubular flame burner 97 is satisfactorily assured.

According the method for metal smelting (V) of the present invention, the prereduction furnace may be, other than RHF, any of the prereduction furnace of horizontally moving hearth type, multi-hearth type, and rotary kiln type. The structure and the function of prereduction furnace of each of horizontally moving hearth type, multi-hearth type, and rotary kiln type are described before in the description of the first mode of the method for metal smelting according to the present invention, and detail description thereabout is not given here.

**F. Method for metal smelting (VI)**

On practically carrying out the above-described various methods for metal smelting according to the present invention, a problem of rupture of the mixture of raw materials (particularly granulates and molded forms such as pellets and briquettes) charged to the prereduction furnace occurs.

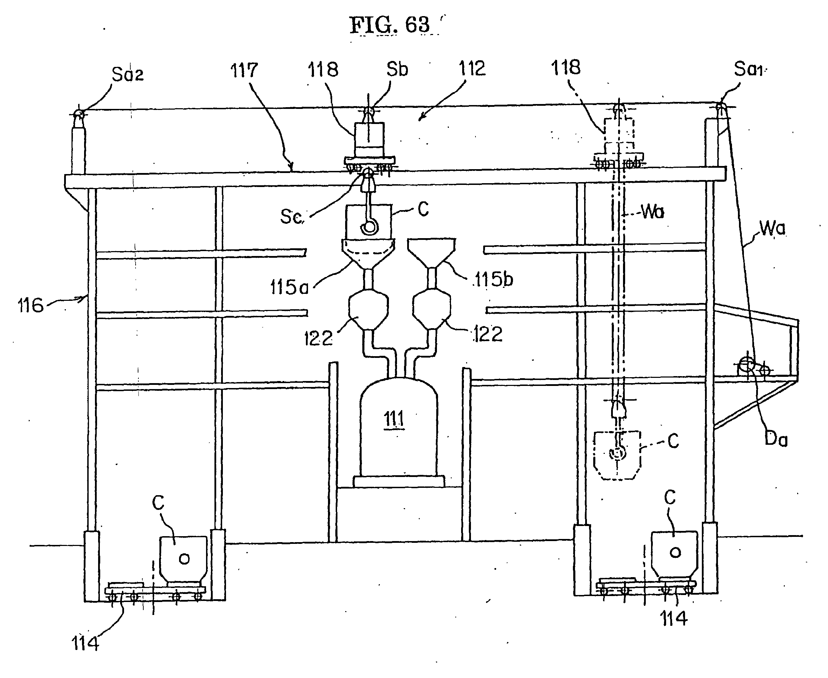

FIG. 62 shows an example of preliminary reduction of a mixture of raw materials by RHF. The mixture of raw materials that is charged onto the hearth from the raw material charge section is heated and raised the temperature thereof mainly by the radiation heat of the heating burner, while moving through the furnace, then is reduced to a specified metallization degree, and finally is discharged from the raw material discharge section, (the reference numbers 69a, 69b designate the gas seal plates that separate the raw material charge section and the raw material discharge section from other intrafurnace space).

For the reduction treatment of a mixture of raw materials in that type of prereduction furnace, the intrafurnace atmosphere becomes very high temperature, (for example, in the reduction zone shown in the figure, around 1,300 to 1,500°C), thus, unless the granulated or molded charge (pellets, briquettes, and the like) is sufficiently dried, the charge ruptures by sudden expansion caused by the rapid heating of included water in the charge. Therefore, the mixture of raw materials is necessary to be dried in advance to prevent the rupture. To do this, additional drying unit is unfavorable because of increase in the investment cost.

To that kind of problem, the method for metal smelting (VI) according to the present invention can conduct efficient preliminary reduction while adequately preventing the rupture of mixture of raw materials in the prereduction furnace without applying special preliminary drying treatment to the mixture of raw materials such as pellets charged to the prereduction furnace. Through the method, the melt-reduction smelting of metal oxide and/or metal hydroxide such as iron ore is done at decreased cost and improved productivity.

The method for metal smelting (VI) according to the present invention is a method for metal smelting containing the steps of:

(A) preliminarily reducing a mixture of one or more of raw materials selected from the group consisting of following-given (a) through (c) in a prereduction furnace such as or multi-hearth type until a part of the iron ore is metallized;

(a) a mixture of raw materials prepared by mixing at least a carbonaceous material and a metal oxide and/or a metal hydroxide,
(b) a mixture of raw materials prepared by mixlng and granulating at a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace for metal smelting using the carbonaceous material as the reducing agent, and using the combustion heat of the carbonaceous material and the combustion heat of the carbon monoxide generated in the melting furnace as the main heat source, wherein the mixture of raw materials charged to the prereduction furnace is preheated and dried by a preheating gas, then is heated and-reduced. The method for metal smelting is preferably in a mode of (1) and/or (2), more preferably in a mode of (3), given below:

(1) The prereduction furnace is divided to a preheating and drying zone, and succeeding heating and reducing zone, beginning from the raw material charge section, thus preheating and drying the mixture of raw materials in the preheating and drying zone, followed by heating and reducing thereof in the heating and reducing zone.
(2) The preheating gas adopts a gas generated in the metal smelting furnace, a gas discharged from the heating and reducing zone of the prereduction furnace, or air preheated by the sensible heat of these gas.
(3) The temperature of the preheating gas the above-given (2) is adjusted to temperatures of from 100 to 400°C.

The above-described method for metal smelting (VI) of the present invention can conduct efficient preliminary reduction while adequately preventing the rupture of mixture of raw materials in the prereduction furnace without applying special preliminary drying treatment to the mixture of raw materials such as pellets charged to the prereduction furnace.

The following is the detail description of the method for metal smelting (VI) according to the present invention.

According to the method for metal smelting (VI) of the present invention, the mixture of raw materials charged to the prereduction furnace is at least one of the mixture of raw materials of (a) through (c) given below.

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

The mixture of raw materials is preliminarily reduced in a prereduction furnace such as rotary hearth type and horizontally moving hearth type until the iron ore becomes a specified average metallization degree (preferably 5 to 55%), and the preliminarily reduced mixture of raw materials is charged to a melting furnace for metal smelting such as an iron-bath type melt-reduction furnace (SRF), where the melting and final reduction of the iron ore are conducted using the carbonaceous material as the reducing agent and using the combustion heat of the carbonaceous material and the combustion heat of carbon monoxide generated in the furnace as the main heat source.

In the method for metal smelting (VI), the mixture of raw materials charged to the prereduction furnace is preheated by the preheating gas to dry, then is heated and reduced.

The following is the description of modes of the method for metal smelting (VI) according to the present invention referring to an example case of using RHF as the prereduction furnace.

Applicable RHF includes RHF shown in FIG. 2 and FIG. 3, and RHFs shown in FIG. 22, FIG. 23, and FIG. 24. The basic structure and function of these RHFs are described before in the description of the first mode of the method for metal smelting according to the present invention, and detail description thereabout is not given here.

According to that type of preliminary reduction operation using RHF, the present invention applies a process that the mixture of raw materials, (hereinafter pellets are dealt with as an example), charged to the furnace, which mixture is preheated and dried in the initial period, then is heated and reduced. The procedure prevents rupture of the pellets caused by the rapid heating of pellets containing water inclusion.

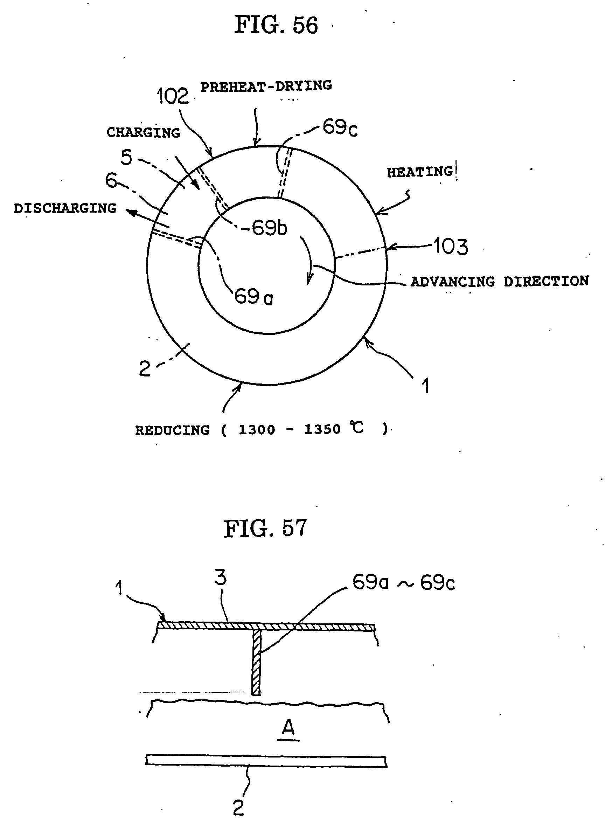

FIG. 56 shows an example mode according to the present invention, (plan view of RHF). The periphery of RHF is divided to a preheating and drying zone 102 and succeeding heating and reducing zone 103, beginning from the raw material charge section. A preheating gas is supplied to the preheating and drying zone 102 to preheat the pellets. Then, the pellets are heated and reduced in the heating and reducing zone 103 using a combustion burner.

The preheating gas supplied to the preheating and drying zone is preferably at temperatures of from about 100 to about 400°C. The gas temperatures exceeding 400°C are not favorable because rupture of pellets may occur.

The preheating gas is of arbitrary kind, including the gas generated from the melting furnace, the flue gas discharged from the heating and reducing zone of the prereduction furnace, air, and an inert gas (nitrogen, and the like). From the viewpoint of improving the total process energy efficiency, it is preferable to adopt the gas generated in the melting furnace, the gas discharged from the heating and reducing zone of the prereduction furnace, or air that is preheated by these gases.

As an applicable structure for dividing the preheating and drying zone 102 from the heating and reducing zone 103 is that, as shown in FIG. 56, the gas seal plates 69a, 69b, (partition plates), that separate the intrafurnace space formed by the raw material charge section (raw material charge opening 5) and the raw material discharge section (raw material discharge opening 6), (or the space above the raw material layer on the rotary hearth, and so forth), from other intrafurnace space, further similar gas seal plate 69c (partition plate) is located in the intrafurnace space at a specified position of downstream side of the raw material charge section. In addition, a charge duct and a discharge duct for the preheating gas, (both are not shown), are connected to adequate positions of the furnace body section that forms the preheating and drying zone 102, through which the preheating gas is charged and discharged. The flue gas coming from the heating and drying zone 103 can be used as the preheating and drying gas after cooled or heat-exchanged to temperature range of from 100 to 400°C. Thus, the rupture and powdering of the pellets caused by excessive heating and rapid heating in the preheating and drying zone 102 are prevented to improve the total furnace thermal efficiency.

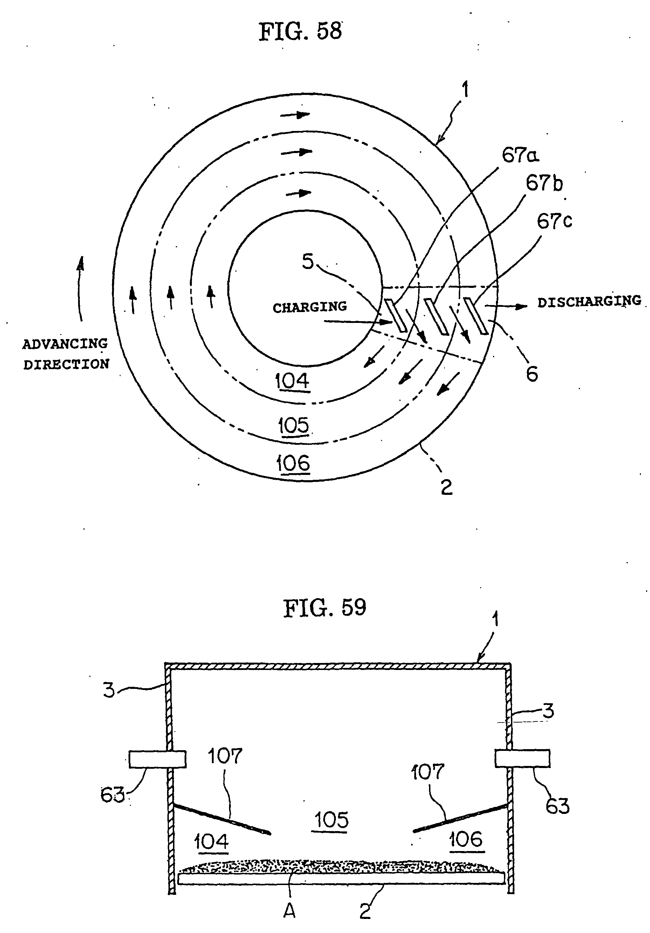

FIG. 58 and FIG. 59 show another mode according to the present invention, (FIG. 58 shows a plan view of RHF, and FIG. 59 shows a cross sectional view of RHF in the furnace width direction). According to the mode, baffle plates 67a through 67c are located at three positions in the furnace radial direction to displace (move) the raw material charge on the hearth toward outer periphery of the hearth (to outer direction in the furnace radial direction) successively at every turn of the hearth, thus letting the raw material charge being discharged from the furnace after the three turns thereof. In this mode, the first turn region is the preheating and drying zone 104, the intermediate region is the heating and strongly reducing zone 105, and the final turn region is the reduction and temperature adjusting (cooling) zone 106. The heat shielding plate 107 is located above the hearth at each of the first turn region (preheating and drying zone 104) and the final turn region (reducing and temperature adjusting zone 106). Consequently, in the preheating and drying zone 104 and the reducing and temperature adjusting zone 105, the heat shielding plates 107 shield the raw material charge layer A from the radiation heat of flame of heating burner 63 and of intrafurnace atmosphere.

The reducing and temperature adjusting zone 106 conduct the reduction of pellets and the cooling of pellets to a temperature suitable for the raw material discharge to cope with the problem that, when the pellet temperature is excessively high on discharging the raw material, the particles of raw material fuse to each other and the raw material discharge unit may be worn. The structure of the baffle plates 67a through 67c, and the relative positioning of the baffle plates, the raw material charge opening 5, and the raw material discharge opening 6 are the same as those described in the mode of FIG. 40, so their detail description is not given here.

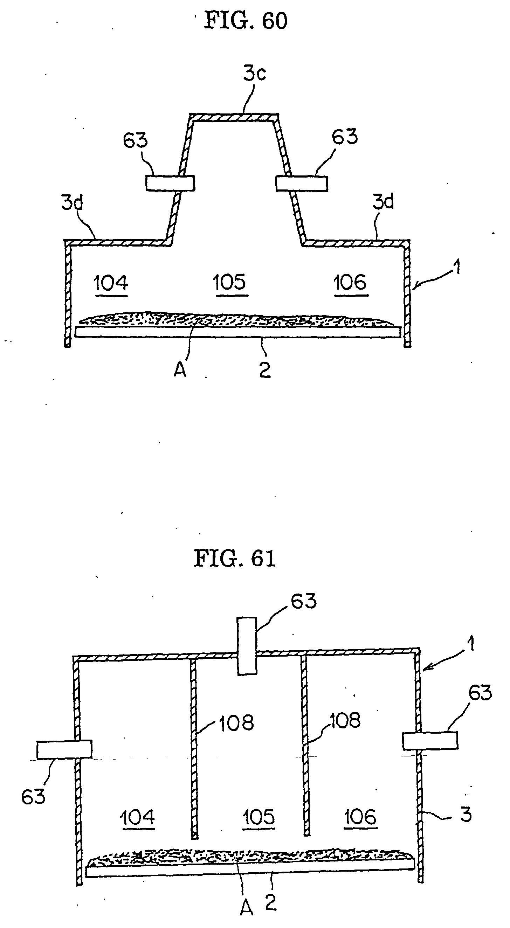

FIG. 60 and FIG. 61 show further respective modes according to the present invention, (cross sectional views of RHF in the furnace width direction). Also in these modes, similar with the mode of FIG. 58, the baffle plates (not shown) are located at three positions in the furnace so as the charge on the hearth to be displaced (moved) in the radial direction of the furnace (to outer direction in the furnace radial direction) successively at every turn of the hearth, thus letting the raw material charge being discharged from the furnace after the three turns thereof. The first turn region is the preheating and drying zone 104, the intermediate region is the heating and strongly reducing zone 105, and the final region is the reducing and temperature adjusting (cooling) zone 106.

According to the mode of FIG. 60, the furnace wall structure in the hearth width direction is formed so as the furnace wall 3c (ceiling) above the heating and strongly reducing zone 105 to become higher than the both furnace walls 3d (ceiling) above the adjacent zones, and the heating burners 63 are positioned on both sides of the furnace wall 3c above the heating and strongly reducing zone. With the configuration, in the preheating and drying zone 104 and in the reducing and temperature adjusting zone 106, the raw material charge layer A is shielded from the radiation heat of the flame of heating burner 63.

According to the mode of FIG. 61, the partition plates 108a, 108b are located to divide the space of upper section of the furnace into three segments in the furnace width direction, thus preparing the preheating and drying zone 104, the heating and strongly reducing zone 105, and the reducing and temperature adjusting (cooling) zone 106. Heating burner 63 is mounted to each of these three zones.

The method for metal smelting (VI) according to the present invention can use a prereduction furnace of horizontally moving hearth type or multi-hearth type, other than RHF. The structure and function of prereduction furnace of horizontally moving hearth type are described before in the description of the first mode of the method for metal smelting according to the present invention, and detail description thereabout is not given here.

Regarding the contents common to the above-described methods for metal smelting (I) through (VI) according to the present invention, the description is given in the following dealing mainly with an example that RHF is applied to the prereduction furnace and that SRF is applied to the melting furnace.

To RHF, at least one of the mixture of raw materials, described above as (a) through (c), is charged to conduct pre-reduction smelting of ore. The mixture of raw materials of (b) is granulates such as pellets, and the mixture of raw materials of (c) is molded forms such as briquettes.

Applicable carbonaceous material includes coal and coke, further powder and particles containing carbon, such as those of oil coke, tar pitch, and plastics, and one or more of them may be applied.

From the point of enhancing the reduction reaction, the carbonaceous material is preferably in small particle size. Accordingly, crushing the carbonaceous material is used, at need. However, crushing of the carbonaceous material such as coal increases the energy cost, so the degree of crushing of carbonaceous material is preferably limited to a low level.

The particle size of the carbonaceous material (mainly coal) used in the molten iron manufacturing process is preferably classified, and the fine particle region thereof is used in the mixture of raw material, while the coarse particle size region is used as the carbonaceous material being charged to SRF. By the procedure, the mixture of raw material being subjected to preliminary reduction can use the small particle carbonaceous material that is preferable for the preliminary reduction, while the SRF can use the coarse particles of carbonaceous material. Consequently, the amount of very fine powder of carbonaceous material emitted as dust in the gas generated in SRF is decreased. Applicable unit for classifying the carbonaceous material particles includes vibrating screen unit, air classification unit fluidized bed drier having functions of drying and classifying the particles, and paddle drier.

Since the gas generated in SRF contains carbonaceous material as dust, the dust may be recovered from the gas to use the dust as a part of the carbonaceous material.

Together with the mixture of raw materials, at least a part of the auxiliary raw material being charged to SRF, (in some cases, total amount of the auxiliary material being charged to the melting furnace), can be charged to RHF. Examples of the auxiliary raw material are limestone, calcium oxide, and dolomite, which are used for adjusting the slag basicity in SRF. As of these, if a non-fired auxiliary raw material is charged, the firing of the auxiliary raw material can be done using the temperature of atmosphere in RHF, (usually 1,200 to 1,500°C), so the exclusive-use firing furnace for the auxiliary raw material may be eliminated.

Alternatively, the auxiliary raw material can be charged to RHF as a part of the mixture of raw materials containing carbonaceous material and iron ore, (that is, a mixture of raw materials prepared by mixing, or by mixing and granulating, or by mixing and molding at least a carbonaceous materials and an iron ore), or the auxiliary raw material can be charged to RHF without mixing with the mixture of raw materials containing the carbonaceous material and the iron ore.

The flue gas coming from prereduction furnace such as RHF is at a high temperature (1,200 to 1,500°C), and contains relatively large amount of sulfur, (when coal is used as the carbonaceous material being charged to the mixture of raw materials, about 30% of the sulfur in coal migrates into the flue gas of RHF). Accordingly, when an auxiliary raw material such as limestone and dolomite is charged to and fired in RHF, CaO or the like included in the auxiliary raw material acts as the desulfurizing agent to the flue gas of RHF to give an effect of desulfurization of flue gas of RHF.

As described before relating to the carbonaceous material, the dust in the gas generated in SRF may be recovered to mix with the mixture of raw materials.

Smaller amount of free water in the mixture of raw materials being charged to RHF further improves the productivity of RHF and decreases the unit requirement of energy, so the mixture of raw materials is preferably sufficiently dried before being charged to RHF.

Therefore, the mixture of raw materials (particularly pellets and briquettes) is preferably treated by preliminary drying. For the preliminary drying, if the sensible heat and latent heat of the flue gas coming from RHF and/or the gas generated in SRF is used, the total process energy efficiency is further improved.

The mixture of raw materials that was treated by pre-reduction smelting in RHF to convert the iron ore to semi-reduced iron having a specified metallization degree is charged to SRF, where the finish smelting aiming at the final reduction and melting is conducted.

The mixture of raw materials that was preliminarily reduced in RHF is charged to SRF while preferably preventing the temperature decrease and the re-oxidization as far as possible. To do this, it is preferred that the high temperature mixture of raw materials that was preliminarily reduced in and discharged from RHF is transferred to SRF after temporarily stored in a non-open type vessel to maintain the temperature of the mixture of raw materials at 600°C or above, or that the high temperature mixture of raw materials discharged from RHF is stored in a pneumatic conveying unit, then is pneumatically conveyed to SRF through a pneumatic conveyer pipe using a non-oxidizing gas (for example, one or more of the gas selected from the group of $N_2$, Ar, $CO_2$, and process gas such as SRF generated gas and RHF flue gas), to charge thereof to SRF.

By'transferring the mixture of raw materials that was preliminarily reduced into SRF using a non-open type vessel and a pneumatic conveyer unit while preventing the temperature decrease and the re-oxidization thereof as far as possible, the temperature decrease in the preliminarily reduced mixture of raw materials and the energy loss caused by re-oxidization can be minimized.

In SRF, melting and final reduction are conducted using the carbonaceous material as the reducing agent and using the combustion heat of the carbonaceous material and the combustion heat of carbon monoxide generated in the furnace as the main heat source.

According to the method for metal smelting of the present invention, various types of SRF can be used. An example of applicable melting furnace is a known SRF in which the furnace body containing iron bath therein, (normally a closed type furnace body), provided with a means for charging the preliminarily reduced raw material and auxiliary raw material into the furnace, (for example, charging chute and hopper), a lance for injecting oxygen into the iron bath in the furnace, and a means for injecting gas for agitation thereinto, (for example, bottom blowing nozzle).

In that type of SRF, the raw materials (iron ore and carbonaceous material) and the auxiliary raw material are charged to the furnace through the above-described charge means, and oxygen and agitation gas are injected into the furnace through the lance and the injection means, respectively. The carbonaceous material charged into the furnace and the carbon in the molten iron react with the oxygen injected through the lance to generate CO gas. The CO gas then reacts with the oxygen gas injected through the lance to generate $CO_2$ gas. The semi-reduced iron is melted by the combustion heat of the carbonaceous material and the CO, and the final reduction of the semi-reduced iron is carried out by the carbon in the carbonaceous material, thus the molten iron is manufactured.

The amount of gas generation from SRF is related with the amount of charged carbonaceous material to SRF. Consequently, to assure stable generation of gas in SRF, it is preferred that, other than the carbonaceous material in the mixture of raw material, a carbonaceous material (mainly coal) is separately charged through an adequate charge means. In the above-described RHF-SRF process, the charge of carbonaceous material is almost unnecessary, and, if needed, some amount of coke is preliminarily mixed with the mixture of raw material coming from RHF to charge together into the SAF.

When the stable charge of the carbonaceous material to the furnace, the durability of the charge unit, the charge efficiency of the carbonaceous material (reducing agent) to the region where the final reduction is carried out, (the region near to the interface between slag and molten iron), are considered, the carbonaceous material is preferably charged to upper section than the interface between molten iron and slag.

Applicable method for charging the carbonaceous material from above the interface between the carbonaceous material and the molten iron includes placing the carbonaceous material on layer (what is called the "gravity-dropping method"), charging the carbonaceous material from upper part of the furnace accelerating thereof by a booster ("pouring charge method"), and charging the carbonaceous material through lance ("injection method"). If an immersion nozzle is used in the injection method using a lance, the front end of the nozzle of lance is preferably positioned above the interface between the molten iron and the slag.

For the case that a carbonaceous material (in this case, particularly coal) is charged to SRF separately from the carbonaceous material being mixed with the mixture of raw materials, it is particularly preferred to adopt a method described below.

As described before, the high temperature mixture of raw materials that was preliminarily reduced is likely re-oxidized by the contact with the generated gas during a period of from being charged to SRF to reaching the bath surface. To minimize the re-oxidization, it is preferred that the high temperature mixture of raw materials which was preliminarily reduced is charged to SRF together with the carbonaceous material, and that they fall down through the furnace in a state that at least a part (preferably total amount) of the charged mixture of raw materials and the charged carbonaceous material is in a mixed condition to reach the bath surface. With that type of method, the re-oxidization of the mixture of raw materials caused by the gas generated in SRF is prevented owing to the actions described below.

(1) The mixture of raw materials charged in the furnace falls down through the furnace while individual particles of the materials are covered with the carbonaceous material, so the opportunity of directcontact between the mixture of raw materials and the generated gas decreases.

(2) During the passage of the high temperature mixture of raw materials and the carbonaceous material fall down through the furnace in a mixed condition to each other, the volatile matter in the carbonaceous material (coal) is gasified by the sensible heat of the mixture of raw materials. The volatile matter gas covers individual particles of the raw materials to reduce the opportunity of direct contact between the mixture of raw materials with the generated gas decreases.

(3) The carbonaceous material and the volatile matter gas (carbon content of the gas) generated from the carbonaceous material reduce the $CO_2$ around the mixture of raw materials to CO, so the opportunity of re-oxidization of the mixture of raw materials by $CO_2$ decreases.

(4) Even when the mixture of raw materials is re-oxidized, the volatile matter gas (the carbon content and hydrogen content of the gas) generated from the carbonaceous material, as described above, re-oxidizes the mixture or raw materials.

The method is particularly effective in the case that the mixture of raw materials that was preliminarily reduced is particularly likely re-oxidized, or, in concrete terms, the case that the mixture of raw materials is charged to SRF at high temperatures of 400°C or more, and that the post combustion percentage of the gas generated in SRF is 20% or more. According to the method, the carbonaceous material and the mixture of raw materials are charged to the bath in a state that both are close or contacts to each other, so the carbonaceous material gives similar effect as that of the residual carbon (carbonaceous material) in the mixture of raw materials. As the practical method therefor, it is preferable to adopt the above-described (a) through (d) of FIG. 12.

As illustrated in FIG. 13 through FIG. 15, the charging position of the raw materials (mixture of raw materials or mixture of raw materials + carbonaceous material), (or the charging position of the slag bath surface), is preferably avoiding the bath surface region where is in an oxidizing atmosphere caused by the support gas jet and the bath surface region where an ascending flow is generated in the slag bath section, and preferably adopting the bath surface region where a descending flow is generated in the slag bath section, (hereinafter referred to as the "descending flow region").

The combustion gas supplied to RHF is preferably a gas generated in SRF. With the use of the generated gas, the energy balance in the molten iron manufacturing process is maintained to a favorable level. In this case, the gas generated in SRF has sufficient calorific value and volume for using as the combustion gas for RHF, the calorific value is, however, less than that of natural gas. To use the gas generated in SRF as the combustion gas in RHF, the gas is required to be subjected to dust-removal treatment (normally washing treatment is also applied). During the dust removal treatment, the gas temperature generally decreases to near normal temperature. As a result, the generated gas is preferably preheated to 200°C or above before entering to RHF.

The preheating of the gas generated in SRF by the sensible heat of flue gas coming from RHF and/or the sensible heat of flue gas obtained by combusting a part of the generated gas in SRF allows more effective using the energy in the process.

The type of the melting furnace is not specifically limited to SRF if only the furnace uses the carbonaceous material as the reducing agent and conducts melting and final reduction of iron ore using the combustion heat of the carbonaceous material and the combustion heat of carbon monoxide generated in the furnace as the main heat source. Therefore, the melting furnace may be the one that uses electric power as a part of the heat source. For example, a furnace of the type that adds a carbonaceous material charge unit and an oxygen (or air, or the like) injection unit to SAF and to other electric furnace may be applied.

The above-given description deals with iron ore as the metal oxide and/or metal hydroxide as the target of the melt-reduction. Other kinds of metal oxide and/or metal hydroxide such as Ni ore, Cr ore, and Mn ore may be the target materials.

In the above-described methods for metal smelting (I) through (VI) according to the present invention, the average metallization degree of iron ore in the step (A) is not specifically limited. These methods for metal smelting (I) through (VI), particularly the method for metal smelting (II), are suitable for the case of preliminary reduction at a small metallization degree. Therefore, these methods for metal smelting (I) through (VI) are applicable to the method for metal smelting of the first mode and the second mode of the present invention. That is, the method for metal smelting of the first mode according to the present invention is a method for metal smelting, in which the iron ore (iron ore in the mixture of raw materials) is reduced to a specified small metallization degree (average metallization degree in a range of from 5 to 55%) in the prereduction furnace, then is subjected to melting and final reduction in the melting furnace. The method for metal smelting of the second mode according to the present invention is a method for metal smelting, in which the iron ore (iron ore in the mixture of raw material) is reduced to a specified metallization degree (over 5% of the average metallization degree), then the iron ore, an iron ore that is not preliminarily reduced, and an iron ore that is reduced to a small metallization degree are charged to the melting furnace to a level of specified small metallization degree (5 to 55% of the average metallization degree) as the total, then conducting the melting and final reduction. For these methods for metal smelting, the above-described modes of the methods for metal smelting (I) through (VI), the improvement in the productivity is attained.

The following is the description of the apparatus suitable for carrying out the above-described methods for metal smelting in various modes according to the present invention, particularly of the apparatus that can quickly and efficiently transfer the mixture of raw materials that was preliminarily reduced in the prereduction furnace.

The smelting apparatus provided with conventional prereduction furnace (RHF) and melting furnace (for example, SAF) has plurality of raw material receiving hoppers for the melting furnace to receive the raw materials transferred from the prereduction furnace side. The ore that is discharged from the prereduction furnace is received by a container for ore transportation, (normally a non-open type container is used for preventing the decrease in the temperature and the re-oxidization of the ore). The container is then transferred to the raw material receiving hoppers of the melting furnace, and the ore is sent from the containers to the raw material receiving hopper. Thus the ore transportation is conducted between the prereduction furnace and the melting furnace.

The transfer of the container is generally done by a hoist that runs on the track (running section) located at upper section of the structure of the smelting apparatus. The hoist lifts the container to conduct the container transfer between the prereduction furnace and the melting furnace.

The above-described conventional smelting apparatuses do not give special consideration on the arrangement of plurality of raw material receiving hoppers at the melting furnace side. Accordingly, to discharge the raw material in respective containers successively transferred from the prereduction furnace side into respective raw material receiving hoppers, the hoist is able to run not only one direction but also to lateral direction, (transverse running).

As a result, the conventional smelting apparatuses takes a time for the container transfer from the prereduction furnace to the raw material receiving hopper of the melting furnace, thus inducing a problem of snarling on discharging the raw material at the prereduction furnace side. In addition, the hoist and the track for the hoist increase the investment cost, and the increased weight of upper section of the structure requires to strengthen the structure, which also inevitably increases the investment cost.

Also in the mode of raw material discharge to container and the mode of container transportation, conventional apparatuses has only the functions that the raw material discharged from the furnace is sent to a container, then the container is transferred to the hoisting position, and is lifted by the hoist to move to the melting furnace side. These conventional apparatuses consider very little the means to efficiently transfer the container from the raw material discharge at the prereduction furnace to the melting furnace.

In addition, the conventional apparatuses have a container hoisting means (winch for winding) for container is positioned on the hoist body, which increases the weight of the upper section of the structure.

To those problems, the apparatus for the method for metal smelting according to the present invention can conduct the container transfer from the prereduction furnace to the melting furnace quickly and efficiently, and can decrease the investment cost. Furthermore, another apparatus for metal smelting according to the present invention can hoist the container quickly and efficiently without mounting the container hoisting drive means on the hoist, and the drive means is designed to small one.

That is, the apparatus for metal smelting according to the present invention has: a prereduction furnace which conducts preliminary reduction of the above-described metal source by charging one or more of the mixture of raw materials selected from the group consisting of (a) through (c),

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide;

a melting furnace for melting and finally reducing the metal source that was preliminarily reduced in the prereduction furnace; and a transfer unit that transfers a container that receives the raw materials discharged from the prereduction furnace. The melting furnace has one or more of raw material receiving hoppers that receive the raw materials transferred from the prereduction furnace. The transfer unit hoists the container and runs on a track to transport the container. The track of the hoist allows the hoist moving back and forth in only one direction. The container hoisting position at the prereduction furnace side and the raw material receiving hoppers at the melting furnace side are arranged to directly beneath the track. Thus the hoist that travels on the track transfers the container between the prereduction furnace and the melting furnace.

According to that type of the apparatus for metal smelting of the present invention, the container transfer between the prereduction furnace and the melting furnace can be conducted quickly and efficiently. As a result, no snarl on raw material discharge occurs at the prereduction furnace side. Since the hoist moves back and forth in only one direction, the investment cost is decreased compared with the conventional apparatuses.

That type of apparatus for metal smelting can be in various modes described below.

(1) The above-described apparatus for metal smelting has a melting furnace and two prereduction furnaces, and the positions of container hoisting at each of the two prereduction furnaces are on both sides of the group of raw material receiving hoppers as the center of the positions.

(2) The above-described apparatus for metal smelting has a pair of container hoisting positions at the prereduction furnace side to each of the prereduction furnaces.

(3) The above-described apparatus for metal smelting has a turntable at the raw material discharge section of the prereduction furnace, which turntable is able to hold plurality of containers thereon, and is able to successively move thus held plurality of containers to the raw material discharge opening position of the prereduction furnace and to the container-lifting position by the rotation of the turntable.

(4) The above-described apparatus for metal smelting is a melting furnace that melts and finally reduces the raw materials using the carbonaceous material as the reducing agent and using the combustion heat of the carbonaceous material and the combustion heat of carbon monoxide generated in the furnace as the main heat source.

(5) The apparatus for metal smelting described in (4) has the melting furnace of metal bath type melt-reduction furnace.

(6) The above-described apparatus for metal smelting has a drive mechanism for lifting the container by the hoist. The drive mechanism has sheaves ($Sa_1$), ($Sa_2$) located at both ends in longitudinal direction of the track of the hoist, a sheave (Sb) located on the hoist, a sheave (Sc) located on the container suspension means suspended from the hoist in ascending/descending mode, a wire winding drum (Da) for lifting container, located lower position than the track of the hoist, and a wire rope (Wa) for lifting container, being unwinding from the wire winding drum (Da), being guided to each of above-described sheaves, and being fixed the front end to an end of the track. The wire rope (Wa) that is introduced from the sheave ($Sa_1$) or ($Sa_2$) successively passes through the sheave (Sb) on the hoist, the sheave (Sc) of the container suspension means, and the sheave (Sb) on the hoist. Then the wire rope (Wa) is guided to the sheave ($Sa_2$) or ($Sa_1$) side, thus the container suspension means is suspended from the wire rope (Wa), and the winding and unwinding of the wire rope (Wa) by the wire winding drum (Da) make the container-suspension means ascend and descend.

(7) The apparatus for metal smelting described in (6) has a wire winding drum (Da), a wire winding drum (Db) for counterweight being located at coaxial position to the wire winding drum (Da), a wire rope (Wb) that is guided by a sheave that is positioned at higher level than the wire winding drum (Db), being wound in reverse direction against the winding direction of the wire rope (Wa) on the wire winding drum (Da), and a counterweight (Co) attached to the front edge of the wire rope (Wb).

(8) The apparatus for metal smelting described in (7) has each pair of: sheaves ($Sa_1$), ($Sa_2$) being located at both ends of the track of hoist in the longitudinal direction, sheaves (Sb) located on the hoist, sheaves (Sc) mounted to the container suspension means, wire winding drums (Da) for lifting container, wire winding drums (Db) for counterweight, wire ropes (Wb) being wound around respective wire winding drums (Db), and counterweights (Co) attached to the front edge of respective wire ropes (Wb).

The apparatuses for metal smelting of the above-described (1) through (3) conduct the transfer of container particularly between the raw material discharge from the prereduction furnace to the melting furnace quickly and efficiently.

Furthermore, the apparatuses for metal smelting of the above-described (6) through (8) allow the container lifting quickly and efficiently without installing the drive means for container lifting on the hoist body, and allow lighting the weight of the hoist and minimizing the drive means for container lifting, thus the investment cost can also be decreased.

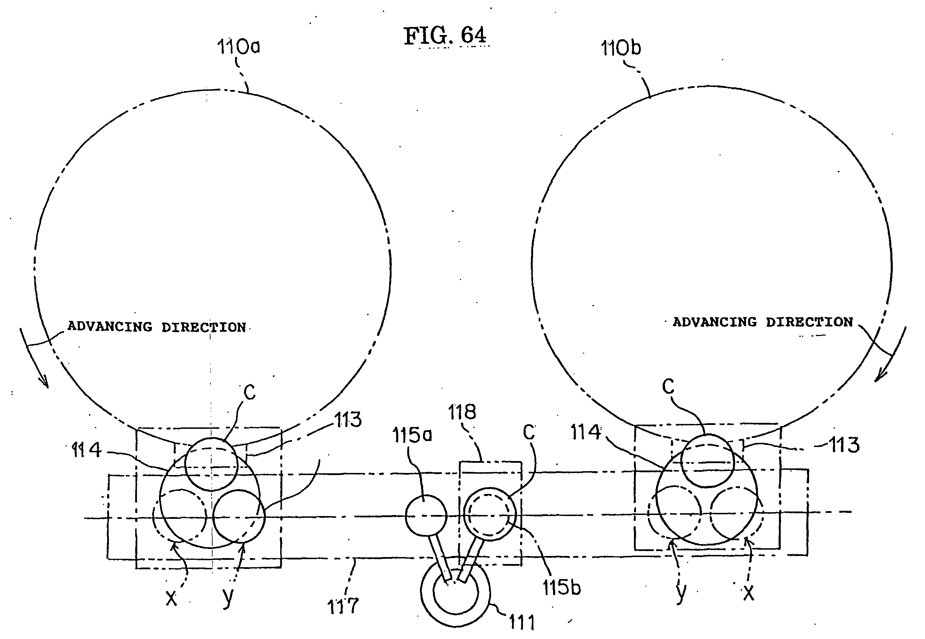

FIG. 63 through FIG. 65 show a mode of the apparatus for smelting according to the present invention. The smelting apparatus of the mode has two units of prereduction furnace 110a, 110b, one unit of melting furnace 111, and a transfer unit 112 that transfers a container C between the prereduction furnaces 110a, 110b and the melting furnace 111. The following description deals with the smelting apparatus that conducts pre-reduction and melt-reduction of iron ore (ore fines) as the metal oxide and/or metal hydroxide as an example.

The above-described two units of prereduction furnaces 110a, 110b are prereduction furnaces of rotary hearth type that conducts preliminary reduction of iron ore by charging raw materials containing at least iron ore and carbonaceous material, (normally preliminary reduction in which at least a apart of the iron ore is metallized). The furnace body of each prereduction furnace 110 contains a ring-shape rotary hearth and furnace wall that covers the total rotary hearth to maintain the intrafurnace atmosphere. The rotary hearth rotates, for example, in the arrow direction as shown in the figure. In upper section of the furnace wall, heating burners (combustion burners) are arranged over the whole length of the periphery of the furnace at a specified interval. To the rotating rotary hearth, the raw materials are. charged from the raw material charge section (not shown) to form layers thereof. The raw materials that are preliminarily reduced for a specified period are discharged from the raw material discharge section 113 (raw material discharge opening).

A container-lifting position is prepared near the raw material discharge section 113. According to the mode, two container-lifting positions x, y, are prepared for each raw material discharge section 113. Also according to the mode, a turntable 114 is prepared in front of each raw material discharge section 113. The turntable 114 can hold plurality of containers C, and can successively move the placed plurality of containers C to the position of the raw material discharge section 113 of the prereduction furnace and to the container-lifting positions x, y.

The melting furnace 111 is a furnace to melt and finally reduce the iron ore that was preliminarily reduced in the prereduction furnaces 110a, 110b. Two units of raw material receiving hoppers 115a, 115b are located above the melting furnace 111 to receive the raw materials from the prereduction furnaces 110a, 110b. The raw materials in these two units of raw material receiving hoppers 115a, 115b, (mainly the iron ore after preliminarily reduced), are charged to the melting furnace 111 via a tank 122.

The relative positioning of theprereduction furnaces 110a, 110b, and the melting furnace 111 is that the container-lifting positions x, y, of both prereduction furnaces 110a, 110b come at both sides of the raw material receiving hoppers115a, 115b at the melting furnace side centering thereof.

The transfer unit 112 has a track 117 (running section) laid on the structure 116 and a hoist 118 that runs on the track 117 by itself. The hoist 118 transfers the container C by traveling on the track 117.

According to the apparatus of the present invention, the hoist 118 comes and goes on the track 117 only one direction. The container-lifting positions x, y, at the side of prereduction furnaces 110a, 110b, and the raw material receiving hoppers 115a, 115b, at the side of melting furnace 111 are positioned directly beneath the track 117.

With the above-described layout, the traverse motion of only one unit of hoist 118 along the track 117 in one direction allows quick transportation of the container C within short time between the prereduction furnaces 110a, 110b, and the raw material receiving hoppers 115a, 115b, of the melting furnace 111.

By the arrangement according to the mode, in which the relative positioning of the prereduction furnaces 110a, 110b, and the melting furnace 111 is that the container-lifting positions x, y, of both prereduction furnaces 110a, 110b come at both sides of the raw material receiving hoppers 115a, 115b at the melting furnace side centering thereof, further the track 117 of the hoist 118 is prepared as described above, the materials (container) discharged from the two units of prereduction furnaces 110a, 110b, can be efficiently transferred to the melting furnace side.

According to the mode, two container-lifting positions x, y, are prepared for each raw material discharge section 113. Also according to the mode, a turntable 114 is prepared in front of each raw material discharge section 113. The turntable 114 can hold plurality of containers C, and can successively move the placed plurality of containers C to the position of the raw material discharge section 113 of the prereduction furnace and to the container-lifting positions x, y. Therefore, the discharge of raw materials in the prereduction furnace to the container C and the lifting and transferring the container C by the hoist 118 are conducted very efficiently. As a result, no snarling occurs on the action of raw material discharge from the prereduction furnaces 110a, 110b.

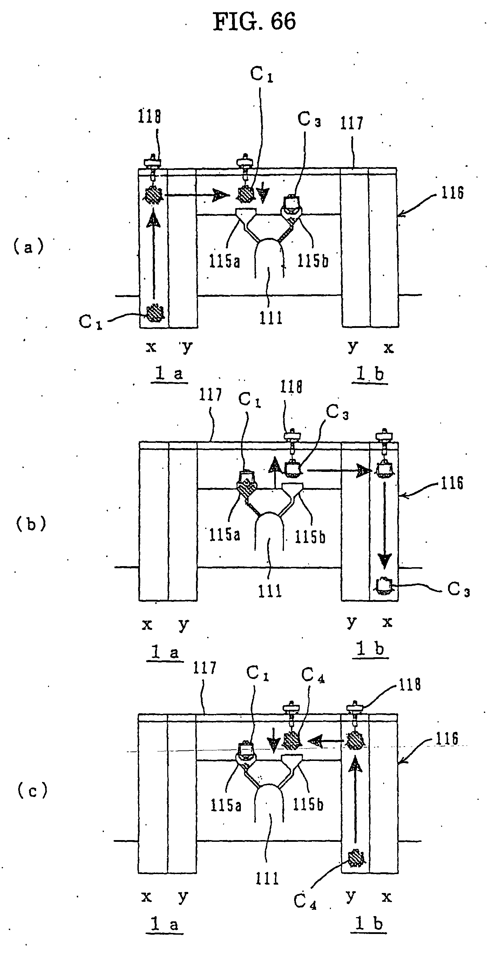

FIG. 66 through FIG. 68 show a preferred transfer procedure of container C using the hoist 118 in the apparatus of the modes according to the present invention. The example adopts two containers C for each prereduction furnace. In these figures, the reference symbols x, y of [1a] signify the container-lifting positions x, y at the side of prereduction furnace 110a, and the reference symbols x, y of [1b] signify the container-lifting positions x, y at the side of prereduction furnace 110b.

According to FIG. 66(a), the container $C_3$ at the side of prereduction furnace 110b is at the raw material discharge position above the raw material receiving hopper 115b. Starting from the state, the hoist 118 lifts the container $C_1$ that is at the container-lifting position x at the side of prereduction furnace 110a, and transfers thereof to the raw material receiving hopper 115a to conduct the raw material discharge. Next, as shown in FIG. 66(b), the hoist 118 transfers the emptied container $C_3$ above the raw material receiving hopper 115b to the container-lifting position x at the side of prereduction furnace 110b.

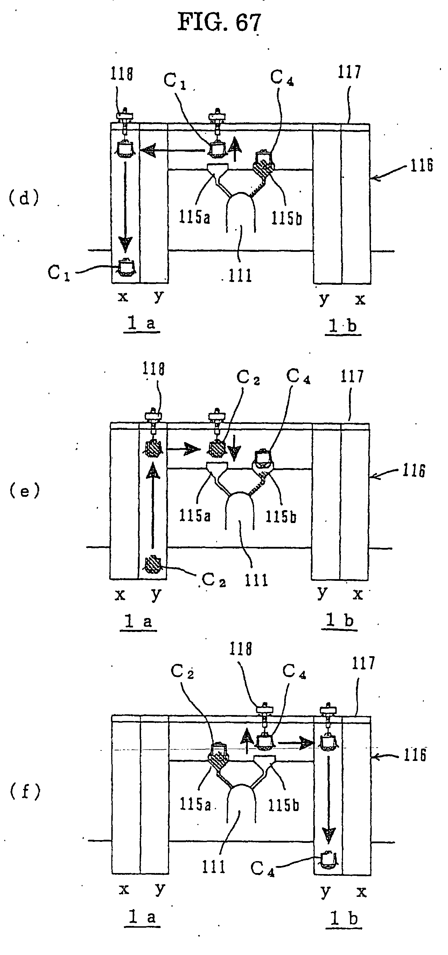

After transferred the container $C_3$, as shown in FIG. 66(c), the turntable 114 at the side of prereduction furnace 110b is rotated to position the container $C_4$ to the container-lifting position y, then the hoist 118 lifts and transfers the container $C_4$ to the raw material receiving hopper 115b to conduct raw material discharge. Then, as shown in FIG. 67 (d), the hoist 118 transfers the emptied container $C_1$ above the raw material receiving hopper 115a to the container-lifting position x as the side of pre-reducing furnace 110a.

After transferred the container $C_1$, as shown in FIG. 67(c), the turntable 114 at the side-of prereduction furnace 110a is rotated to position the container $C_2$ to the container-lifting position y, then the hoist 118 lifts and transfers the container $C_2$ to the raw material receiving hopper 115a to conduct raw material discharge.

Then, as shown in FIG. 67(f), the hoist 118 transfers the emptied container $C_4$ above the raw material receiving hopper 115b to the container-lifting position x as the side of pre-reducing furnace 110b.

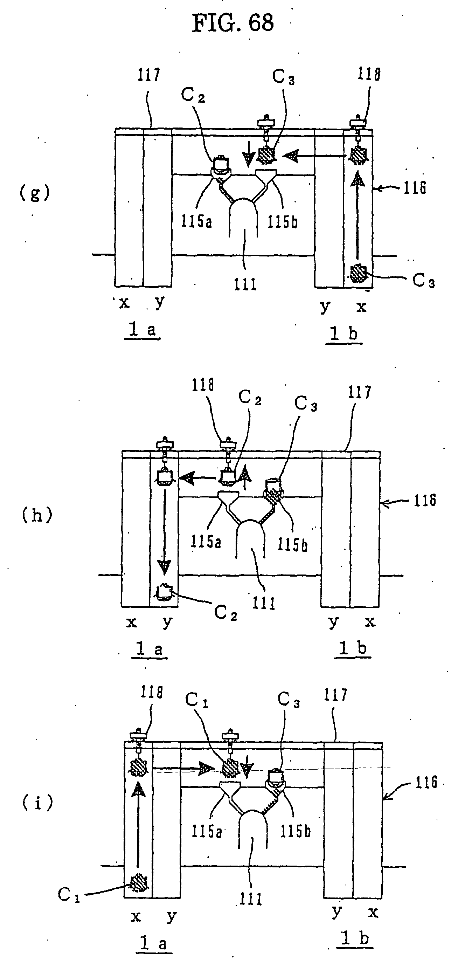

After transferred the container $C_4$, as shown in FIG. 68(g), the turntable 114 at the side of prereduction furnace 110b is rotated to position the container $C_3$ to the container-lifting position x, then the hoist 118 lifts and transfers the container $C_3$ to the raw material receiving hopper 115b to conduct raw material discharge.

Then, as shown in FIG. 68(h), the hoist 118 transfers the emptied container $C_2$ above the raw material receiving hopper 115a to the container-lifting position y as the side of pre-reducing furnace 110a.

After transferred the container $C_2$, as shown in FIG. 68(i), the turntable 114 at the side of prereduction furnace 110a is rotated to position the container $C_1$ to the container-lifting position x again, then the hoist 118 lifts and transfers the container $C_1$ to the raw material receiving hopper 115a to conduct raw material discharge. By repeating the above-given procedure, total four units of containers are successively transferred, and the raw material transfer from the prereduction furnace to the melting furnace is carried out.

As describe above, two container-lifting positions x, y, are prepared for each side of the prereduction furnaces 110a, 110b, and the above-described transfer action is conducted using two containers C for thereeach. As a result, efficient container transfer is attained while minimizing the moving distance of the hoist 118.

According to the mode, the drive unit for lifting the container C by the hoist 118 is structured by a winding drum (winding winch) located on ground or at adequate position of the structure 116, not on the hoist 118, further the drive mechanism is provided with a counterweight mechanism.

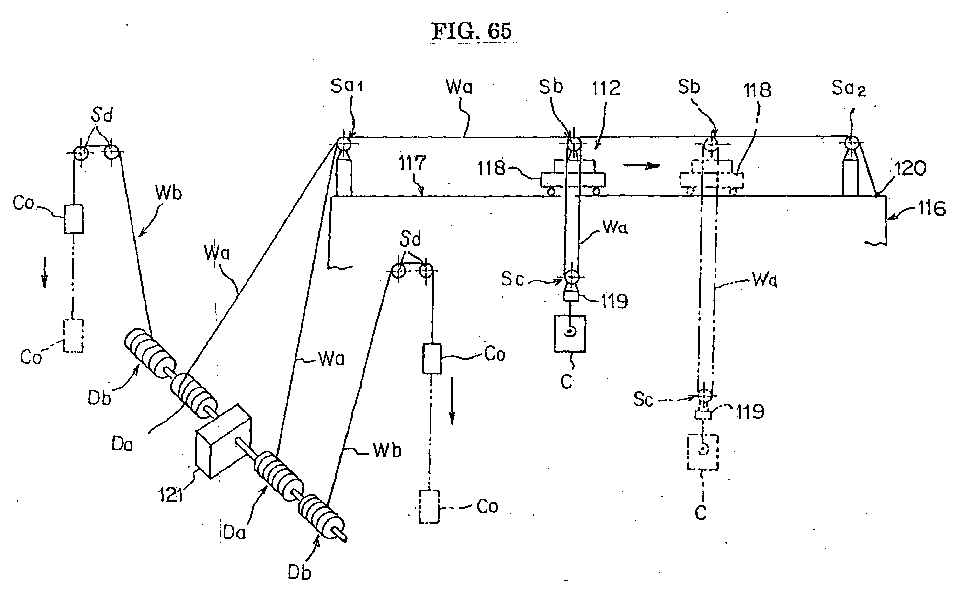

FIG. 65 illustrates the detail of the drive mechanism for lifting container C by the hoist 118. The drive mechanism has: sheaves $Sa_1$, $Sa_2$, located at both longitudinal edges of the track 117 of the hoist 118; a sheave Sb located on the hoist 118; a sheave Sc located at the container suspension means 119 (means equipped with a hook connecting with the container) suspended from the hoist 118 in ascending/descending mode; a wire winding drum Da located beneath the track 117 of the hoist 118 for lifting the container, (at a position on ground or on the structure 116); a wire winding drum Db located coaxially with the wire winding drum Da for counterweight use; a wire rope Wa which is unwound from the wire winding drum Da, is guided by each of the above-given sheaves, and the front edge thereof is fixed at a point 120 on one end section of the track 117 for lifting the container; a wire rope Wb which is wound around the wire winding drum Db, and is guided by a sheave Sd located at higher position than the wire winding drum Db; and a counterweight Co attached to the front edge of the wire rope Wb.

The wire rope Wa which is guided from the sheave $Sa_1$ or $Sa_2$ side is successively guided to the sheave Sb on the hoist 118, the sheave Sc of the container suspension means 119, and the sheave Sb on the hoist 118, then is guided to the side of sheave $Sa_2$ or $Sa_1$, thus the container suspension means 119 is suspended by the wire rope Wa, and the container suspending means 119 ascends/descends with the winding/unwinding of the wire rope Wa using the wire winding drum Da. The sheave Sb guides total two strands of the wire rope Wa.

The wire rope Wb equipped with the counterweight Co is wound around the wire winding drum Db in reverse direction to the winding of wire rope Wa around the wire winding drum Da.

According to that type of drive mechanism, the container lifting is available without installing the drive means for container lifting on the hoist 118, which decreases the weight of the hoist 118. By adding the counterweight mechanism, the load to the winding drum Da given from the container weight is decreased, thus the winding winch becomes small.

According to the mode, each pair of the members of the drive mechanism described above are located, namely: the sheaves $Sa_1$, $Sa_2$ located at both longitudinal ends of the track 117 of the hoist 118; the sheave Sb on the hoist 118; the sheave Sc mounted to the container suspension means 119; the wire winding drum Da for lifting container; the wire winding drum Db for counterweight use; the wire rope Wa for container lifting; the wire rope Wb which is wound around the wire winding drum Db; and the counterweight Co attached to the front end of the wire rope Wb.

The reference number 121 in the figures designates the winding winch.

The description of the smelting apparatus according to the present invention deals with an apparatus that has two units of prereduction furnaces 110a, 110b, and one unit of melting furnace 111, as an example. The number of the prereduction furnace and the melting furnace is, however, arbitrary, and the prereduction furnace may be only one unit.

The turntable 114 applied in the above-described mode is three-position type that holds three containers C. The turntable may be a two-position type that holds two containers C at 180° relative position selecting the container lifting positions x, y as the same position.

The raw materials charged to the prereduction furnaces 110a, 110b of the rotary hearth type are generally the ones prepared from the powder and particle mixture of raw materials consisting mainly of carbonaceous material (normally coal) and iron ore (ore fines), or pellets or briquettes of the mixture of raw materials. The raw materials may, however, contain other raw materials (other iron source and auxiliary raw material) adding to the carbonaceous material and the iron ore. To the prereduction furnace, an auxiliary raw material may be charged other than above-described mixture of raw materials to give heat treatment. When other raw materials than the carbonaceous material and iron ore are charged to the prereduction furnace, they are also discharged to container and are discharged to the raw material receiving hopper of the melting furnace.

The metal smelting apparatus having the above-described system of raw material transfer between the prereduction furnace and the melting furnace requires no specific inherent limitation on the type of the melting furnace.

For example, electric iron making furnace (submersed arc furnace) and other electric furnaces can be applied. From the viewpoint of energy efficiency and energy balance, however, it is most preferable to adopt a melting furnace that uses the carbonaceous material as the reducing agent and uses the combustion heat of the carbonaceous material and the combustion heat of carbon monoxide generated in the furnace as the main heat source. Typical example of that type of melting furnace is the metal bath type melt-reduction furnace. Nevertheless, the melting furnace is not limited to the metal bath type melt-reduction furnace, and a furnace that uses electric power as a part of the heat source may also be applied. For example, an electric iron making furnace or other electric furnace provided with an additional carbonaceous material charge unit and an oxygen (or air and the like) injection unit to decrease the electricity input may be applied.

Generally, separately from the carbonaceous material in the raw materials discharged from the prereduction furnace, other carbonaceous material (mainly coal) is supplied to the melting furnace through an adequate charge means.

The metal bath type melt-reduction furnace does not use electrodes for heat source supplying, which is seen in the electric iron making furnace and other electric furnaces, so an advantage of increased freedom of layout of raw material hoppers is attained, which is favorable on applying the present invention.

There is also no limitation of the type of the prereduction furnace 110. For example, multi-hearth type, horizontally moving hearth type, and rotary kiln type prereduction furnaces, which are described in the first mode of the method for metal smelting according to the present invention, may be used.

The type of the container for transferring the raw materials discharged from the prereduction furnace is arbitrary. For transferring the raw materials to the melting furnace while preventing the decrease in temperature and re-oxidization of the preliminarily reduced raw materials, however, a non-open type vessel, which was described before, is preferred.

The containers can receive not only the raw materials discharged from the prereduction furnace but also iron ore before preliminarily reduced, iron ore that is preliminarily reduced in other prereduction furnace, and other raw materials, at need. Charging those kinds of raw materials may be: charging them to the container in advance; charging them to the container after discharged raw materials from the prereduction furnace to the container; or charging them at the same time that the raw materials are discharged from the prereduction furnace to the container.

The above-given description deals with the iron ore as the metal oxide and/or metal hydroxide as the target of the melt-reduction as an example. The smelting apparatus according to the present invention can apply other metal oxide and/or metal hydroxide such as Ni ore, Cr ore, and Mn ore.

## INDUSTRIAL APPLICABILITY OF THE INVENTION

As described above, according to the metal smelting method' and metal smelting apparatus of the present invention, molten metal is manufactured at low cost and high productivity with favorable energy effect and energy balance by preliminarily reducing, and melting and finally reducing a metal oxide and/or a metal hydroxide using a carbonaceous material such as coal. Therefore, the method is particularly useful as the method for manufacturing molten iron from iron ore as the raw material, at low cost and high productivity.

## Claims

**1.**   A method for metal smelting, comprising the steps of:

(A1) preliminarily reducing at least one mixture of raw materials selected from the group consisting of the following (a) through (c) in a prereduction furnace to attain average metallization degree of from 5 to 55% for metal oxide and/or metal hydroxide;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B1) melting and finally reducing the mixture of raw materials, which is preliminarily reduced in the step (A1), by charging thereof to a melting furnace using the carbonaceous material as a reducing agent, and using combustion heat of the carbonaceous material and combustion heat of carbon monoxide generated in the melting furnace as main heat source.

2. A method for metal smelting, comprising the steps of:

(A2) preliminarily reducing at least one mixture of raw materials selected from the group consisting of following-given (a) through (c) in a prereduction furnace to attain average metallization degree of more than 5% for metal oxide and/or metal hydroxide;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B2) melting and finally reducing the mixture of raw materials, which is preliminarily reduced in the step (A2), and a metal oxide and/or a metal hydroxide of (i) and/or (ii) given below by charging theretogether to a melting furnace for metal smelting to a degree that the average metallization degree of the total metal oxide and/or the metal hydroxide is in a range of from 5 to 55%, using the carbonaceous material as a reducing agent in the melting furnace, and using combustion heat'of the carbonaceous material and combustion heat of carbon monoxide generated in the melting furnace as main heat source;

(i) a metal oxide and/or a metal hydroxide, which have lower percentage of pre-reduction than that of the mixture of raw materials preliminarily reduced in the step (A2), and
(ii) a metal oxide and/or a metal hydroxide, which are not preliminarily reduced.

3. The method for metal smelting of claim 1 or claim 2, wherein the mixture of raw materials at a high temperature discharged from the prereduction furnace after preliminarily reduced is introduced to a non-open type vessel or a pneumatic conveying unit that is operated by a non-oxidizing gas as a pneumatic conveying gas, and is transferred to the melting furnace using the non-open type vessel or the pneumatic conveying unit while keeping the mixture to 600°C or higher temperature, then is charged to the melting furnace.

4. The method for metal smelting of claim 2, wherein the mixture of raw materials, which is preliminarily reduced in the step (A2), and the metal oxide and/or the metal hydroxide of (i) and/or (ii) are mixed together to adjust the average metallization degree of the total metal oxide and/or the metal hydroxide to a range of from 5 to 55%, then the mixture is charged to the melting furnace for metal smelting.

5. The method for metal smelting of claim 4, wherein the mixture of raw materials at a high temperature discharged from the prereduction furnace after preliminarily reduced is introduced to a non-open type vessel or a pneumatic conveying unit that is operated by a non-oxidizing gas as a pneumatic conveying gas, along with the metal oxide and/or the metal hydroxide of (i) and/or (ii), and the introduced mixture is transferred to the melting furnace for charging thereto.

6. The method for metal melting of claim 1 or claim 2, wherein the percentage of post combustion of a gas generated in the furnace is 20% or more.

7. The method for metal smelting of claim 1 or claim 2, wherein an additional carbonaceous material, other than the carbonaceous material contained in the mixture of raw materials, is charged' to the melting furnace.

8. The method for metal melting of claim 7, wherein the high temperature mixture of raw materials, which is preliminarily reduced in the step (A1) or the step (A2), (the mixture of raw materials, which is preliminarily reduced in the step (A2), includes a mixture that contains the metal oxide and/or the metal hydroxide of (i) and/or (ii)), is charged to the melting furnace at the same time that the carbonaceous material is charged thereto; and at least apart of each of the charged mixture of raw materials and the carbonaceous material falls down in the furnace to reach to a bath surface.

9. The method for metal smelting of claim 2, wherein the melting furnace is a metal-bath type smelting reduction furnace.

10. The method for metal smelting of claim 1 or claim 2, wherein the mixture of raw materials is reduced in a reduction zone of the prereduction furnace, and an oxide layer is formed on a surface layer of particles of the mixture of raw materials.

11. The method for metal smelting of claim 10, wherein the degree of oxidization of intrafurnace atmosphere of a part of or total region of the reduction zone of the prereduction furnace is 30% or more.

12. The method for metal smelting of claim 1 or claim 2, wherein a gas generated in the melting furnace is charged to the prereduction furnace as a combustion gas.

13. The method for metal smelting of claim 1 or claim 2, wherein a gas, which is generated in the melting furnace and which becomes to lower than 300°C after discharged from the melting furnace, and/or an oxygen-containing gas being charged to the prereduction furnace are preheated by the sensible heat of a flue gas discharged from the prereduction furnace and/or sensible heat of a flue gas obtained by combusting a part of a gas generated in the melting furnace, then are charged to the prereduction furnace.

14. The method for metal smelting of claim 1 or claim 2, wherein a gas (s), which is generated in the melting furnace and which becomes to lower than 300°C after discharged from the melting furnace, and/or an oxygen-containing support gas (o) being charged to the prereduction furnace are preheated by the steps of (i) and (ii) given below, then are charged to the prereduction furnace:

   (i) preheating the gas (s) and/or the oxygen-containing support gas (o) by the sensible heat of a flue gas coming from the prereduction furnace to raise the temperature thereof to below 500°C, and
   (ii) preheating the generated gas (s) and/or the oxygen-containing support gas (o), which are preheated in the step (i) by the sensible heat of a flue gas prepared by combusting a part of the generated gas (s) and/or other fuel to further increase the temperature thereof.

15. The method for metal smelting of claim 1 or claim 2, wherein at least a part of an auxiliary raw material being charged to the melting furnace is charged to the prereduction furnace along with the mixture of raw materials.

16. The method for metal smelting of claim 15, wherein at least a part of the auxiliary raw material being charged to the prereduction furnace is a non-burnt auxiliary raw material, and the auxiliary raw material is fired in the prereduction furnace.

17. The method for metal smelting of claim 1 or claim 2, wherein the mixture of raw materials being charged to the prereduction furnace contains dust recovered from a gas generated in the melting furnace.

18. The method for metal smelting of claim 1 or claim 2, wherein the carbonaceous material is classified to individual particle ranges, and the carbonaceous material of fine particle ranges is used as a carbonaceous material to be added to the mixture of raw materials being charged to the prereduction furnace, while the carbonaceous material of coarse particle ranges is used as a carbonaceous material to be charged to the melting furnace.

19. The method for metal smelting of claim 1 or claim 2, wherein at least a part of the mixture of raw materials being charged to the prereduction furnace or of individual raw materials before preparing the mixture of the raw materials is preliminarily dried using the sensible heat and/or the latent heat of a flue gas discharged from the prereduction furnace and/or of a gas generated in the melting furnace.

20. The method for metal smelting of claim 1 or claim 2, wherein the prereduction furnace is a rotary hearth type prereduction furnace, and the preliminary reduction of the mixture of raw materials is conducted while forming a layer of powder and particle layer, which is not discharged from a raw material discharge opening, on a hearth of the rotary type furnace.

21. The method for metal smelting of claim 1 or claim 2, wherein the prereduction furnace is a rotary hearth type prereduction furnace, and one or more of material selected from the group consisting of a mixture of raw materials, a metal oxide and/or a metal hydroxide, an auxiliary raw material being charged to the melting furnace, and a carbonaceous material, as a coolant onto a layer of raw materials immediately before being discharged from a raw material discharge opening, and treated raw materials are discharged from the furnace in a state that the coolant is mixed thereto using a raw material discharge unit located at the raw material discharge opening.

**22.** The method for metal smelting of claim 21, wherein the weight ratio of an amount of Fe (A) in the coolant being charged onto the layer of raw materials to an amount of Fe (B) as an ingredient of the raw material layer, (A)/(B), is in a range of from 1/10 to 1/1.

**23.** The method for metal smelting of claim 1 or claim 2, wherein a non-fired auxiliary raw material is fired under the contact with a high temperature flue gas discharged from the prereduction furnace, then is charged to the melting furnace.

**24.** The method for metal smelting of claim 23, wherein air is preheated by a high temperature flue gas which was used for firing the non-fired auxiliary raw material, and the preheated air is supplied to the prereduction furnace.

**25.** The method for metal smelting of claim 1 or claim 2, wherein the percentage of post combustion of a gas generated in the melting furnace is 20% or more, and the gas generated in the melting furnace is charged to the prereduction furnace as a combustion gas.

**26.** The method for metal smelting of claim 1 or claim 2, wherein a carbonaceous material is charged to the melting furnace adding to the carbonaceous material in the mixture of raw materials, the percentage of post combustion of a gas generated in the melting furnace is 20% or more, and the gas generated in the melting furnace is charged to the prereduction furnace as a combustion gas.

**27.** The method for metal smelting of claim 1 or claim 2, wherein at least a part of the mixture of raw materials being charged to the prereduction furnace or at least a part of individual raw materials before preparing the mixture raw materials is preheated by the sensible heat and/or the latent heat of a flue gas coming from the prereduction furnace and/or a gas generated in the melting furnace, the percentage of post combustion of the gas generated in the melting furnace is 20% or more, and the gas generated in the melting furnace is charged to the prereduction furnace as a combustion gas.

**28.** The method for metal smelting of claim 1 or claim 2, wherein at least a part of the mixture of raw materials being charged to the prereduction furnace or at least apart of individual raw materials before preparing the mixture of raw materials is preheated by the sensible heat and/or the latent heat of a flue gas coming from the prereduction furnace and/or a gas generated in the melting furnace, a carbonaceous material is charged to the melting furnace adding to the carbonaceous material in the mixture of raw materials, the percentage of post combustion of the gas generated in the melting furnace is 20% or more, and the gas generated in the melting furnace is charged to the prereduction furnace as a combustion gas.

**29.** The method for metal smelting of claim 1 or claim 2, wherein at least a part of the mixture of raw materials being charged to the prereduction furnace or at least apart of individual raw materials before preparing the mixture of raw materials is preheated by the sensible heat and/or the latent heat of a flue gas coming from the prereduction furnace and/or a gas generated in the melting furnace, a carbonaceous material is charged to the melting furnace adding to the carbonaceous material in the mixture of raw materials, the percentage of post, combustion of the gas generated in the melting furnace is 20% or more, the gas generated in the melting furnace is charged to the prereduction furnace as a combustion gas, the mixture of raw materials at a high temperature discharged from the prereduction furnace after preliminarily reduced is introduced to a closed type vessel or a pneumatic conveying unit that is operated by a non-oxidizing gas as a pneumatic conveying gas, and is transferred to the melting furnace using the closed type vessel or the pneumatic conveying unit while keeping the mixture to 600°C or higher temperature, then is charged to the melting furnace.

**30.** A method for metal smelting comprising the steps of:

(A) preliminarily reducing a mixture of one or more of mixture of raw materials selected from the group consisting of following-given (a) through (c) in a prereduction furnace of rotary hearth type until a part of the metal oxide and/or the metal hydroxide is metallized;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source; wherein the step (A) adopts a rotary hearth type prereduction furnace having two or more of raw material charge opening in peripheral direction thereof, and the mixture of raw materials is charged through individual raw material charge openings successively onto the rotary hearth so as a layer of raw materials of the mixture of raw materials charged from an upstream side raw material charge opening to be directly heated by the intrafurnace atmosphere until the mixture of raw materials is charged from a downstream side raw material charge opening, thus conducting the preliminary reduction of the mixture of raw materials.

31. The method for metal smelting of claim 30, wherein the step (A) is carried out by preliminarily reducing the mixture of raw materials using a prereduction furnace having two or more of raw material charge opening in peripheral direction thereof at almost equal pitch.

32. An apparatus for metal smelting comprising:

a rotary hearth type prereduction furnace having two or more of raw material charge opening in peripheral direction thereof to conduct preliminary reduction by charging one or more of mixture of raw materials selected from the group consisting of (a) through (c),

(a) a mixture of raw materials prepared by mixing at least a carbonaceous materials and a metal oxide and/or a metal hydroxide,
(b) a mixture of raw materials prepared by mixing and granulating at least a carbonaceous material and a metal oxide and/or a metal hydroxide, and
(c) a mixture of raw material prepared by mixing and molding at least a carbonaceous material and a metal oxide and/or a metal hydroxide; and

a melting furnace formetal smelting to meit and finally reduce the mixture of raw materials, which mixture is preliminarily reduced in the prereduction furnace, using the carbonaceous material as a reducing agent and using combustion heat of the carbonaceous material and combustion heat of carbon monoxide generated in the furnace as a main heat source.

33. The apparatus for metal smelting of claim 32, further comprising a firing furnace to fire an auxiliary raw material, being charged to the melting furnace, by contacting thereof with an introduced high temperature flue gas discharged from the prereduction furnace.

34. The apparatus for metal smelting of claim 32 or claim 33, wherein two or more of raw material charge opening are located in peripheral direction of the prereduction furnace at almost equal pitch.

35. A method for melt smelting, comprising the steps of:

(A) preliminarily reducing a mixture of one or more of mixture of raw materials selected from the group consisting of following-given (a) through (c) in a prereduction furnace of rotary hearth type until a part of the metal oxide and/or the metal hydroxide is metallized;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source;

wherein the step (A) conducts preliminary reduction of the mixture of raw materials while forming a layer that contains not large amount of metal oxide and/or metal hydroxide at the lowermost layer part of the raw material layer on the rotary hearth of the prereduction furnace.

36. The method of metal smelting of claim 35, wherein the lowermost layer part of the raw material layer consists of an auxiliary raw material or consists mainly of a layer of auxiliary material being charged to the melting furnace.

37. A method for metal smelting comprising the steps of:

(A) preliminarily reducing a mixture of one or more of mixture of raw materials selected from the group consisting of following-given (a) through (c) in a prereduction furnace of rotary hearth type until a part of the metal oxide and/or the metal hydroxide is metallized;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main source;

wherein, in the step (A), a charge consisting mainly of a powder and particle raw material (one or more of raw material selected from the group consisting of a mixture of raw materials, a metal oxide and/or a metal hydroxide, and a carbonaceous material) and/or a charge consisting mainly of powder and particles of an auxiliary raw material being charged to the melting furnace, or a charge consisting mainly of powder and particles of the powder and particle raw material and/or the powder and particles of the auxiliary raw material, is charged onto the rotary hearth of the prereduction furnace, then granulates and/or molded forms of the mixture of raw materials are supplied to the upper layer of the charge at downstream side along the route of rotary hearth movement.

38. The method for metal smelting of claim 37, wherein, in the step (A), the particle size of the charge of powder and particles being charged onto the rotary hearth is in a range of from 0.05 to 10 mm.

39. The method for metal smelting of claim 37 or claim 38 , wherein, in the step (A), the powder and particle charge being charged onto the rotary hearth is coal or a charge consisting mainly of coal.

40. The method for metal smelting of claim 37 or claim 38, wherein, in the step (A),. the powder and particle charge being charged onto the rotary hearth is a non-fired auxiliary raw material or a charge consisting mainly of a non-fired auxiliary raw material.

41. The method for metal smelting of claim 37 or claim 38, wherein, in the step (A), granulates and/or molded forms of a mixture of raw materials which are charged to the upper layer of the charge on the rotary hearth are granulates and/or molded forms which are not treated by preliminary drying.

42. A method for metal smelting, comprising the steps of:

(A) preliminarily reducing a mixture of one or more of mixture of raw materials selected from the group consisting of following-given (a) through (c) in a prereduction furnace until a part of the metal oxide and/or the metal hydroxide is metallized;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide;

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source; and
(C) firing a non-fired auxiliary raw material being charged to the melting furnace by contacting thereof with a high temperature flue gas discharged from the prereduction furnace.

**43.** The method for metal smelting of claim 42, wherein air is preheated by the high temperature flue gas that was used for firing the auxiliary raw material, and the preheated air is supplied to the prereduction furnace.

**44.** An apparatus for metal smelting comprising:

a prereduction furnace to conduct preliminary reduction by charging one or more of mixture of raw materials selected from the group consisting of (a) through (c),

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide;

a firing furnace for firing a non-fired auxiliary raw material being charged to a melting furnace for metal smelting, by contacting thereof with a high temperature flue gas discharged from the prereduction furnace; and
a melting furnace for metal smelting to melt and finally' reduce the mixture of raw materials, which is preliminarily reduced in the prereduction furnace, using a carbonaceous material as a reducing agent and using combustion heat of the carbonaceous material and combustion heat of carbon monoxide generated in the furnace as main heat source.

**45.** A method for metal smelting comprising the steps of:

(A)preliminarily reducing one or more of the mixture of mixture of raw materials selected from the group consisting of (a) through (c) in a prereduction furnace of rotary hearth type, horizontally moving hearth type, multihearth type, or rotary kiln type until a part of a metal oxide and/or a metal hydroxide is metallized,

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source;

wherein the metal oxide and/or the metal hydroxide in the mixture of raw materials are an ore prepared by applying primary crushing to an ore consisting mainly of a sinter-feed ore.

**46.** The method for metal smelting of claim 45, wherein the primarily crushed ore has particle sizes of from 0.1 to 1 mm.

**47.** A method for metal smelting, comprising the steps of:

(A) preliminarily reducing a mixture of one or more of mixture of raw materials selected from the group consisting of following-given (a) through (c) in a prereduction furnace of rotary hearth type or horizontally moving hearth type until a part of the metal oxide and/or the metal hydroxide is metallized;

(a) a mixture of raw materials prepared by mixing at least a carbonaceous material and a metal oxide and/ or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source;

wherein the heating of the mixture of raw materials in the step (A) is conducted by contacting flame of a heating burner with at-least a part of the top surface of the layer of mixture of raw materials.

**48.** An apparatus for metal smelting comprising:

a prereduction furnace of rotary hearth type or horizontally moving hearth type conducting preliminary reduction of a mixture of one or more of mixture of raw materials selected from the group consisting of following-given (a) through (c),

(a) a mixture of raw materials prepared by mixing at least a carbonaceous material and a metal oxide and/ or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

a melting furnace for metal smelting to melt and finally reduce the mixture of raw materials, which is preliminarily reduced in the prereduction furnace, using the carbonaceous material as a reducing agent and using combustion heat of the carbonaceous material and combustion heat of carbon monoxide generated in the furnace as main heat source;

wherein a heating burner for heating the mixture of raw materials charged on the hearth of the prereduction furnace is located in a mode of (i), (ii), or (iii) given below so as a flame of the burner to contact with at least a part of the top surface of layer of the mixture of raw materials,

(i) a burner tuyere being located at lower part of sidewall of the furnace body,
(ii) a burner tuyere being located on sidewall of the furnace body, and being tilted by 45° downward from horizontal plane toward the hearth, or
(iii) a burner tuyere being located on ceiling facing down.

**49.** A method for metal smelting, comprising the steps of:

(A) preliminarily reducing a mixture of one or more of mixture of raw materials selected from the group consisting of following-given (a) through (c) in a prereduction furnace of rotary hearth type or horizontally moving hearth type until a part of the metal oxide and/or the metal hydroxide is metallized;

(a) a mixture of raw materials prepared by mixing at least a carbonaceous material and a metal oxide and/ or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source;

wherein, in the step (A), the mixture of raw materials charged onto the hearth of the prereduction furnace is rotated and/or transferred against the hearth during the stage of heating and reducing thereof.

**50.** An apparatus for metal smelting, comprising:

a prereduction furnace of rotary hearth type or horizontally moving hearth type conducting preliminary reduction of a mixture of one or more of mixture of raw materials selected from the group consisting of following-given (a) through (c),

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and ametal oxide and/or a metal hydroxide; and

a melting furnace for metal smelting to melt and finally reduce the mixture of raw materials, which is preliminarily reduced in the prereduction furnace, using the carbonaceous material as a reducing agent and using combustion heat of the carbonaceous material and combustion heat of carbon monoxide generated in the furnace as main heat source;

wherein the prereduction furnace is provided with a means to rotate and/or transfer the mixture of raw materials on the hearth against the hearth during the stage of heating and reducing thereof.

**51.** The apparatus for metal smelting of claim 50, wherein the means to rotate and/or transfer the mixture of raw materials against the hearth of the prereduction furnace is a screw unit that can vary the rotational speed of screw shaft.

**52.** A method for metal smelting, comprising the steps of:

(A) preliminarily reducing a mixture of one or more of mixture of raw materials selected from the group consisting of following-given (a) through (c) in a prereduction furnace of rotary hearth type, horizontally moving hearth type, multi-hearth type, or rotary kiln type until a part of the metal oxide and/or the metal hydroxide is metallized;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source;

wherein, at least a part of high temperature gas generated in the melting furnace in the step (B) is injected into a heating burner of the prereduction furnace as a fuel gas using an injector action that uses a combustion air and/or a gas generated in the melting furnace after removing dust therefrom and after pressurized thereto.

**53.** A method for metal smelting, comprising the steps of:

(A) preliminarily reducing a mixture of one or more of mixture of raw materials selected from the group consisting of following-given (a) through (c) in a prereduction furnace of rotary hearth type, horizontally moving hearth type, multi-hearth type, or rotary kiln type until a part of the metal oxide and/or the metal hydroxide is metallized;

(a) a mixture of raw materials prepared by mixing at least a carbonaceous material and a metal oxide and/ or a metal hydroxide,
(b) a mixture of raw materials prepared by mixing and granulating at least a carbonaceous material and a metal oxide and/ or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source;

wherein, at least a part of the gas generated in the melting furnace in the step (B) is cooled to 800°C or lower temperature, and is introduced to a high temperature dust removal unit to remove dust therefrom, then is supplied to a heating burner of the prereduction furnace as a fuel gas in a high temperature state.

54. A method for metal smelting, comprising the steps of:

(A) preliminarily reducing a mixture of one or more of mixture of raw materials selected from the group consisting of following-given (a) through (c) in a prereduction furnace of rotary hearth type or horizontally moving hearth type until a part of the metal oxide and/or the metal hydroxide is metallized;

(a) a mixture of raw materials prepared by mixing at least a carbonaceous material and a metal oxide and/ or a metal hydroxide,
(b) a mixture of raw materials prepared by mixing and granulating at least a carbonaceous material and a metal oxide and/or metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as main heat source;

wherein, the prereduction furnace in the step (A) is provided with a tubular flame burner as a heating means, and a gas generated in the step (B) in the melting furnace is supplied to the tubular flame burner as a fuel gas.

55. The method for metal smelting of claim 54, wherein the gas generated in the melting furnace is supplied to the tubular flame burner of the prereduction furnace after removing dust therefrom.

56. The method for metal smelting of claim 54 and claim 55, wherein the gas generated in the melting furnace is stored in a gas holder, and is supplied from the gas holder to the tubular flame burner of the prereduction furnace.

57. A method for metal smelting, comprising the steps of:

(A) preliminarily reducing a mixture of one or more of mixture of raw materials selected from the group consisting of following-given (a) through (c) in a prereduction furnace of rotary hearth type, horizontally moving hearth type, multi-hearth type, or rotary kiln type until a part of the metal oxide and/or the metal hydroxide is metallized;

(a) a mixture of raw materials prepared by mixing at least a carbonaceous material and a metal oxide and/ or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as a main heat source;

wherein the mixture of raw materials charged to the prereduction furnace in the step (A) is heated and reduced after dried by preheating thereof with a preheating gas.

58. The method for metal smelting of claim 57, wherein the prereduction furnace is divided into a preheating and drying zone and a heating and reducing zone beginning from the raw material charge section side, and the mixture of raw materials is preheated and dried in the preheating and drying zone, then is heated and reduced in the heating and reducing zone.

59. The method for metal smelting of claim 58, wherein the preheating gas is a gas generated in the melting furnace, a gas discharged from the heating and reducing zone of the prereduction furnace, or a oxygen-containing support gas which was preheated by the sensible heat of one or more of these gases.

60. The method for metal smelting of claim 57 or claim 58, wherein the temperature of the preheating gas is in a range of from 100 to 400°C.

61. A method for metal smelting, comprising the steps of:

(A) preliminarily reducing a mixture of one or more of mixture of raw materials selected from the group consisting of following-given (a) through (c) in a preseduction furnace of rotary hearth type or horizontally moving hearth type until a part of the metal oxide and/or the metal hydroxide is metallized;

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide; and

(B) melting and finally reducing the mixture of raw materials, which is preliminarily reduced in the step (A), by charging thereof to a melting furnace using the carbonaceous material as a reducing agent, and using combustion heat of the carbonaceous material and combustion heat of carbon monoxide generated in the melting furnace as a main heat source;

wherein, on charging a raw material comprising a mixture of raw materials and/or a carbonaceous material to a bath of the melting furnace in the step (B), the raw material is charged to a bath surface region where a descending flow appears in a slag bath section.

62. An apparatus for metal smelting comprising:

a prereduction furnace of rotary hearth type or horizontally moving hearth type conducting preliminary reduction of a mixture of one or more of mixture of raw materials selected from the group consisting of following-given (a) through (c),

(a) a mixture of raw materials prepared by mixing at least a carbonaceous material and a metal oxide and/or a metal hydroxide,
(b) a mixture of raw materials prepared by mixing and granulating at least a carbonaceous material and a metal oxide and/or a metal hydroxide, and
(c) a mixture of raw materials prepared by mixing and molding at least a carbonaceous material and a metal oxide and/or a metal hydroxide;

a melting furnace for metal smelting to melt and finally reduce the mixture of raw materials, which is preliminarily reduced in the prereduction furnace, using a carbonaceous material as a reducing agent and using combustion heat of the carbonaceous material and combustion heat of carbon monoxide generated in the furnace as main heat source; and

a transfer unit to transfer a container, to which the raw material discharged from the prereduction furnace, to a raw material receiving hopper of the melting furnace;

the melting furnace being equipped with one or more of raw material receiving hopper to which the raw material transferred from the prereduction furnace is introduced, and equipped with a hoist which hoists the container and runs on a track to transfer the container, the hoist coming and going only one direction on the track, the container hoisting position at the prereduction furnace side being located at directly beneath the track, the raw material receiving hopper at the melting furnace side being located at directly beneath the track, thus transferring the container between the prereduction furnace and the melting furnace using the hoist that moves along the track.

63. The apparatus for metal smelting of claim 62 comprising one unit of melting furnace and two units of prereduction furnace, the container hoisting positions of the two prereduction furnace side being located at opposite sides thereeach to the raw material receiving hopper at the melting furnace side or to the raw material receiving hopper group.

64. The apparatus for metal smelting of claim 62, wherein the container hoist positioned at the prereduction furnace side are a pair to each prereduction furnace.

65. The apparatus for metal smelting of claim 62, further comprising a turntable that can place plurality of containers thereon and by which the plurality of containers can be successively moved to the raw material discharge opening position of the prereduction furnace and to the container hoisting position by the rotation of the turntable.

66. The apparatus for metal smelting of claim 62, wherein the melting furnace is a metal-bath type melt-reduction furnace.

67. The apparatus for metal smelting of claim 62, further comprising a driving mechanism of the hoist for hoisting the container, the driving mechanism comprising:

sheaves ($Sa_1$) and ($Sa_2$) being located at respective longitudinal ends of the track of the hoist;
a sheave (Sb) being located on the hoist;
a container suspension means being suspended from the hoist in ascending and descending mode;
a sheave (Sc) being mounted to the container suspension means in ascending and descending mode;
a wire-winding drum (Da) for hoisting a container located below the track of the hoist;
a wire rope (Wa) for hoisting container, which wire rope is unwound from the wire-winding drum (Da) and is guided to each sheave, the front end thereof being fixed to an end of the track;

wherein the wire rope (Wa) guided from the sheave ($Sa_1$) or ($Sa_2$) is successively guided through the sheave (Sb) on the hoist, the sheave (Sc) on the container suspension means, and the sheave (Sb) on the hoist, then is guided to the sheave (Sa2) or (Sa1), thus the container suspension means is suspended by the wire rope (Wa), and the winding and unwinding action of wire rope (Wa) by the wire-winding drum (Da) makes possible to ascend and descend the container suspension means.

68. The apparatus for metal smelting of claim 67, further comprising:

a wire-winding drum (Db) for counter weight use, mounted coaxially with the wire-winding drum (Da);
a wire rope (Wb) which is wound in reverse direction to the winding direction of wire rope (Wa) on the wire-winding drum (Da) and which is guided by a sheave located at upper position than the wire-winding drum (Db); and
a counter weight (Co) attached to the front end of the wire rope (Wb).

69. The apparatus for metal smelting of claim 68, wherein there are located each pair of the sheaves ($Sa_1$) and ($Sa_2$) positioned at respective longitudinal ends of the track of the hoist, the sheave (Sc) mounted to the container suspension means, the wire-winding drum (Da) for hoisting container, the wire-winding drum (Db) for counter weight use, the wire rope (Wa) for hoisting container, the wire rope (Wb) being wound by the wire-winding drum (Db), and the counter weight (Co) attached to the front end of the wire rope (Wb).

## FIG. 1

PELLET SURFACE    AVERAGE    PELLET CENTER

AVERAGE METALLIZATION DEGREE OF SEMI-REDUCED IRON ( % )

RETENSION TIME INDEX

IN FURNACE

## FIG. 4

ENERGY CONSUMPTION ( Mcal/ton of MOLTEN IRON )

—□— RHF+SAF
—○— RHF+SRF
--△-- RHF
--□- SAF
—○— SRF

AVERAGE METALLIZATION DEGREE

OF SEMI-REDUCED IRON    ( % )

## FIG. 2

ADVANCING
DIRECTION

RAW MATERIAL

## FIG. 3

DRY-HEATING ZONE

ADVANCING
DIRECTION

REDUCTION ZONE

## FIG. 5

RHF-SAF PROCESS

RHF-SRF PROCESS

COST INDEX (y-axis): 0.00, 0.20, 0.40, 0.60, 0.80, 1.00, 1.20, 1.40

PIXED COST IN MELTING FURNACE
VARIABLE COST IN MELTING FURNACE
PIXED COST IN RHF
VARIABLE COST IN RHF

| AVERAGE METALLIZATION DEGREE (%) → | 30 | 76 | 90 | 95 | 10 | 30 | 76 | 95 |
|---|---|---|---|---|---|---|---|---|
| RHF → | 1L | 2M | 2L | 2LL | 1M | 1L | 2M | 2LL |
| MELTING FURNACE → | 3M | 2LL | 2L | 2M | 1M | 1M | 1M | 1M |

# FIG. 6

AVERAGE METALLIZATION DEGREE: 30 %

UNIT: Mcal / ton of MOLTEN IRON

EP 1 253 207 A1

## FIG. 7

AVERAGE METALLIZATION DEGREE: 90 %

UNIT: Mcal / ton of MOLTEN IRON

# FIG. 8

$\underline{1540}$

ELEC.

$\underline{950}$

NATURAL GAS

$\underline{3500}$

COAL

240

RHF

1300

SEMI-REDUCED IRON

SAF

100

100

RECOVERED GAS

AVERAGE METALLIZATION DEGREE: 90 %

UNIT: Mcal / ton of MOLTEN IRON

MOLTEN IRON

Slag

# FIG. 9

AVERAGE METALLIZATION DEGREE (%)

AVERAGE REDUCTION DEGREE (%)

# FIG. 10

AVERAGE METALLIZATION DEGREE (%)
OF SEMI-REDUCED IRON

FIG. 12

# FIG. 13

(a)

MIXTURE OF RAW MATERIALS
OR

MIXTURE OF RAW MATERIALS
+ CARBONACEOUS MATERIAL

$O_2$ GAS
OR $O_2$ CONTAINING GAS

12

A

A'

SLAG

DESCENDING FLOW

ASCENDING FLOW

MOLTEN BATH

13

BOTTOM BLOWN GAS

(b)

13

12

ASCENDING FLOW REGION
OR
INAPPROPRIATE CHARGING REGION
OF OXIDIZING ATMOSPHERE

DESCENDING FLOW REGION

$O_2$ GAS
OR $O_2$ CONTAINING GAS

86

## FIG. 14

(ɑ)

MIXTURE OF RAW MATERIALS
OR
MIXTURE OF RAW MATERIALS
+ CARBONACEOUS MATERIAL

$O_2$ GAS OR
$O_2$ CONTAINING GAS

12

B

B'

14

14

GAS OR POWDER INJECTION

DESCENDING FLOW

ASCENDING FLOW

SLAG

MOLTEN BATH

(b)

DESCENDING FLOW REGION

12

$O_2$ GAS OR
$O_2$ CONTAINING GAS

14

14

GAS OR POWDER INJECTION

ASCENDING FLOW REGION OR
INAPPROPRIATE CHARGING REGION
OF OXIDIZING ATMOSPHERE

## FIG. 15

(a)

MIXTURE OF RAW MATERIALS
OR
MIXTURE OF RAW MATERIALS
+ CARBONACEOUS MATERIAL

SLAG

C          C'

14          14

$O_2$ GAS or $O_2$ CONTAINING GAS

( or + POWDER INJECTION )

DESCENDING FLOW

ASCENDING FLOW

MOLTEN BATH

13

BOTTOM BLOWN GAS

(b)

14

$O_2$ GAS or $O_2$ CONTAINING GAS

( or + POWDER INJECTION )

DESCENDING FLOW REGION

14                    14

13          13

14

ASCENDING FLOW REGION OR
INAPPROPRIATE CHARGING REGION
OF OXIDIZING ATMOSPHERE

## FIG. 11

## FIG. 16

# FIG. 17

EP 1 253 207 A1

## FIG. 18

91

## FIG. 19

DISCHARGED GAS

RAW MATERIAL

43

41

40

36

37    39a    ADVANCING DIRECTION    38    39b

42

RAW
MATERIAL

## FIG. 20

RAW MATERIAL

DISCHARGED GAS

46    47    45    44

49

48

51    50    51

RAW MATERIAL

FIG. 21

RAW MATERIAL

DISCHARGED GAS

RAW MATERIAL

FIG. 22

5b

1

3

5a

4

2

6

ADVANCING DIRECTION

RAW MATERIAL

7

## FIG. 23

## FIG. 24

## FIG. 25

RAW MATERIAL.
TRANSFER DIRECTION

## FIG. 26

ADVANCING DIRECTION

## FIG. 27

3

A

b

2

ADVANCING DIRECTION

## FIG. 28

3

A

c

2

ADVANCING DIRECTION

FIG. 29

ADVANCING DIRECTION

5a

5d

1

θ

6

2

3

FIG. 30

5d

5a

3

e

d

ADVANCING DIRECTION

2

FIG. 31

ADVANCING
DIRECTION

5a

6

5e

2

3

1

FIG. 32

5e          60          3

e          60          61

A          ADVANCING DIRECTION          2

# FIG. 33

EXHAUST BLOWER

AUXILIARY RAW MATERIAL

HEAT EXCHANGER

BAG FILTER

IRON ORE + COAL

FLUE GAS

ROTARY KILN

CYCLONE

SUPPLY BLOWER

FIRED AUXILIARY RAW MATERIAL

ADVANCING DIRECTION

R H F

SEMI-REDUCED IRON

EP 1 253 207 A1

## FIG. 34

INDEX (%)

TOTAL COST INDEX

REDUCIBILITY INDEX

CRUSHING COST INDEX

120

100

80

60

40

20

0

0.01  0.02 0.03 0.05  0.1  0.2 0.3  0.5  1.0  2  3  5  10

GRAIN SIZE (mm)

## FIG. 37

POST COMBUSTION REGION

BURNER FLAME REGION

POST COMBUSTION AIR

FUEL GAS

1

3

2

A

21

22

63a

64

## FIG. 35

BURNER FLAME REGION

FUEL GAS

## FIG. 36

FUEL GAS

BURNER FLAME REGION

63  64

f

1

3

2  A

## FIG. 38

2

1

3a

3b

63

FLAME CONTACTING REGION

2a1

2a2

2a3

63

63

## FIG. 39

FLAME CONTACTING REGION

## FIG. 44

## FIG. 40

CHARGING

DISCHARGING

ADVANCING DIRECTION

1
2
67a
67b
67c
69a
5
6
2a1
2a2
2a3
69b

## FIG. 41

CHARGING

DISCHARGING

ADVANCING DIRECTION

1
2
68a
68b
68c
69a
5
6
2a1
2a2
2a3
69b

## FIG. 42

SHORTER SIDE ON THE OTHER END
IN LONGITUDINAL DIRECTION

[D]  [A]

[C]  [B]

[A]  [B]

[D]  [C]

68

RAW MATERIAL
CHARGES

SHORTER SIDE ON AN END
IN LONGITUDINAL DIRECTION

## FIG. 43

70  71

71  70

1

69b

5

CHARGING

ADVANCING
DIRECTION

70

DISCHARGING

6

69a

71

71  70

2

# FIG. 45

(a)                     (b)                     (c)

74                    74                    74

RAW MATERIAL      RAW MATERIAL      RAW MATERIAL

DISCHARGING

NON-ROTATING      ROTATING SPEED: LOW      ROTATING SPEED: HIGH

EP 1 253 207 A1

FIG. 46

空気

FIG. 48

SRF

RHF

## FIG. 47

## FIG. 54

## FIG. 49

FUEL GAS

101a

98

97

TUBULAR FLAME

GAS DISCHARGING
DIRECTION

100a

101b

99

COMBUSTION AIR

## FIG. 50

FUEL GAS

97

TUBULAR FLAME

101a

100a

99

98

101b

100b

COMBUSTION AIR

## FIG. 51

## FIG. 52

## FIG. 53

## FIG. 55

## FIG. 62

## FIG. 56

102
PREHEAT-DRYING

CHARGING

69c

5

6

HEATING

DISCHARGING

69b

103

69a

ADVANCING DIRECTION

2

1

REDUCING ( 1300 - 1350 ℃ )

## FIG. 57

1

3

69a ～ 69c

A

2

## FIG. 58

ADVANCING
DIRECTION

CHARGING

DISCHARGING

1

67a

67b

67c

5

6

2

104

105

106

## FIG. 59

1

3

3

63

107

107

63

105

104

106

A

2

## FIG. 60

3c

63                                                      63

3d                                                      3d

                                                          1

104          105          106

A             2

## FIG. 61

63

                                                          1

                                                          63

63

108          108

104          105          106

                                                          3

A    2

# FIG. 63

EP 1 253 207 A1

FIG. 64

# FIG. 65

EP 1 253 207 A1

# FIG. 66

(a)

(b)

(c)

## FIG. 67

(d)

118   $C_1$   $C_4$   117

116

115a   115b

$C_1$

111

x   y          y   x

1 a          1 b

(e)

118   $C_2$   $C_4$   117

116

115a   115b

$C_2$   111

x   y          y   x

1 a          1 b

(f)

$C_2$   118   $C_4$   117

116

115a   115b

111   $C_4$

x   y          y   x

1 a          1 b

# FIG. 68

(g)

(h)

(i)

## INTERNATIONAL SEARCH REPORT

| | International application No. |
|---|---|
| | PCT/JP00/05916 |

A. CLASSIFICATION OF SUBJECT MATTER
    Int.Cl$^7$   C21B 11/00, C22B 1/16, 5/10

According to International Patent Classification (IPC) or to both national classification and IPC

B. FIELDS SEARCHED

Minimum documentation searched (classification system followed by classification symbols)
    Int.Cl$^7$   C21B 11/00-13/14, C22B 1/14-1/216, 5/10

Documentation searched other than minimum documentation to the extent that such documents are included in the fields searched
    Jitsuyo Shinan Koho          1926-1996     Toroku Jitsuyo Shinan Koho   1994-2000
    Kokai Jitsuyo Shinan Koho   1971-2000     Jitsuyo Shinan Toroku Koho   1996-2000

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP, 11-217614, A (NKK Corporation), 10 August, 1999 (10.08.99) & WO, 9934022, A   & AU, 9916877, A & BR, 9814479, A | 1-69 |
| A | JP, 9-165612, A (Nippon Steel Corporation), 24 June, 1997 (24.06.97)  (Family: none) | 1-69 |
| A | JP, 8-253801, A (Nippon Steel Corporation), 01 October, 1996 (01.10.96)  (Family: none) | 1-69 |
| A | JP, 62-230923, A (Kobe Steel, Ltd.), 09 October, 1987 (09.10.87)  (Family: none) | 1-69 |

☐  Further documents are listed in the continuation of Box C.      ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
|     28 November, 2000 (28.11.00) |     12 December, 2000 (12.12.00) |

| Name and mailing address of the ISA/ | Authorized officer |
|---|---|
|     Japanese Patent Office | |
| Facsimile No. | Telephone No. |

Form PCT/ISA/210 (second sheet) (July 1992)